# EUROPEAN PATENT APPLICATION

(11) **EP 4 447 399 A1**
(43) Date of publication of application: **16.10.2024**
(21) Application number: 23739833.4
(22) Date of filing: 03.01.2023
(51) Int. Cl.: H04L 45/00, H04L 45/745

(54) **INFORMATION REPORTING METHOD, INFORMATION PROCESSING METHOD, AND DEVICE**

(30) Priority: 11.01.2022 CN 202210029041; 17.03.2022 CN 202210267205
(71) Applicant: Huawei Technologies Co., Ltd., Shenzhen, Guangdong 518129 (CN)
(72) Inventor: ZHUANG, Shunwan, Shenzhen, Guangdong 518129 (CN); WANG, Haibo, Shenzhen, Guangdong 518129 (CN); WANG, Lili, Shenzhen, Guangdong 518129 (CN); LI, Wenyan, Shenzhen, Guangdong 518129 (CN)
(74) Representative: Pfenning, Meinig & Partner mbB
(86) International application number: PCT/CN2023/070023
(87) International publication number: WO 2023/134489

(57) **Abstract**

This application provides an information processing method. A first communication apparatus is configured with a BGP EPE function, a BGP session is established between the first communication apparatus and a third communication apparatus, and no BGP session is established between the first communication apparatus and a second communication apparatus. In this case, the first communication apparatus may obtain, by using the third communication apparatus, a route advertised by the second communication apparatus. The route advertised by the second communication apparatus includes a prefix and a next hop, and the next hop is the second communication apparatus. After receiving the route, the first communication apparatus allocates a BGP peer SID, and stores a correspondence between the BGP peer SID and the next hop. When receiving a packet including the BGP peer SID, the first communication apparatus may forward the packet to the next hop based on the correspondence, so that even if no BGP session is established between the first communication apparatus and the second communication apparatus, the first communication apparatus can use the BGP EPE function to quickly forward the packet to the second communication apparatus.

## Description

This application claims priority to the following patent applications, which are incorporated herein by reference in their entireties:
1. Chinese Patent Application No. 202210029041.8, filed with the China National Intellectual Property Administration on January 11, 2022, and entitled "PEER-NODE SID ALLOCATION METHOD AND DEVICE"; and
2. Chinese Patent Application No. 202210267205.0, filed with the China National Intellectual Property Administration on March 17, 2022, and entitled "INFORMATION REPORTING METHOD, INFORMATION PROCESSING METHOD, AND APPARATUS".

### TECHNICAL FIELD

This application relates to the communication field, and in particular, to an information reporting method, an information processing method, and an apparatus.

### BACKGROUND

A border gateway protocol (Border Gateway Protocol, BGP) egress peer engineering (egress peer engineering, EPE) may allocate a BGP peer segment identifier (segment identifier, SID) to a path, so that when forwarding a packet, a communication apparatus quickly determines the corresponding path based on the BGP peer SID, to implement fast forwarding of the packet. In an example, a communication apparatus A may be configured with a BGP EPE, and a BGP session may be established between the communication apparatus A and a communication apparatus B. The communication apparatus A may allocate a BGP peer SID to the BGP session between the communication apparatus A and the communication apparatus B, and both the communication apparatus A and the communication apparatus B herein are communication apparatuses having a packet forwarding function.

In some scenarios, if no BGP session is established between the communication apparatus A and the communication apparatus B, route advertisement between the communication apparatus A and the communication apparatus B is implemented by using a communication apparatus C. The communication apparatus C may be, for example, a route server or a route reflector. In this case, even if the communication apparatus A is configured with a BGP EPE function, the BGP EPE function cannot be truly used. Correspondingly, in a packet forwarding phase, the communication apparatus A cannot quickly forward a packet to the communication apparatus B.

Therefore, a solution is urgently needed to resolve the foregoing problem.

### SUMMARY

Embodiments of this application provide an information reporting method, an information processing method, and an apparatus, so that even if no BGP session is established between a first communication apparatus and a second communication apparatus, the first communication apparatus can use a BGP EPE function to quickly forward a packet to the second communication apparatus.

According to a first aspect, an embodiment of this application provides an information processing method. The method may be applied to a first communication apparatus. In an example, currently, if a BGP session is established between the first communication apparatus and a third communication apparatus, and no BGP session is established between the first communication apparatus and a second communication apparatus, the first communication apparatus cannot use a BGP EPE function, and correspondingly, the first communication apparatus cannot quickly forward a packet to the second communication apparatus. According to this solution, the first communication apparatus may obtain, by using the third communication apparatus, a first BGP route advertised by the second communication apparatus. The first BGP route advertised by the second communication apparatus includes a first prefix and a first next hop, and the first next hop is the second communication apparatus. After receiving the first BGP route, the first communication apparatus allocates a BGP peer SID, and stores a correspondence between the BGP peer SID and the next hop. In this way, when receiving a packet including the SID, the first communication apparatus can forward the packet to the next hop based on the correspondence. It can be learned that, according to the solution in this embodiment of this application, even if the BGP session is established between the first communication apparatus and the third communication apparatus, and no BGP session is established between the first communication apparatus and the second communication apparatus, the first communication apparatus can use the BGP EPE function, so that the first communication apparatus can directly determine, based on the BGP peer SID, the next hop for packet forwarding, thereby quickly forwarding the packet to the second communication apparatus.

In a possible implementation, the third communication apparatus is a route server. In this case, the BGP session established between the first communication apparatus and the second communication apparatus is an EBGP session, and a BGP session established between the second communication apparatus and the third communication apparatus is also an EBGP session. The first communication apparatus may obtain, by using the route server, a first BGP route advertised by the third communication apparatus.

In a possible implementation, the third communication apparatus is a route reflector. In this case, a BGP session established between the first communication apparatus and the second communication apparatus is an internal border gateway protocol (Internal Border Gateway Protocol, IBGP) session, and a BGP session established between the second communication apparatus and the third communication apparatus is also an IBGP session. The first communication apparatus may obtain, by using the route reflector, a first BGP route advertised by the third communication apparatus.

In a possible implementation, the first communication apparatus may further advertise the first BGP route, the first BGP peer SID, and first additional information to a controller, where the first additional information is for associating the first BGP route with the first BGP peer SID. In this way, when calculating a packet forwarding path, the controller may associate the first BGP route with the first BGP peer SID based on the first additional information, to obtain a first SID list including the first BGP peer SID.

In a possible implementation, the first additional information includes the first next hop. For example, if the first communication apparatus allocates the first BGP peer SID based on a next hop, the first additional information may be the first next hop. In this way, the controller can determine a specific next hop (that is, the first next hop) corresponding to the first BGP peer SID, so that when calculating the packet forwarding path, the controller can accurately associate the first BGP peer SID with a link between the first communication apparatus and the second communication apparatus.

In a possible implementation, if the third communication apparatus is the route server, the first BGP route advertised by the second communication apparatus further includes autonomous system (autonomous system, AS) information, where the AS information may include a plurality of AS identifiers, and the plurality of AS identifiers are for identifying each AS that the packet successively passes through when the packet is forwarded based on the first BGP route. When the packet is forwarded based on the first BGP route, an AS that the packet first passes through is an AS to which the second communication apparatus belongs. In other words, the AS information includes a first AS identifier, and the first AS identifier is for identifying the AS to which the second communication apparatus belongs. In this case, the first additional information includes the first AS identifier. For example, if the first communication apparatus allocates the BGP peer SID based on an AS to which a next hop belongs, the first additional information may be the first AS identifier. In this case, when calculating the packet forwarding path, the controller may associate the first BGP peer SID with the AS to which the second communication apparatus belongs.

In a possible implementation, when the third communication apparatus is the route reflector, the first additional information may include an originator ID indicating the second communication apparatus. For example, if the first communication apparatus allocates the first BGP peer SID based on an originator ID, the first additional information may be the originator ID. In this case, the controller may determine the second communication apparatus corresponding to the first BGP peer SID, so that when calculating the packet forwarding path, the controller can accurately associate the first BGP peer SID with a link between the first communication apparatus and the second communication apparatus.

In a possible implementation, the first communication apparatus may send, to the controller, a control packet that carries the first additional information, to send the first additional information to the controller. The control packet may be a border gateway protocol link state (BGP link state, BGP LS) protocol packet. In this case, the BGP LS protocol packet may further carry the first BGP peer SID, so that the first BGP peer SID and the first additional information are sent to the controller in one control packet.

In a possible implementation, the BGP LS protocol packet may include a first type-length-value (type length value, TLV), and the first TLV carries the first additional information.

In a possible implementation, the first TLV is a segment routing internet protocol version 6 border gateway protocol peer node segment identifier (Segment Routing Internet Protocol Version 6 BGP peer node SID, SRv6 BGP Peer Node SID) TLV included in the BGP LS protocol packet. In this case, in an example, the SRv6 BGP peer node SID TLV may be extended, and a field is obtained through extension to carry the first additional information.

In a possible implementation, the first TLV may alternatively be another TLV different from the SRv6 BGP peer node SID TLV. In this case, a type field of the first TLV indicates that the first TLV carries the first additional information. In some embodiments, the type field of the first TLV may indicate that the first TLV is for carrying the first next hop. In still some embodiments, the type field of the first TLV indicates that the first TLV is for carrying first AS information. In some other embodiments, the type field of the first TLV indicates that the first TLV is for carrying the first next hop and the first AS information. The first TLV is not specifically limited in this embodiment of this application. The first TLV may be a newly defined TLV. For example, when the third communication apparatus is the route server, the first TLV is an internet exchange point remote member descriptors (IXP Remote Member Descriptors) TLV. For another example, when the third notification apparatus is the route reflector, the first TLV is a route reflector descriptors (Route Reflector Descriptors) TLV.

In a possible implementation, as a communication apparatus having a packet forwarding function, the first communication apparatus may further receive the packet including the first BGP peer SID. After receiving the packet, the first communication apparatus may parse the packet to obtain the first BGP peer SID in the packet, and then determine, based on an association relationship between the first BGP peer SID and the first next hop, to forward the packet to the first next hop. In this way, the first communication apparatus can efficiently forward the packet to the first next hop.

In a possible implementation, because there may be a plurality of types of connections between communication apparatuses, different connection types can provide different quality of service. Therefore, if the controller can calculate the packet forwarding path with reference to a type of a connection between communication apparatuses, the calculated packet forwarding path can better meet a requirement of a specific service on quality of service. In view of this, in an example, the first communication apparatus may further advertise connection type information to the controller, where the connection type information indicates a type of a connection between the first communication apparatus and the second communication apparatus. In an example, the connection type information may be the type of the connection between the first communication apparatus and the second communication apparatus, or may be indication information indicating the type of the connection between the first communication apparatus and the second communication apparatus. The indication information may be represented by using one or more bits. For example, the indication information is represented by using a bitmap (bit map), or the indication information is represented by using a binary value.

In a possible implementation, the first communication apparatus may advertise the connection type information to the controller by using a second TLV where the second TLV is for carrying the connection type information. The second TLV may be the foregoing SRv6 BGP peer node SID TLV, or may be a newly extended TLV. When the second TLV is a newly extended TLV, a type field of the second TLV indicates that the second TLV is for carrying the connection type information.

In a possible implementation, the connection type may be a private connection via a network access point, a private connection via a direct link, a local connection via an internet exchange point, a remote connection via an internet exchange point, a private connection via an internet exchange point, or a public connection via an internet exchange point. The private connection via the network access point means that the first communication apparatus and the second communication apparatus are via the network access point, and the connection is a private connection. The private connection is a direct physical connection. That the connection between the first communication apparatus and the second communication apparatus is a private connection means that a BGP session is directly established between the first communication apparatus and the second communication apparatus. The private connection via the direct link means that the first communication apparatus and the second communication apparatus are directly connected, and the connection is a private connection. The local connection via the internet exchange point means that the first communication apparatus and the second communication apparatus are via the internet exchange point, and a geographical location of the first communication apparatus and a geographical location of the second communication apparatus belong to a same area, for example, belong to a same city. The remote connection via the internet exchange point means that the first communication apparatus and the second communication apparatus are via the internet exchange point, and a geographical location of the first communication apparatus and a geographical location of the second communication apparatus belong to different areas, for example, belong to different cities. The private connection via the internet exchange point means that the first communication apparatus and the second communication apparatus are via the internet exchange point, and the connection is a private connection. The public connection via the internet exchange point means that the first communication apparatus and the second communication apparatus are via the internet exchange point, and the connection is a public connection. The public connection means that the first communication apparatus may be connected to one or more peers other than the second communication apparatus, and correspondingly, the second communication apparatus may also be connected to one or more peers other than the first communication apparatus. That the connection between the first communication apparatus and the second communication apparatus is a public connection means that the first communication apparatus and the second communication apparatus separately establish a BGP session with a route server of the IXP, and the first communication apparatus and the second communication apparatus exchange BGP routing information with another communication apparatus of the IXP by using the route server.

In a possible implementation, the first BGP peer SID is an SRv6 SID.

In a possible implementation, the first communication apparatus may be a point of presence (point-of-presence, POP), or the first communication apparatus may be an internet gateway (internet gateway, IGW), a data center gateway, or a service provider edge (provider edge, PE) device. The service provider mentioned herein may be a carrier or an enterprise.

In a possible implementation, the first communication apparatus may be a virtual network element, or may be a device that carries the virtual network element.

In a possible implementation, the first communication apparatus may further obtain, by using the BGP session established between the third communication apparatus and the first communication apparatus, a second BGP route advertised by a fourth communication apparatus, where the second BGP route includes the first routing prefix and a second next hop, the second next hop is the fourth communication apparatus, and no BGP session is established between the first communication apparatus and the fourth communication apparatus. In an example, the second BGP route may be a route that is received by the first communication apparatus and whose 1^{st} next hop is the fourth communication apparatus. In this case, after receiving the second BGP route, the first communication apparatus may allocate a second BGP peer SID, and store a correspondence between the second BGP peer SID and the second next hop. In this way, when a packet including the second BGP peer SID is subsequently received, the packet is quickly forwarded to the second next hop based on the correspondence between the second BGP peer SID and the second next hop.

In a possible implementation, the first communication apparatus may further advertise the second BGP route, the second BGP peer SID, and second additional information to the controller, where the second additional information is for associating the second BGP route with the second BGP peer SID. In this way, when calculating a packet forwarding path, the controller may associate the second BGP route with the second BGP peer SID based on the second additional information, to obtain a second SID list including the second BGP peer SID.

In a possible implementation, the first communication apparatus may further obtain, by using the BGP session established between the third communication apparatus and the first communication apparatus, a third BGP route advertised by a fifth communication apparatus, where the third BGP route includes the second routing prefix and a third next hop, the third next hop is the fifth communication apparatus, and no BGP session is established between the first communication apparatus and the fifth communication apparatus. In an example, the third BGP route may be a route that is received by the first communication apparatus and whose 1^{st} next hop is the fifth communication apparatus. In this case, after receiving the third BGP route, the first communication apparatus may allocate a third BGP peer SID, and store a correspondence between the third BGP peer SID and the third next hop. In this way, when a packet including the third BGP peer SID is subsequently received, the packet is quickly forwarded to the third next hop based on the correspondence between the third BGP peer SID and the third next hop.

In a possible implementation, the first communication apparatus may further advertise the third BGP route, the third BGP peer SID, and third additional information to the controller, where the third additional information is for associating the third BGP route with the third BGP peer SID. In this way, when calculating a packet forwarding path, the controller may associate the third BGP route with the third BGP peer SID based on the third additional information, to obtain a third SID list including the third BGP peer SID.

In a possible implementation, the first BGP peer SID is a BGP peer node SID. In this case, when forwarding the packet to the second communication apparatus based on the first BGP peer SID, the first communication apparatus may select one link from a plurality of links between the first communication apparatus and the second communication apparatus to forward the packet to the second communication apparatus.

In a possible implementation, the first BGP peer SID is a BGP peer adjacency SID, and the BGP peer adjacency SID may be for identifying a link between the first communication apparatus and the second communication apparatus. In this case, when forwarding the packet to the second communication apparatus based on the first BGP peer SID, the first communication apparatus may forward the packet to the second communication apparatus by using the link identified by the BGP peer adjacency SID.

In a possible implementation, the first BGP peer SID is a BGP peer set SID. In this case, when receiving the first BGP peer SID, the first communication apparatus may determine, based on a locally stored correspondence including the first BGP peer SID, a plurality of next hops corresponding to the first BGP peer SID, and further forward the packet to one or more of the plurality of next hops.

In a possible implementation, the first BGP peer SID is a BGP peer set SID. In this case, if the first communication apparatus obtains, by using the BGP session established between the third communication apparatus and the first communication apparatus, a fourth BGP route advertised by a sixth communication apparatus, where the fourth BGP route includes the first routing prefix and a fourth next hop, the fourth next hop is the sixth communication apparatus, and no BGP session is established between the first communication apparatus and the sixth communication apparatus, the first communication apparatus may store an association relationship between the first BGP peer SID and the fourth next hop. In this way, when receiving the first BGP peer SID, the first communication apparatus may determine, based on a locally stored correspondence including the first BGP peer SID, a plurality of next hops (that is, the first next hop and the fourth next hop) corresponding to the first BGP peer SID, and further forward the packet to the first next hop and/or the fourth next hop. In a possible implementation, the first communication apparatus may further obtain, by using the BGP session established between the third communication apparatus and the first communication apparatus, a fifth BGP route advertised by the second communication apparatus, where the fifth BGP route includes the third routing prefix and the first next hop, and the first next hop is the second communication apparatus. In an example, in this case, after the first communication apparatus receives the fifth BGP route, because a next hop of the fifth BGP route is the second communication apparatus, and the fifth BGP route is not the 1^{st} BGP route that is received by the first communication apparatus and whose next hop is the second communication apparatus, the first communication apparatus no longer allocates a BGP peer SID after receiving the fifth BGP route. In other words, in this embodiment of this application, for a plurality of routes with a same next hop, the first communication apparatus may allocate a BGP peer SID after receiving the 1^{st} route in the plurality of routes, and no longer allocate a BGP peer SID after receiving another route in the plurality of routes.

According to a second aspect, an embodiment of this application provides an information processing method, applied to a controller. In an example, the controller may receive a first BGP route, a first BGP peer SID, and first additional information that are sent by a first communication apparatus and that are advertised by a second communication apparatus, where the first additional information is for associating the first BGP route with the first BGP peer SID, no BGP session is established between the first communication apparatus and the second communication apparatus, the first communication apparatus obtains, by using a third communication apparatus, the first BGP route advertised by the second communication apparatus, and the first communication apparatus is configured with a BGP EPE function. Then, the controller may determine, based on the first BGP route, the first additional information, and the first BGP peer SID, a first SID list including the first BGP peer SID, where the first SID list indicates a first packet forwarding path reaching a first routing prefix, and send the first SID list to a head node of the first packet forwarding path. In this way, when calculating a packet forwarding path, the controller can associate the first BGP route with the first BGP peer SID based on the first additional information, so that the first BGP peer SID included in the calculated first SID list can be accurately associated with a link between the first communication apparatus and the second communication apparatus.

In a possible implementation, the controller determines, based on the first BGP route, the first additional information, and the first BGP peer SID, the first SID list including the first BGP peer SID. In specific implementation, the controller may determine, based on the first routing prefix of the first BGP route, the first packet forwarding path reaching the first routing prefix. Further, the first BGP route is associated with the first BGP peer SID based on the first additional information, to obtain the first SID list including the first BGP peer SID.

In a possible implementation, the third communication apparatus is a route server or a route reflector.

In a possible implementation, the additional information includes a next hop of the first BGP route, that is, includes a first next hop.

In a possible implementation, if the third communication apparatus is the route server, the first BGP route advertised by the second communication apparatus further includes autonomous system AS information, the AS information includes a first AS identifier, the first AS identifier is for identifying an AS to which the second communication apparatus belongs, and the additional information includes the first AS identifier.

In a possible implementation, if the third communication apparatus is the route reflector, the additional information includes an originator identifier (Originator ID), where the originator ID is for identifying the second communication apparatus.

In a possible implementation, the receiving first additional information advertised by a first communication apparatus includes: receiving a BGP LS protocol packet sent by the first communication apparatus, where the BGP LS packet carries the first additional information.

In a possible implementation, the BGP LS packet includes a first type-length-value TLV, and the first TLV carries the first additional information.

In a possible implementation, the first TLV is a segment routing internet protocol version 6 border gateway protocol BGP peer node segment identifier SRv6 BGP peer node SID TLV.

In a possible implementation, a type field of the first TLV indicates that the first TLV carries the first additional information. In a possible implementation, if the third communication apparatus is the route server, the first TLV is an internet exchange point remote member descriptors IXP remote member descriptors TLV.

In a possible implementation, if the third communication apparatus is the route server, the first TLV is a route reflector descriptors Route Reflector Descriptors TLV.

In a possible implementation, the method further includes: receiving connection type information advertised by the first communication apparatus, where the connection type information indicates a type of a connection between the first communication apparatus and the second communication apparatus.

In a possible implementation, the type of the connection includes any one of the following: a private connection via a network access point, a private connection via a direct link, a local connection via an internet exchange point, a remote connection via an internet exchange point, a private connection via an internet exchange point, or a public connection via an internet exchange point.

In a possible implementation, the connection type information is carried in a second TLV field that is advertised by the first communication apparatus to the controller, where the second TLV is an SRv6 BGP peer node SID TLV, or a type field of the second TLV indicates that the second TLV is for carrying the connection type information.

In a possible implementation, the BGP peer SID is an SRv6 SID.

In a possible implementation, the first communication apparatus includes any one of the following: a POP, an internet gateway IGW, a data center gateway, and a service provider edge PE device.

In a possible implementation, the method further includes: receiving a second BGP peer SID, second additional information, and a second BGP route that are sent by the first communication apparatus, where the second additional information is for associating the second BGP route with the second BGP peer SID, the second BGP route is advertised by a fourth communication apparatus and obtained by the first communication apparatus through the BGP session established between the first communication apparatus and the third communication apparatus, no BGP session is established between the first communication apparatus and the fourth communication apparatus, the second BGP route includes the first routing prefix and a second next hop, and the second next hop is the fourth communication apparatus; determining, based on the second BGP route, the second additional information, and the second BGP peer SID, a second SID list including the second BGP peer SID, where the second SID list indicates a second packet forwarding path reaching the first routing prefix; and sending the second SID list to a head node of the second packet forwarding path.

In a possible implementation, the method further includes: receiving a third BGP peer SID, third additional information, and a third BGP route that are sent by the first communication apparatus, where the third additional information is for associating the third BGP route with the third BGP peer SID, the third BGP route is a BGP route that is advertised by a fifth communication apparatus and that is obtained by the first communication apparatus by using the BGP session established between the first communication apparatus and the third communication apparatus, no BGP session is established between the first communication apparatus and the fifth communication apparatus, the third BGP route includes a second routing prefix and a third next hop, and the third next hop is the fifth communication apparatus; determining, based on the third BGP route, the third additional information, and the third BGP peer SID, a third SID list including the third BGP peer SID, where the third SID list indicates a third packet forwarding path reaching the second routing prefix; and sending the third SID list to a head node of the third packet forwarding path.

In a possible implementation, the first BGP peer SID is a BGP peer node SID.

In a possible implementation, the first BGP peer SID is a BGP peer adjacency SID.

In a possible implementation, the first BGP peer SID is a BGP peer set SID.

According to a third aspect, an embodiment of this application provides an information reporting method. The method may be applied to a first communication apparatus, and the first communication apparatus is configured with a border gateway protocol egress peer engineering BGP EPE. In an example, when a BGP session is established between the first communication apparatus and a second communication apparatus, the first communication apparatus may receive a BGP route sent by the second communication apparatus, where the BGP route includes a routing prefix and a next hop. In addition, the first communication apparatus may allocate a BGP peer SID based on the BGP route. In this embodiment of this application, there may be a plurality of types of connections between communication apparatuses, and different connection types can provide different quality of service. Therefore, a controller can calculate a packet forwarding path with reference to a type of a connection between communication apparatuses, so that the calculated path can better meet a requirement of a specific service on quality of service. The first communication apparatus may send the BGP peer SID and connection type information corresponding to the BGP peer SID to the controller. In this way, the controller calculates the packet forwarding path based on the connection type information corresponding to the BGP peer SID. The connection type information corresponding to the BGP peer SID indicates a type of a connection between the first communication apparatus and a next hop of the BGP route. In an example, if the next hop of the BGP route is the second communication apparatus, the connection type information corresponding to the BGP peer SID indicates a type of a connection between the first communication apparatus and the second communication apparatus. In another example, if the second communication apparatus is a route server or a route reflector, and the BGP route is a BGP route advertised by the third communication apparatus, that is, the next hop of the BGP route is the third communication apparatus, the connection type information corresponding to the BGP peer SID indicates a type of a connection between the first communication apparatus and the third communication apparatus.

In a possible implementation, the type of the connection includes any one of the following: a private peer via a network access point, a private peer via a direct link, a local peer via an internet exchange point, a remote peer via an internet exchange point, a private peer via an internet exchange point, or a public peer via an internet exchange point.

In a possible implementation, in specific implementation of sending, by the first communication apparatus, the connection type information corresponding to the BGP peer SID to the controller, the first communication apparatus may send a BGP LS protocol packet to the controller, where the BGP LS protocol packet includes the connection type information. In this case, in addition to the connection type information, the control packet further includes the BGP peer SID. Therefore, in this case, both the BGP peer SID and the connection type may be sent to the controller in one control packet.

In a possible implementation, the BGP LS protocol packet may include a first TLV, and the first TLV includes the connection type information corresponding to the BGP peer SID.

In a possible implementation, the BGP LS protocol packet includes an SRv6 BGP peer node SID TLV. Therefore, the first TLV may be an SRv6 BGP peer node SID TLV. In this way, an original SRv6 BGP peer node SID TLV in the BGP LS protocol packet may be reused to send the connection type to the controller.

In a possible implementation, when the first TLV is an SRv6 BGP peer node SID TLV, because a flags (flags) field of the SRv6 BGP peer node SID TLV is not used, the connection type information is carried in the flag field of the first TLV.

In a possible implementation, when the first TLV is an SRv6 BGP peer node SID TLV, the SRv6 BGP peer node SID TLV may be extended, and a new field is obtained through extension to carry the connection type information. In other words, the connection type information is carried in an extension field in the SRv6 BGP peer node SID TLV.

In a possible implementation, the connection type information may be carried in another TLV different from the SRv6 BGP peer node SID TLV. For example, a new TLV may be obtained through extension to carry the connection type information. In this case, a type field of the first TLV indicates that the first TLV carries the connection type information. As an example, the new TLV may be a peering type descriptors (Peering Type Descriptors) TLV.

In a possible implementation, the second communication apparatus is a route server or a route reflector that does not have a packet forwarding function. In this case, the BGP route received by the first communication apparatus from the second communication apparatus may be advertised by the third communication apparatus. For example, no BGP session is established between the first communication apparatus and the third communication apparatus, and a BGP session is established between the third communication apparatus and the second communication apparatus. In this case, the third communication apparatus may advertise the BGP route to the second communication apparatus, and the second communication apparatus sends the BGP route from the third communication apparatus to the first communication apparatus.

In a possible implementation, when the second communication apparatus is a route server, an EBGP session is established between the first communication apparatus and the second communication apparatus, and an EBGP session is also established between the second communication apparatus and the third communication apparatus.

In a possible implementation, when the second communication apparatus is a route reflector, an IBGP session is established between the first communication apparatus and the second communication apparatus, and an IBGP session is also established between the second communication apparatus and the third communication apparatus.

In a possible implementation, when the second communication apparatus is a route server or a route reflector, the first communication apparatus may further send the BGP route and additional information to the controller, where the additional information is for associating the BGP peer SID with the BGP route. In this way, when calculating a packet forwarding path, the controller can associate the BGP route with the BGP peer SID based on the additional information, so that the BGP peer SID included in a calculated SID list can be accurately associated with a link between the first communication apparatus and the third communication apparatus.

In a possible implementation, the additional information includes the next hop. For example, if the first communication apparatus allocates a BGP peer SID based on a next hop, the additional information may be the next hop. In this way, the controller can determine a specific next hop corresponding to the BGP peer SID, so that when calculating the packet forwarding path, the controller can accurately associate the BGP peer SID with the link between the first communication apparatus and the third communication apparatus.

In a possible implementation, if the second communication apparatus is the route server, the BGP route advertised by the third communication apparatus further includes AS information, where the AS information may include a plurality of AS identifiers, and the plurality of AS identifiers are for identifying each AS that the packet successively passes through when the packet is forwarded based on the BGP route. When the packet is forwarded based on the BGP route, an AS that the packet first passes through is an AS to which the third communication apparatus belongs. In other words, the AS information includes a first AS identifier, and the first AS identifier is for identifying the AS to which the third communication apparatus belongs. In this case, the additional information includes the first AS identifier. For example, if the first communication apparatus allocates a BGP peer SID based on an AS to which a next hop belongs, the additional information may be the first AS identifier. In this case, when calculating the packet forwarding path, the controller may associate the BGP peer SID with the AS to which the third communication apparatus belongs.

In a possible implementation, when the second communication apparatus is the route reflector, the additional information may include an originator ID indicating the third communication apparatus. For example, if the first communication apparatus allocates a BGP peer SID based on an originator ID, the additional information may be the originator ID. In this case, the controller may determine the third communication apparatus corresponding to the BGP peer SID, so that when calculating the packet forwarding path, the controller can accurately associate the BGP peer SID with a link between the first communication apparatus and the third communication apparatus.

In a possible implementation, in specific implementation of sending the additional information to the controller, the first communication apparatus may send a second TLV to the controller, where the second TLV carries the additional information.

In a possible implementation, the second TLV is carried in a BGP LS protocol packet.

In a possible implementation, the second TLV is an SRv6 BGP peer node SID TLV.

In a possible implementation, the second TLV may be a newly extended TLV, and a type field of the second TLV indicates that the second TLV carries the additional information.

In a possible implementation, if the second communication apparatus is a route server, the second TLV is an IXP remote member descriptors TLV.

In a possible implementation, if the second communication apparatus is a route reflector, the second TLV is a route reflector descriptors TLV.

In a possible implementation, the additional information corresponding to the BGP peer SID and the connection type corresponding to the BGP peer SID may be carried in one control packet and sent to the controller. In this case:

In a possible implementation, both the additional information corresponding to the BGP peer SID and the connection type corresponding to the BGP peer SID may be carried in an SRv6 BGP peer node SID TLV. For example, the SRv6 BGP peer node SID TLV includes two extension fields, one extension field is for carrying the additional information corresponding to the BGP peer SID, and the other extension field is for carrying the connection type corresponding to the BGP peer SID. For another example, the SRv6 BGP peer node SID TLV includes one extension field, the extension field is for carrying the additional information corresponding to the BGP peer SID, and the connection type corresponding to the BGP peer SID is carried in a flags field of the SRv6 BGP peer node SID TLV.

In a possible implementation, the additional information corresponding to the BGP peer SID is carried in the SRv6 BGP peer node SID TLV, and the connection type corresponding to the BGP peer SID is carried in a peering type descriptors TLV.

In a possible implementation, the additional information corresponding to the BGP peer SID is carried in an IXP remote member descriptors TLV and the connection type corresponding to the BGP peer SID is carried in the SRv6 BGP peer node SID TLV.

In a possible implementation, the additional information corresponding to the BGP peer SID is carried in a route reflector descriptors TLV and the connection type corresponding to the BGP peer SID is carried in the SRv6 BGP peer node SID TLV

In a possible implementation, the additional information corresponding to the BGP peer SID is carried in an IXP remote member descriptors TLV, and the connection type corresponding to the BGP peer SID is carried in a peering type descriptors TLV.

In a possible implementation, the additional information corresponding to the BGP peer SID is carried in a route reflector descriptors TLV, and the connection type corresponding to the BGP peer SID is carried in a peering type descriptors TLV.

In a possible implementation, the BGP peer SID is an SRv6 SID.

According to a fourth aspect, an embodiment of this application provides an information processing method, applied to a controller. The controller may receive a BGP peer SID and connection type information corresponding to the BGP peer SID that are sent by a first communication apparatus, where the BGP peer SID corresponds to a BGP route sent by a second communication apparatus, the BGP route includes a routing prefix and a next hop, and the connection type information indicates a type of a connection between the first communication apparatus and a next hop of the BGP route. The first communication apparatus is configured with a BGP EPE function. Then, a SID list including the BGP peer SID is determined based on the BGP peer SID and the connection type information corresponding to the BGP peer SID, where the SID list indicates a packet forwarding path reaching the routing prefix. After calculating the SID list, the controller may send the SID list to a head node of the packet forwarding path. It can be learned that, according to this solution, the controller calculates the SID list based on the connection type information corresponding to the BGP peer SID, so that the packet forwarding path indicated by the calculated SID list can better meet a requirement of a specific service on quality of service.

In a possible implementation, the type of the connection includes any one of the following: a private peer via a network access point, a private peer via a direct link, a local peer via an internet exchange point, a remote peer via an internet exchange point, a private peer via an internet exchange point, or a public peer via an internet exchange point.

In a possible implementation, that the controller receives the connection type information that corresponds to the BGP peer SID and that is sent by the first communication apparatus includes: receiving a BGP LS protocol packet sent by the first communication apparatus, where the BGP LS protocol packet includes the connection type information.

In a possible implementation, the BGP LS protocol packet includes a first TLV, and the first TLV includes the connection type information corresponding to the BGP peer SID.

In a possible implementation, the first TLV is a segment routing internet protocol version 6 border gateway protocol BGP peer node segment identifier SRv6 BGP peer node SID TLV.

In a possible implementation, the connection type information is carried in a flags (flag) field of the first TLV.

In a possible implementation, the connection type information is carried in an extension field of the first TLV.

In a possible implementation, a type field of the first TLV indicates that the first TLV carries the connection type information.

In a possible implementation, the first TLV is a peering type descriptors (Peering Type Descriptors) TLV.

In a possible implementation, if the second communication apparatus is a route server or a route reflector, the BGP route advertised by the second communication apparatus is advertised by a third communication apparatus to the second communication apparatus, the BGP route includes a prefix and a next hop, the next hop is the third communication apparatus, and no BGP session is established between the first communication apparatus and the third communication apparatus.

In a possible implementation, when the BGP route is a BGP route advertised by the third communication apparatus, the controller may further receive the BGP route and additional information that are sent by the first communication apparatus, where the additional information is for associating the BGP peer SID with the BGP route.

In a possible implementation, the additional information includes the next hop.

In a possible implementation, if the second communication apparatus is the route server, the BGP route further includes autonomous system AS information, the AS information includes a first AS identifier, the first AS identifier is for identifying an AS to which the third communication apparatus belongs, and the additional information includes the first AS identifier.

In a possible implementation, if the second communication apparatus is the route reflector, the additional information includes an originator identifier (Originator ID).

In a possible implementation, the receiving additional information sent by the first communication apparatus includes: receiving a second TLV sent by the first communication apparatus, where the second TLV carries the additional information.

In a possible implementation, the second TLV is carried in a BGP LS protocol packet.

In a possible implementation, the second TLV is an SRv6 BGP peer node SID TLV.

In a possible implementation, a type field of the second TLV indicates that the second TLV carries the additional information.

In a possible implementation, if the second communication apparatus is a route server, the second TLV is an IXP remote member descriptors TLV.

In a possible implementation, if the second communication apparatus is a route reflector, the second TLV is a route reflector descriptors TLV.

In a possible implementation, the BGP peer SID is an SRv6 SID.

According to a fifth aspect, an embodiment of this application provides an information reporting method. The method is applied to a first communication apparatus, and the first communication apparatus is configured with a border gateway protocol egress peer engineering BGP EPE. In an example, the method includes: The first communication apparatus allocates a first BGP peer SID to a first BGP session established between the first communication apparatus and a second communication apparatus, where a plurality of BGP sessions are established between the first communication apparatus and the second communication apparatus, and the plurality of BGP sessions include the first BGP session. Then, the first communication apparatus correspondingly sends the first BGP peer SID and a first peer IP address to a controller, where the first peer IP address is a peer IP address used by the second communication apparatus to establish the first BGP session with the first communication apparatus. Therefore, the controller may associate, based on the first peer IP address, the first BGP peer SID with a BGP route that is advertised by the second communication apparatus to the first communication apparatus by using the first BGP session, so that when calculating a packet forwarding path, the controller can accurately calculate the packet forwarding path based on the BGP route that is advertised by the second communication apparatus to the first communication apparatus by using the first BGP session.

In a possible implementation, the first communication apparatus may send a control packet to the controller, to send the first peer IP address to the controller. In an example, the control packet may include a first TLV, and the first TLV includes the first peer IP address.

In a possible implementation, the first TLV is a segment routing internet protocol version 6 border gateway protocol peer node segment identifier SRv6 BGP peer node SID TLV.

In a possible implementation, when the first TLV is an SRv6 BGP peer node SID TLV, the SRv6 BGP peer node SID TLV may be extended, and a new field is obtained through extension to carry the first peer IP address.

In a possible implementation, the control packet is a BGP LS protocol packet.

In a possible implementation, the first communication apparatus having a packet forwarding function may receive a packet including the first BGP peer SID, parse the packet to obtain the first BGP peer SID included in the packet, and forward the packet based on an outbound interface corresponding to the first BGP peer SID.

In a possible implementation, because there may be a plurality of types of connections between communication apparatuses, different connection types can provide different quality of service. Therefore, if the controller can calculate the packet forwarding path with reference to a type of a connection between communication apparatuses, the calculated packet forwarding path can better meet a requirement of a specific service on quality of service. In view of this, in an example, the first communication apparatus may further send connection type information corresponding to the first BGP peer SID to the controller. The connection type information corresponding to the first BGP peer SID indicates a type corresponding to the first BGP session. In an example, the type of the first BGP session may be a type of a BGP peer used by the second communication apparatus to establish the first BGP session with the first communication apparatus.

In a possible implementation, the first communication apparatus may send, to the controller, a second TLV carrying the connection type information corresponding to the first BGP peer SID, to send the connection type information corresponding to the first BGP peer SID to the controller.

In a possible implementation, the second TLV is carried in a BGP LS protocol packet.

In a possible implementation, the second TLV is an SRv6 BGP peer node SID TLV.

In a possible implementation, the connection type information is carried in a flags (flag) field of the second TLV.

In a possible implementation, the connection type information is carried in an extension field of the second TLV.

In a possible implementation, the second TLV is a peering type descriptors TLV.

In a possible implementation, the first peer IP address and the connection type information corresponding to the first BGP peer SID may be carried in one control packet and sent to the controller. In this case:

In a possible implementation, both the first peer IP address and the connection type information corresponding to the first BGP peer SID may be carried in an SRv6 BGP peer node SID TLV. For example, the SRv6 BGP peer node SID TLV includes two extension fields, one extension field is for carrying the first peer IP address, and the other extension field is for carrying the connection type information corresponding to the first BGP peer SID. For another example, the SRv6 BGP peer node SID TLV includes one extension field, the extension field is for carrying the first peer IP address, and the connection type information corresponding to the first BGP peer SID is carried in a flags field of the SRv6 BGP peer node SID TLV.

In a possible implementation, the first peer IP address is carried in the SRv6 BGP peer node SID TLV, and the connection type information corresponding to the first BGP peer SID is carried in a peering type descriptors TLV.

In a possible implementation, the first peer IP address is carried in a peering type descriptors TLV, and the connection type information corresponding to the first BGP peer SID is carried in the SRv6 BGP peer node SID TLV.

In a possible implementation, the first peer IP address is carried in another newly extended TLV that is different from the SRv6 BGP peer node SID TLV, and the connection type information corresponding to the first BGP peer SID is carried in a peering type descriptors TLV.

In a possible implementation, the BGP sessions between the first communication apparatus and the second communication apparatus further include a second BGP session. The first communication apparatus may allocate a second BGP peer SID to the second BGP session, and correspondingly send the second BGP peer SID and a second peer IP address to the controller, where the second peer IP address is a peer IP address used by the second communication apparatus to establish the second BGP session with the first communication apparatus. In this way, the controller may associate, based on the second peer IP address, the second BGP peer SID with the BGP route that is advertised by the second communication apparatus to the first communication apparatus by using the second BGP session, so that the controller can accurately locate the second BGP session when calculating the packet forwarding path.

In a possible implementation, the first BGP peer SID is an SRv6 SID.

According to a sixth aspect, an embodiment of this application provides an information processing method, applied to a controller. The method includes: receiving a first BGP peer SID and a first peer IP address that are sent by a first communication apparatus, where the first BGP peer SID is a BGP peer SID allocated by the first communication apparatus to a first BGP session established between the first communication apparatus and a second communication apparatus, a plurality of BGP sessions are established between the first communication apparatus and the second communication apparatus, and the plurality of BGP sessions include the first BGP session; determining, based on the first BGP peer SID and the first peer IP address, a SID list including the first BGP peer SID, where the SID list indicates a packet forwarding path; and sending the SID list to a head node of the packet forwarding path. According to this solution, the controller may associate, based on the first peer IP address, the first BGP peer SID with a BGP route that is advertised by the second communication apparatus to the first communication apparatus by using the first BGP session, so that the controller can accurately locate the first BGP session when calculating the packet forwarding path.

In a possible implementation, the receiving a first peer IP address sent by a first communication apparatus includes: receiving a BGP LS protocol packet sent by the first communication apparatus, where the BGP LS protocol packet includes the first peer IP address.

In a possible implementation, the BGP LS protocol packet includes a first TLV, and the first TLV includes the first peer IP address.

In a possible implementation, the first TLV is a segment routing internet protocol version 6 border gateway protocol peer node segment identifier SRv6 BGP peer node SID TLV.

In a possible implementation, the first peer IP address is carried in an extension field of the SRv6 BGP peer node SID TLV.

In a possible implementation, the method further includes: receiving connection type information that corresponds to the first BGP peer SID and that is sent by the first communication apparatus.

In a possible implementation, the receiving connection type information that corresponds to the first BGP peer SID and that is sent by the first communication apparatus includes: receiving a second TLV sent by the first communication apparatus, where the second TLV is for carrying the connection type information.

In a possible implementation, the second TLV is carried in a border gateway protocol link state BGP LS protocol packet.

In a possible implementation, the second TLV is an SRv6 BGP peer node SID TLV.

In a possible implementation, the connection type information is carried in a flags (flag) field of the second TLV.

In a possible implementation, the connection type information is carried in an extension field of the second TLV.

In a possible implementation, the second TLV is a peering type descriptors TLV.

In a possible implementation, the method further includes: receiving a second BGP peer SID and a second peer IP address that are sent by the first communication apparatus, where the second BGP peer SID is allocated by the first communication apparatus to a second BGP session, the plurality of BGP sessions between the first communication apparatus and the second communication apparatus include the second BGP session, and the second peer IP address is a peer IP address used by the second communication apparatus to establish the second BGP session with the first communication apparatus.

In a possible implementation, the first BGP peer SID is an SRv6 SID.

According to a seventh aspect, an embodiment of this application provides a first communication apparatus. The first communication apparatus includes a transceiver unit and a processing unit. The transceiver unit is configured to perform a receiving-related operation and/or a sending-related operation performed by the first communication apparatus in the first aspect and the possible implementations of the first aspect. The processing unit is configured to perform an operation other than the receiving-related operation and/or the sending-related operation performed by the first communication apparatus in the first aspect and the possible implementations of the first aspect. In specific implementation, the transceiver unit may include a receiving unit and/or a sending unit. The receiving unit is configured to perform the receiving-related operation, and the sending unit is configured to perform the sending-related operation.

Specifically, the receiving unit obtains, by using a border gateway protocol BGP session established between a third communication apparatus and the first communication apparatus, a first BGP route advertised by a second communication apparatus, where the first BGP route includes a first routing prefix and a first next hop, the first next hop is the second communication apparatus, the first communication apparatus is configured with a border gateway protocol egress peer engineering BGP EPE function, the third communication apparatus is a first border gateway protocol peer BGP peer of the first communication apparatus, and no BGP session is established between the first communication apparatus and the second communication apparatus. The processing unit is configured to: allocate a first border gateway protocol peer segment identifier BGP peer SID based on the first BGP route; and store an association relationship between the first BGP peer SID and the first next hop.

In a possible implementation, the third communication apparatus is a route server, and the BGP session includes an external border gateway protocol EBGP session.

In a possible implementation, the third communication apparatus is a route reflector, and the BGP session includes an internal border gateway protocol IBGP session.

In a possible implementation, the sending unit is further configured to advertise the first BGP route, the first BGP peer SID, and first additional information to a controller, where the first additional information is for associating the first BGP route with the first BGP peer SID.

In a possible implementation, the first additional information includes the first next hop.

In a possible implementation, if the third communication apparatus is the route server, the first BGP route advertised by the second communication apparatus further includes autonomous system AS information, the AS information includes a first AS identifier, the first AS identifier is for identifying an AS to which the second communication apparatus belongs, and the first additional information includes the first AS identifier.

In a possible implementation, if the third communication apparatus is the route reflector, the first additional information includes an originator identifier (Originator ID).

In a possible implementation, the sending unit is configured to send a border gateway protocol link state BGP LS packet to the controller, where the BGP LS packet carries the first additional information.

In a possible implementation, the BGP LS packet includes a first type-length-value TLV, and the first TLV carries the first additional information.

In a possible implementation, the first TLV is a segment routing internet protocol version 6 border gateway protocol BGP peer node segment identifier SRv6 BGP peer node SID TLV.

In a possible implementation, a type field of the first TLV indicates that the first TLV carries the first additional information.

In a possible implementation, if the third communication apparatus is the route server, the first TLV is an internet exchange point remote member descriptors IXP remote member descriptors TLV.

In a possible implementation, if the third communication apparatus is the route server, the first TLV is a route reflector descriptors Route Reflector Descriptors TLV.

In a possible implementation, the receiving unit is further configured to receive a packet, where the packet includes the first BGP peer SID. The processing unit is further configured to determine, based on the association relationship between the first BGP peer SID and the first next hop, to forward the packet to the first next hop.

In a possible implementation, the sending unit included in the apparatus is further configured to advertise connection type information to the controller, where the connection type information indicates a type of a connection between the first communication apparatus and the second communication apparatus.

In a possible implementation, the type of the connection includes any one of the following: a private connection via a network access point, a private connection via a direct link, a local connection via an internet exchange point, a remote connection via an internet exchange point, a private connection via an internet exchange point, or a public connection via an internet exchange point.

In a possible implementation, the connection type information is carried in a second TLV field that is advertised to the controller, where the second TLV is an SRv6 BGP peer node SID TLV, or a type field of the second TLV indicates that the second TLV is for carrying the connection type information. In a possible implementation, the first BGP peer SID is an SRv6 SID.

In a possible implementation, the first communication apparatus includes any one of the following: a POP, an internet gateway IGW, a data center gateway, and a service provider edge PE device.

In a possible implementation, the receiving unit is further configured to obtain, by using the BGP session established between the third communication apparatus and the first communication apparatus, a second BGP route advertised by a fourth communication apparatus, where the second BGP route includes the first routing prefix and a second next hop, the second next hop is the fourth communication apparatus, and no BGP session is established between the first communication apparatus and the fourth communication apparatus. The processing unit is further configured to allocate a second border gateway protocol peer segment identifier BGP peer SID based on the second BGP route; and the processing unit is further configured to store an association relationship between the second BGP peer SID and the second next hop.

In a possible implementation, the sending unit is further configured to advertise the second BGP route, the second BGP peer SID, and second additional information to the controller, where the second additional information is for associating the second BGP route with the second BGP peer SID.

In a possible implementation, the receiving unit is further configured to obtain, by using the BGP session established between the third communication apparatus and the first communication apparatus, a third BGP route advertised by a fifth communication apparatus, where the third BGP route includes the second routing prefix and a third next hop, the third next hop is the fifth communication apparatus, and no BGP session is established between the first communication apparatus and the fifth communication apparatus. The processing unit is further configured to allocate a third BGP peer SID based on the third BGP route; and the processing unit is further configured to store an association relationship between the third BGP peer SID and the third next hop.

In a possible implementation, the sending unit is further configured to advertise the third BGP route, the third BGP peer SID, and third additional information to the controller, where the third additional information is for associating the third BGP route with the third BGP peer SID.

In a possible implementation, the first BGP peer SID is a BGP peer node SID.

In a possible implementation, the first BGP peer SID is a BGP peer adjacency SID.

In a possible implementation, the first BGP peer SID is a BGP peer set SID.

In a possible implementation, the receiving unit is further configured to obtain, by using the BGP session established between the third communication apparatus and the first communication apparatus, a fourth BGP route advertised by a sixth communication apparatus, where the fourth BGP route includes the first routing prefix and a fourth next hop, the fourth next hop is the sixth communication apparatus, and no BGP session is established between the first communication apparatus and the sixth communication apparatus. The processing unit is further configured to store an association relationship between the first BGP peer SID and the fourth next hop.

According to an eighth aspect, an embodiment of this application provides a controller. The controller may include a transceiver unit and a processing unit. The transceiver unit is configured to perform a receiving-related operation and/or sending-related operation performed by the controller in the second aspect and the possible implementations of the second aspect. The processing unit is configured to perform an operation other than the receiving-related operation and/or sending-related operation performed by the controller in the second aspect and the possible implementations of the second aspect. In specific implementation, the transceiver unit may include a receiving unit and/or a sending unit. The receiving unit is configured to perform the receiving-related operation, and the sending unit is configured to perform the sending-related operation.

In an example, the receiving unit is configured to receive a first BGP peer SID, first additional information, and a first BGP route that are sent by a first communication apparatus, where the first additional information is for associating the first BGP route with the first BGP peer SID, and the first BGP route includes a first routing prefix and a first next hop. No BGP session is established between the first communication apparatus and the second communication apparatus, and the first communication apparatus obtains, through a BGP session between the first communication apparatus and a third communication apparatus, the first BGP route advertised by a second communication apparatus. The processing unit is configured to determine, based on the first BGP route, the first additional information, and the first BGP peer SID, a first SID list including the first BGP peer SID, where the first SID list indicates a first packet forwarding path reaching the first routing prefix. The sending unit is configured to send the first SID list to a head node of the first packet forwarding path.

In a possible implementation, the processing unit is configured to: determine, based on the first routing prefix of the first BGP route, the first packet forwarding path reaching the first routing prefix; and determine the first SID list based on the first additional information and the first packet forwarding path.

In a possible implementation, the third communication apparatus is a route server or a route reflector.

In a possible implementation, the additional information includes a next hop of the first BGP route.

In a possible implementation, if the third communication apparatus is the route server, the first BGP route advertised by the second communication apparatus further includes autonomous system AS information, the AS information includes a first AS identifier, the first AS identifier is for identifying an AS to which the second communication apparatus belongs, and the first additional information includes the first AS identifier.

In a possible implementation, if the third communication apparatus is the route reflector, the first additional information includes an originator identifier (Originator ID).

In a possible implementation, the receiving unit is configured to receive a BGP LS protocol packet sent by the first communication apparatus, where the BGP LS protocol packet includes the first additional information.

In a possible implementation, the BGP LS packet includes a first type-length-value TLV, and the first TLV carries the first additional information.

In a possible implementation, the first TLV is a segment routing internet protocol version 6 border gateway protocol BGP peer node segment identifier SRv6 BGP peer node SID TLV.

In a possible implementation, a type field of the first TLV indicates that the first TLV carries the first additional information.

In a possible implementation, if the third communication apparatus is the route server, the first TLV is an internet exchange point remote member descriptors IXP remote member descriptors TLV.

In a possible implementation, if the third communication apparatus is the route server, the first TLV is a route reflector descriptors Route Reflector Descriptors TLV.

In a possible implementation, the receiving unit is further configured to receive connection type information advertised by the first communication apparatus, where the connection type information indicates a type of a connection between the first communication apparatus and the second communication apparatus.

In a possible implementation, the type of the connection includes any one of the following: a private connection via a network access point, a private connection via a direct link, a local connection via an internet exchange point, a remote connection via an internet exchange point, a private connection via an internet exchange point, or a public connection via an internet exchange point.

In a possible implementation, the connection type information is carried in a second TLV field that is advertised by the first communication apparatus to the controller, where the second TLV is an SRv6 BGP peer node SID TLV, or a type field of the second TLV indicates that the second TLV is for carrying the connection type information.

In a possible implementation, the BGP peer SID is an SRv6 SID.

In a possible implementation, the first communication apparatus includes any one of the following: a POP, an internet gateway IGW, a data center gateway, and a service provider edge PE device.

In a possible implementation, the receiving unit is further configured to receive a second BGP peer SID, second additional information, and a second BGP route that are sent by the first communication apparatus, where the second additional information is for associating the second BGP route with the second BGP peer SID, no BGP session is established between the first communication apparatus and a fourth communication apparatus. The first communication apparatus obtains, by using the BGP session established between the first communication apparatus and the third communication apparatus, the second BGP route advertised by the fourth communication apparatus. The second BGP route includes the first routing prefix and a second next hop, and the second next hop is the fourth communication apparatus. The processing unit is further configured to determine, based on the second BGP route, the second additional information, and the second BGP peer SID, a second SID list including the second BGP peer SID, where the second SID list indicates a second packet forwarding path reaching the first routing prefix. The sending unit is further configured to send the second SID list to a head node of the second packet forwarding path.

In a possible implementation, the receiving unit is further configured to receive a third BGP peer SID, third additional information, and a third BGP route that are sent by the first communication apparatus, where the third additional information is for associating the third BGP route with the third BGP peer SID, the third BGP route is a BGP route that is advertised by a fifth communication apparatus and that is obtained by the first communication apparatus by using the BGP session established between the first communication apparatus and the third communication apparatus, no BGP session is established between the first communication apparatus and the fifth communication apparatus, the third BGP route includes a second routing prefix and a third next hop, and the third next hop is the fifth communication apparatus. The processing unit is further configured to determine, based on the third BGP route, the third additional information, and the third BGP peer SID, a third SID list including the third BGP peer SID, where the third SID list indicates a third packet forwarding path reaching the second routing prefix. The sending unit is further configured to send the third SID list to a head node of the third packet forwarding path.

In a possible implementation, the first BGP peer SID is a BGP peer node SID.

In a possible implementation, the first BGP peer SID is a BGP peer adjacency SID.

In a possible implementation, the first BGP peer SID is a BGP peer set SID.

According to a ninth aspect, an embodiment of this application provides a first communication apparatus. The first communication apparatus may include a transceiver unit and a processing unit. The transceiver unit is configured to perform a receiving-related operation and/or a sending-related operation performed by the first communication apparatus in the third aspect and the possible implementations of the third aspect. The processing unit is configured to perform an operation other than the receiving-related operation and/or the sending-related operation performed by the first communication apparatus in the third aspect and the possible implementations of the third aspect. In specific implementation, the transceiver unit may include a receiving unit and/or a sending unit. The receiving unit is configured to perform the receiving-related operation, and the sending unit is configured to perform the sending-related operation.

In an example, the receiving unit is configured to receive a BGP route sent by a second communication apparatus, where the BGP route includes a routing prefix and a next hop, and a border gateway protocol BGP session is established between the first communication apparatus and the second communication apparatus. The processing unit is configured to allocate a BGP peer SID based on the BGP route. The sending unit is configured to send the BGP peer SID and connection type information corresponding to the BGP peer SID to a controller, where the connection type information indicates a type of a connection between the first communication apparatus and the next hop of the BGP route.

In a possible implementation, the type of the connection includes any one of the following: a private connection via a network access point, a private connection via a direct link, a local connection via an internet exchange point, a remote connection via an internet exchange point, a private connection via an internet exchange point, or a public connection via an internet exchange point.

In a possible implementation, the sending unit is configured to send a BGP LS protocol packet to the controller, where the BGP LS protocol packet includes the connection type information.

In a possible implementation, the BGP LS protocol packet may include a first TLV, and the first TLV includes the connection type information corresponding to the BGP peer SID.

In a possible implementation, the first TLV is a segment routing internet protocol version 6 border gateway protocol peer node segment identifier SRv6 BGP peer node SID TLV.

In a possible implementation, the connection type information is carried in a flags (flag) field of the first TLV.

In a possible implementation, the connection type information is carried in an extension field of the first TLV.

In a possible implementation, a type field of the first TLV indicates that the first TLV carries the connection type information.

In a possible implementation, the first TLV is a peering type descriptors (Peering Type Descriptors) TLV.

In a possible implementation, the second communication apparatus is a route server or a route reflector. The receiving unit is configured to: receive, by using the BGP session, the BGP route that is sent by the second communication apparatus and advertised by a third communication apparatus, where the BGP route includes a prefix and a next hop, the next hop is the third communication apparatus, the first communication apparatus is configured with a border gateway protocol egress peer engineering BGP EPE, and no BGP session is established between the first communication apparatus and the third communication apparatus.

In a possible implementation, the next hop is the second communication apparatus.

In a possible implementation, the sending unit is further configured to send the BGP route and additional information to the controller, where the additional information is for associating the BGP peer SID with the BGP route.

In a possible implementation, the additional information includes the next hop.

In a possible implementation, if the second communication apparatus is the route server, the BGP route further includes autonomous system AS information, the AS information includes a first AS identifier, the first AS identifier is for identifying an AS to which the third communication apparatus belongs, and the additional information includes the first AS identifier.

In a possible implementation, if the second communication apparatus is the route reflector, the additional information includes an originator identifier (Originator ID).

In a possible implementation, the sending unit is configured to send a second TLV to the controller, where the second TLV carries the additional information.

In a possible implementation, the second TLV is carried in a BGP LS protocol packet.

In a possible implementation, the second TLV is an SRv6 BGP peer node SID TLV.

In a possible implementation, the second TLV may be a newly extended TLV, and a type field of the second TLV indicates that the second TLV carries the additional information.

In a possible implementation, if the second communication apparatus is a route server, the second TLV is an IXP remote member descriptors TLV.

In a possible implementation, if the second communication apparatus is a route reflector, the second TLV is a route reflector descriptors TLV.

In a possible implementation, the BGP peer SID is an SRv6 SID.

According to a tenth aspect, an embodiment of this application provides a controller. The controller may include a receiving transceiver unit and a processing unit. The transceiver unit is configured to perform a receiving-related operation and/or sending-related operation performed by the controller in the fourth aspect and the possible implementations of the fourth aspect. The processing unit is configured to perform an operation other than the receiving-related operation and/or sending-related operation performed by the controller in the fourth aspect and the possible implementations of the fourth aspect. In specific implementation, the transceiver unit may include a receiving unit and/or a sending unit. The receiving unit is configured to perform the receiving-related operation, and the sending unit is configured to perform the sending-related operation.

In an example, the receiving unit is configured to receive a BGP route, a BGP peer SID, and connection type information corresponding to the BGP peer SID that are sent by a first communication apparatus, where the BGP route includes a routing prefix and a next hop, the BGP peer SID corresponds to a BGP route sent by a second communication apparatus, the connection type information indicates a type of a connection between the first communication apparatus and the next hop, and the first communication apparatus is configured with a border gateway protocol egress peer engineering BGP EPE function. The processing unit is configured to determine, based on the BGP peer SID and the connection type information corresponding to the BGP peer SID, a SID list including the BGP peer SID, where the SID list indicates a packet forwarding path reaching the routing prefix. The sending unit is configured to send the SID list to a head node of the packet forwarding path.

In a possible implementation, the type of the connection includes any one of the following: a private connection via a network access point, a private connection via a direct link, a local connection via an internet exchange point, a remote connection via an internet exchange point, a private connection via an internet exchange point, or a public connection via an internet exchange point.

In a possible implementation, the receiving unit is configured to receive a BGP LS protocol packet sent by the first communication apparatus, where the BGP LS protocol packet includes the connection type information.

In a possible implementation, the BGP LS protocol packet includes a first TLV, and the first TLV includes the connection type information corresponding to the BGP peer SID.

In a possible implementation, the first TLV is a segment routing internet protocol version 6 border gateway protocol peer node segment identifier SRv6 BGP peer node SID TLV.

In a possible implementation, the connection type information is carried in a flags (flag) field of the first TLV.

In a possible implementation, the connection type information is carried in an extension field of the first TLV.

In a possible implementation, a type field of the first TLV indicates that the first TLV carries the connection type information.

In a possible implementation, the first TLV is a peering type descriptors (Peering Type Descriptors) TLV.

In a possible implementation, the receiving unit is further configured to receive the BGP route and additional information that are sent by the first communication apparatus, where the additional information is for associating the BGP peer SID with the BGP route. The BGP route is a BGP route that is received by the first communication apparatus by using the second communication apparatus and that is advertised by a third communication apparatus, the BGP route includes the prefix and the next hop, the next hop is the third communication apparatus, and no BGP session is established between the first communication apparatus and the third communication apparatus.

In a possible implementation, the additional information includes the next hop.

In a possible implementation, if the second communication apparatus is the route server, the BGP route further includes autonomous system AS information, the AS information includes a first AS identifier, the first AS identifier is for identifying an AS to which the third communication apparatus belongs, and the additional information includes the first AS identifier.

In a possible implementation, if the second communication apparatus is the route reflector, the additional information includes an originator identifier (Originator ID).

In a possible implementation, the receiving unit is configured to receive a second TLV sent by the first communication apparatus, where the second TLV carries the additional information.

In a possible implementation, the second TLV is carried in a BGP LS protocol packet.

In a possible implementation, a type field of the second TLV indicates that the second TLV carries the additional information.

In a possible implementation, the second TLV is an SRv6 BGP peer node SID TLV.

In a possible implementation, if the second communication apparatus is a route server, the second TLV is an IXP remote member descriptors TLV.

In a possible implementation, if the second communication apparatus is a route reflector, the second TLV is a route reflector descriptors TLV.

In a possible implementation, the BGP peer SID is an SRv6 SID.

According to an eleventh aspect, an embodiment of this application provides a first communication apparatus, where the first communication apparatus is configured with a border gateway protocol egress peer engineering BGP EPE. The first communication apparatus may include a transceiver unit and a processing unit. The transceiver unit is configured to perform a receiving-related operation and/or a sending-related operation performed by the first communication apparatus in the fifth aspect and the possible implementations of the fifth aspect. The processing unit is configured to perform an operation other than the receiving-related operation and/or the sending-related operation performed by the first communication apparatus in the fifth aspect and the possible implementations of the fifth aspect. In specific implementation, the transceiver unit may include a receiving unit and/or a sending unit. The receiving unit is configured to perform the receiving-related operation, and the sending unit is configured to perform the sending-related operation.

In an example, the processing unit is configured to allocate a first border gateway protocol BGP peer (peer) segment identifier SID to a first BGP session established between the first communication apparatus and a second communication apparatus, where a plurality of BGP sessions are established between the first communication apparatus and the second communication apparatus, and the plurality of BGP sessions include the first BGP session. The sending unit is configured to correspondingly send the first BGP peer SID and a first peer internet protocol peer IP address to a controller, where the first peer IP address is a peer IP address used by the second communication apparatus to establish the first BGP session with the first communication apparatus.

In a possible implementation, the sending unit is configured to send a control packet to the controller, where the control packet includes a first TLV, and the first TLV includes the first peer IP address.

In a possible implementation, the first TLV is a segment routing internet protocol version 6 border gateway protocol peer node segment identifier SRv6 BGP peer node SID TLV.

In a possible implementation, the first peer IP address is carried in an extension field of the SRv6 BGP peer node SID TLV.

In a possible implementation, the control packet is a BGP LS protocol packet.

In a possible implementation, the apparatus further includes: a receiving unit, configured to receive a packet, where the packet includes the first BGP peer SID. The sending unit is further configured to forward the packet based on an outbound interface corresponding to the first BGP peer SID.

In a possible implementation, the sending unit is further configured to send connection type information corresponding to the first BGP peer SID to the controller, where the connection type information corresponding to the first BGP peer SID indicates a type corresponding to the first BGP session.

In a possible implementation, the sending unit is configured to send a second TLV to the controller, where the second TLV is for carrying the connection type information.

In a possible implementation, the second TLV is carried in a border gateway protocol link state BGP LS protocol packet.

In a possible implementation, the second TLV is an SRv6 BGP peer node SID TLV.

In a possible implementation, the connection type information is carried in a flags (flag) field of the second TLV.

In a possible implementation, the connection type information is carried in an extension field of the second TLV.

In a possible implementation, a type field of the second TLV indicates that the second TLV carries the connection type information.

In a possible implementation, the second TLV is a peering type descriptors TLV.

In a possible implementation, the processing unit 1201 is further configured to allocate a second BGP peer SID to a second BGP session, where the plurality of BGP sessions include the second BGP session. The sending unit 1202 is further configured to correspondingly send the second BGP peer SID and a second peer IP address to the controller, where the second peer IP address is a peer IP address used by the second communication apparatus to establish the second BGP session with the first communication apparatus.

In a possible implementation, the first BGP peer SID is an SRv6 SID.

According to a twelfth aspect, an embodiment of this application provides a controller. The controller may include a receiving transceiver unit and a processing unit. The transceiver unit is configured to perform a receiving-related operation and/or sending-related operation performed by the controller in the sixth aspect and the possible implementations of the sixth aspect. The processing unit is configured to perform an operation other than the receiving-related operation and/or sending-related operation performed by the controller in the sixth aspect and the possible implementations of the sixth aspect. In specific implementation, the transceiver unit may include a receiving unit and/or a sending unit. The receiving unit is configured to perform the receiving-related operation, and the sending unit is configured to perform the sending-related operation.

In an example, the receiving unit is configured to receive a first BGP peer SID and a first peer IP address that are sent by a first communication apparatus, where the first BGP peer SID is a BGP peer SID allocated by the first communication apparatus to a first BGP session established between the first communication apparatus and a second communication apparatus, a plurality of BGP sessions are established between the first communication apparatus and the second communication apparatus, and the plurality of BGP sessions include the first BGP session. The processing unit is configured to determine, based on the first BGP peer SID and the first peer IP address, a SID list including the first BGP peer SID, where the SID list indicates a packet forwarding path. The sending unit is configured to send the SID list to a head node of the packet forwarding path.

In a possible implementation, the receiving unit is configured to receive a control packet sent by the first communication apparatus, where the control packet includes a first TLV, and the first TLV includes the first peer IP address.

In a possible implementation, the first TLV is a segment routing internet protocol version 6 border gateway protocol peer node segment identifier SRv6 BGP peer node SID TLV.

In a possible implementation, the first peer IP address is carried in an extension field of the SRv6 BGP peer node SID TLV.

In a possible implementation, the control packet is a BGP LS protocol packet.

In a possible implementation, the receiving unit is further configured to receive connection type information that corresponds to the first BGP peer SID and that is sent by the first communication apparatus, where the connection type information corresponding to the first BGP peer SID indicates a type corresponding to the first BGP session.

In a possible implementation, the receiving unit is configured to receive a second TLV sent by the first communication apparatus, where the second TLV is for carrying the connection type information.

In a possible implementation, the second TLV is carried in a border gateway protocol link state BGP LS protocol packet.

In a possible implementation, the second TLV is an SRv6 BGP peer node SID TLV.

In a possible implementation, the connection type information is carried in a flags (flag) field of the second TLV.

In a possible implementation, the connection type information is carried in an extension field of the second TLV.

In a possible implementation, a type field of the second TLV indicates that the second TLV carries the connection type information.

In a possible implementation, the second TLV is a peering type descriptors TLV.

In a possible implementation, the receiving unit is further configured to receive a second BGP peer SID and a second peer IP address that are sent by the first communication apparatus, where the second peer IP address is a peer IP address used by the second communication apparatus to establish a second BGP session with the first communication apparatus, and the second BGP peer SID is a BGP peer SID allocated by the first communication apparatus to the second BGP session.

In a possible implementation, the first BGP peer SID is an SRv6 SID.

According to a thirteenth aspect, this application provides a communication apparatus. The communication apparatus includes a memory and a processor. The memory is configured to store program code. The processor is configured to run instructions in the program code, so that the communication apparatus performs the method according to any one of the first aspect or the implementations of the first aspect, the communication apparatus performs the method according to any one of the third aspect or the implementations of the third aspect, or the communication apparatus performs the method according to any one of the fifth aspect or the implementations of the fifth aspect.

According to a fourteenth aspect, this application provides a communication apparatus. The communication apparatus includes a communication interface and a processor, and the communication interface and the processor are used to enable the communication apparatus to perform some or all operations in the method according to any one of the foregoing aspects or any implementation of the method according to any one of the foregoing aspects. In a specific implementation, the communication interface is configured to perform a receiving operation and a sending operation performed by the communication apparatus according to any one of the first aspect or the implementations of the first aspect, and the processor is configured to perform another operation other than the receiving operation and the sending operation performed by the communication apparatus according to any one of the first aspect or the implementations of the first aspect. Alternatively, the communication interface is configured to perform a receiving operation and a sending operation performed by the communication apparatus according to any one of the third aspect or the implementations of the third aspect, and the processor is configured to perform another operation other than the receiving operation and the sending operation performed by the communication apparatus according to any one of the third aspect or the implementations of the third aspect. Alternatively, the communication interface is configured to perform a receiving operation and a sending operation performed by the communication apparatus according to any one of the fifth aspect or the implementations of the fifth aspect, and the processor is configured to perform another operation other than the receiving operation and the sending operation performed by the communication apparatus according to any one of the fifth aspect or the implementations of the fifth aspect.

According to a fifteenth aspect, this application provides a controller, where the controller includes a memory and a processor, the memory is configured to store program code, and the processor is configured to run instructions in the program code, so that the controller performs the method according to any one of the second aspect or the implementations of the second aspect, the controller performs the method according to any one of the fourth aspect or the implementations of the fourth aspect, or the controller performs the method according to any one of the sixth aspect or the implementations of the sixth aspect.

According to a sixteenth aspect, this application provides a controller, where the controller includes a communication interface and a processor. The communication interface and the processor are used to enable the communication apparatus to perform some or all operations in the method according to any one of the foregoing aspects or any implementation of the method according to any one of the foregoing aspects. In a specific implementation, the communication interface is configured to perform a receiving operation and a sending operation performed by the controller according to any one of the second aspect or the implementations of the second aspect, and the processor is configured to perform another operation other than the receiving operation and the sending operation performed by the controller according to any one of the second aspect or the implementations of the second aspect. Alternatively, the communication interface is configured to perform a receiving operation and a sending operation performed by the controller according to any one of the fourth aspect or the implementations of the fourth aspect, and the processor is configured to perform another operation other than the receiving operation and the sending operation performed by the controller according to any one of the fourth aspect or the implementations of the fourth aspect. Alternatively, the communication interface is configured to perform a receiving operation and a sending operation performed by the controller according to any one of the sixth aspect or the implementations of the sixth aspect, and the processor is configured to perform another operation other than the receiving operation and the sending operation performed by the controller according to any one of the sixth aspect or the implementations of the sixth aspect.

According to a seventeenth aspect, an embodiment of this application provides a computer-readable storage medium, including instructions or a computer program. When the instructions or the computer program is run on a processor, the method according to any implementation of the first aspect, the method according to any implementation of the second aspect, the method according to any implementation of the third aspect, the method according to any implementation of the fourth aspect, the method according to any implementation of the fifth aspect, or the method according to any implementation of the sixth aspect is performed.

According to an eighteenth aspect, an embodiment of this application provides a computer program product, including the computer program product. When the computer program product runs on a processor, the method according to any one of the first aspect or the implementations of the first aspect is performed, the method according to any one of the second aspect or the implementations of the second aspect is performed, the method according to any one of the third aspect or the implementations of the third aspect is performed, the method according to any one of the fourth aspect or the implementations of the fourth aspect is performed, the method according to any one of the fifth aspect or the implementations of the fifth aspect is performed, or the method according to any one of the sixth aspect or the implementations of the sixth aspect is performed.

According to a nineteenth aspect, an embodiment of this application provides a communication system, where the communication system includes: a communication apparatus that performs the method according to any one of the first aspect or the implementations of the first aspect and a controller that performs the method according to any one of the second aspect or the implementations of the second aspect; a communication apparatus that performs the method according to any one of the third aspect or the implementations of the third aspect and a controller that performs the method according to any one of the fourth aspect or the implementations of the fourth aspect; or a communication apparatus that performs the method according to any one of the fifth aspect or the implementations of the fifth aspect and a controller that performs the method according to any one of the sixth aspect or the implementations of the sixth aspect.

### BRIEF DESCRIPTION OF DRAWINGS

To describe the technical solutions in embodiments of this application or the conventional technology more clearly, the following briefly describes the accompanying drawings for describing the embodiments or the conventional technology. It is clear that, the accompanying drawings in the following description show only some embodiments recorded in this application, and persons of ordinary skill in the art may still derive other drawings from these accompanying drawings without creative efforts.
FIG. 1a is a schematic diagram of an example application scenario according to an embodiment of this application;
FIG. 1b is a schematic diagram of a structure of an SRv6 BGP peer node SID TLV according to an embodiment of this application;
FIG. 1c is a schematic diagram of another example application scenario according to an embodiment of this application;
FIG. 2 is a schematic flowchart of an information processing method according to an embodiment of this application;
FIG. 3a is a schematic diagram of a structure of another SRv6 BGP peer node SID TLV according to an embodiment of this application;
FIG. 3b is a schematic diagram of a structure of an IXP remote member descriptors TLV according to an embodiment of this application;
FIG. 3c is a schematic diagram of a structure of a route reflector descriptors TLV according to an embodiment of this application;
FIG. 4 is a signaling exchange diagram of an information reporting method according to an embodiment of this application;
FIG. 5a is a schematic diagram of a structure of another SRv6 BGP peer node SID TLV according to an embodiment of this application;
FIG. 5b is a schematic diagram of a structure of a peering type descriptors TLV according to an embodiment of this application;
FIG. 6a is a schematic diagram of an example application scenario according to an embodiment of this application;
FIG. 6b is a signaling exchange diagram of an information processing method according to an embodiment of this application;
FIG. 7 is a schematic diagram of a structure of another SRv6 BGP peer node SID TLV according to an embodiment of this application;
FIG. 8 is a schematic diagram of a structure of a first communication apparatus according to an embodiment of this application;
FIG. 9 is a schematic diagram of a structure of a controller according to an embodiment of this application;
FIG. 10 is a schematic diagram of a structure of a first communication apparatus according to an embodiment of this application;
FIG. 11 is a schematic diagram of a structure of a controller according to an embodiment of this application;
FIG. 12 is a schematic diagram of a structure of a communication apparatus according to an embodiment of this application;
FIG. 13 is a schematic diagram of a structure of a controller according to an embodiment of this application;
FIG. 14 is a schematic diagram of a structure of a communication apparatus according to an embodiment of this application; and
FIG. 15 is a schematic diagram of a structure of a communication apparatus according to an embodiment of this application.

### DESCRIPTION OF EMBODIMENTS

Embodiments of this application provide an information reporting method, an information processing method, and an apparatus, so that even if no BGP session is established between a first communication apparatus and a second communication apparatus, the first communication apparatus can use a BGP EPE function to quickly forward a packet to the second communication apparatus.

A BGP EPE can allocate a BGP peer SID to a path. When receiving a packet including a BGP peer SID, a communication apparatus using the BGP EPE may quickly forward, based on the BGP peer SID in the packet, the packet to a next hop corresponding to the BGP peer SID. For example, the communication apparatus using the BGP EPE may quickly obtain, by looking up a local SID forwarding table, the next hop corresponding to the BGP peer SID, thereby quickly forwarding the packet to the next hop.

In some scenarios, EBGP is usually used to implement a full mesh connection for network traffic exchange. Full-mesh connections between border devices have high requirements on costs and device performance, and are not conducive to network topology extension and device quantity increasing. Therefore, in an example, a route server (router server, RS) may be used to propagate a route, to avoid a full-mesh connection between border devices based on EBGP. A main function of the RS is to propagate a route to a border communication apparatus of an AS. In addition, when propagating the route to the border communication apparatus, the RS does not modify path attributes such as an autonomous system path (AS _PATH) and a next hop (nexthop). The RS is usually deployed in an internet exchange point (internet exchange point, IXP).

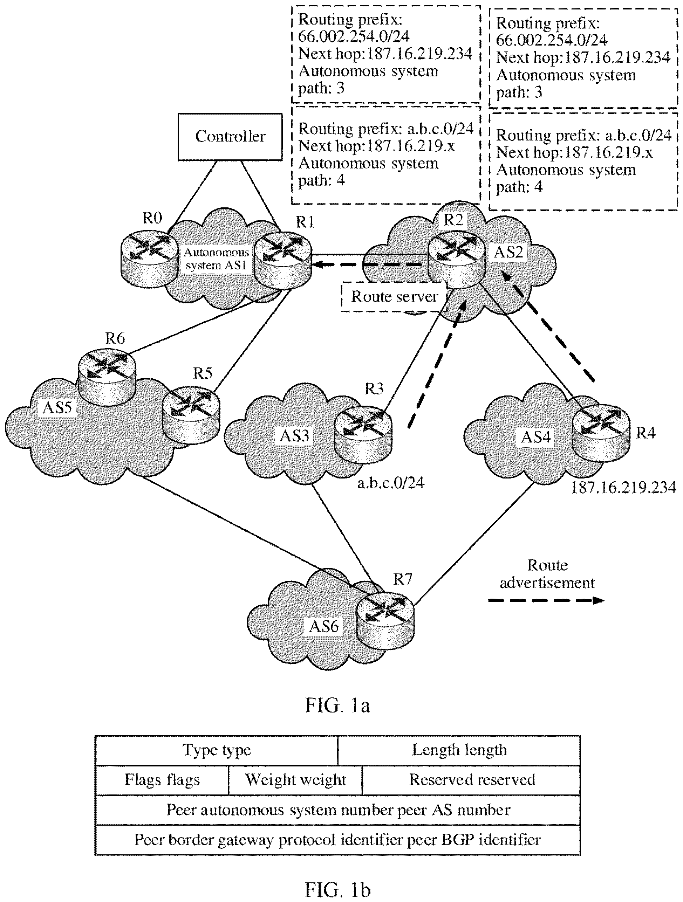

To better understand the technical solutions of this application, the following briefly describes a BGP EPE function with reference to FIG. 1a. In a scenario shown in FIG. 1a, a BGP EPE function may be deployed on a communication apparatus R1 in an AS1.

In an example, in the scenario shown in FIG. 1a, the communication apparatus R1 in the AS1 may separately establish an EBGP session with a communication apparatus R2, a communication apparatus R5, and a communication apparatus R6. When the communication apparatus R2, the communication apparatus R5, and the communication apparatus R6 all correspond to a node having a packet forwarding function, in an example, the communication apparatus R1 may separately allocate a BGP peer SID to the EBGP session between the communication apparatus R1 and the communication apparatus R2, the EBGP session between the communication apparatus R1 and the communication apparatus R2, and the EBGP session between the communication apparatus R1 and the communication apparatus R2. For example, a SID 1 is allocated to the EBGP session between the communication apparatus R1 and the communication apparatus R2, a SID 2 is allocated to the EBGP session between the communication apparatus R1 and the communication apparatus R5, and a SID 3 is allocated to the EBGP session between the communication apparatus R1 and the communication apparatus R6.

In addition, after allocating the SID 1, the communication apparatus R1 may locally store a correspondence between the SID 1 and an IP address of a peer used by the communication apparatus R2 to establish the EBGP session with the communication apparatus R1. For example, if the IP address of the peer used by the communication apparatus R2 to establish the EBGP session with the communication apparatus R1 is a peer IP address 1, the communication apparatus R1 may locally store the correspondence between the SID 1 and the peer IP address 1, for example, in a local SID forwarding table. For the peer IP address 1, in an example, when the communication apparatus R2 advertises a route to the communication apparatus R1, a next hop of the route is the peer IP address 1. In other words, the correspondence between the SID 1 and the peer IP address 1 is a correspondence between the SID 1 and the next hop of the route advertised by the communication apparatus R2 to the communication apparatus R1.

Similarly, after allocating the SID 2, the communication apparatus R1 may locally store a correspondence between the SID 2 and an IP address of a peer used by the communication apparatus R5 to establish the EBGP session with the communication apparatus R1. After allocating the SID 3, the communication apparatus R1 may locally store a correspondence between the SID 3 and an IP address of a peer used by the communication apparatus R6 to establish the EBGP session with the communication apparatus R1.

In addition, the communication apparatus R1 may separately report the SID 1, the SID 2, and the SID 3 to the controller. Manners in which the communication apparatus R1 reports the SID 1, the SID 2, and the SID 3 to the controller are similar. An example in which the communication apparatus R1 reports the SID 1 to the controller is used for description.

In an example, the communication apparatus R1 may send a BGP link state (BGP link state, BGP LS) protocol packet to the controller, to report the SID 1 to the controller. For example, the SID 1 may be carried in link network layer reachability information (link network layer reachability information, link NLRI) as a BGP LS attribute. For the link NLRI, refer to related description parts of the request for comments RFC 7752 and RFC 9086, and details are not described herein.

In an example, the SID 1 may be a BGP peer node (node) SID, may be a BGP peer adjacency (adjacency) SID, or may be a BGP peer set (set) SID.

The BGP peer node SID corresponds to a communication apparatus. When a packet is forwarded based on the BGP peer node SID, one link may be selected from a plurality of links that can reach the communication apparatus, to forward the packet to the communication apparatus. The BGP peer adjacency SID may correspond to a specific link. When a packet is forwarded based on the BGP peer adjacency SID, the packet is forwarded based on the link corresponding to the BGP peer adjacency SID. The BGP peer set SID may correspond to a group of communication apparatuses. When a packet is forwarded based on the BGP peer set SID, the packet may be forwarded to one or more communication apparatuses in the group of communication apparatuses. In an example, load sharing may be performed between the plurality of communication apparatuses.

In addition, when reporting the SID to the controller, the communication apparatus R1 further reports an attribute corresponding to the SID 1 to the controller. In an example, when the SID 1 is an SRv6 SID, and the SID 1 is a BGP peer node SID or a BGP peer set SID, the communication apparatus R1 may send an SRv6 SID NLRI to the controller, where the SRv6 SID NLRI includes the SID 1 and an SRv6 BGP peer node SID type-length-value (type length value, TLV). Refer to FIG. 1b. FIG. 1b is a schematic diagram of a structure of an SRv6 BGP peer node SID TLV. Key fields in the SRv6 BGP peer node SID TLV are a peer autonomous system number (peer AS number) and a peer border gateway protocol identifier (peer BGP identifier). A value carried in the peer AS number is a sequence number of an AS to which the communication apparatus R2 belongs, and a value carried in the peer BGP identifier is for identifying the communication apparatus R2.

The communication apparatus R1 may receive, by using the EBGP session between the communication apparatus R1 and the communication apparatus R2, the route advertised by the communication apparatus R2, and report, to the controller, the route advertised by the communication apparatus R2. It is assumed that a routing prefix of the route advertised by the communication apparatus R2 is a routing prefix 1. When calculating a packet forwarding path that can reach the routing prefix 1, the controller may associate, based on an attribute (for example, the AS number in the SRv6 BGP peer node SID TLV) of the SID 1, the SID 1 with the route advertised by the communication apparatus R2, to obtain a SID list indicating the packet forwarding path, where the SID list includes the SID 1.

In a packet forwarding phase, when receiving a packet including the SID 1, the communication apparatus R1 may quickly find, based on the local SID forwarding table, a next hop (that is, the communication apparatus R2) corresponding to the SID 1, to forward the packet to the communication apparatus R2, thereby implementing quick packet forwarding.

Similarly, in the packet forwarding phase, if the communication apparatus R1 receives a packet including the SID 2, the communication apparatus R1 may quickly find, based on the local SID forwarding table, a next hop (that is, the communication apparatus R5) corresponding to the SID 2, to implement quick packet forwarding. If the communication apparatus R1 receives a packet including the SID 3, the communication apparatus R1 may quickly find, based on the local SID forwarding table, a next hop (that is, the communication apparatus R6) corresponding to the SID 3, to implement quick packet forwarding.

However, in some scenarios, for example, in a scenario in which a BGP EPE and an RS are jointly deployed, the communication apparatus R2 shown in FIG. 1a may be an RS that does not have a packet forwarding capability. In this case:
An EBGP session is established between a route server R2 and a communication apparatus R3 in an AS3, and an EBGP session is also established between the route server R2 and a communication apparatus R4 in the AS3. The communication apparatus R1 receives, by using the route server R2, a route advertised by the communication apparatus R3. As shown in FIG. 1a, in an example, the route includes: a routing prefix 66.102.254.0/24, a next hop 187.16.219.234, and an autonomous system list (AS path) 3. The AS path may include a plurality of AS identifiers, and the plurality of AS identifiers are for identifying each AS that a packet successively passes through when the packet is forwarded based on the BGP route. The 1^{st} AS in the AS path is the AS3 to which the communication apparatus R3 belongs. In FIG. 1a, the AS path includes only one AS, that is, the AS3 to which the communication apparatus R3 belongs.

After receiving the route advertised by the communication apparatus R3, the route server does not modify information in the route, and advertises the route to the communication apparatus R1. That is, the route received by the communication apparatus R1 includes: the routing prefix 66.102.254.0/24, the next hop 187.16.219.234, and the AS path 3.

After receiving the route that is sent by the route server RS and advertised by the communication apparatus R3, the communication apparatus R1 may report the route to the controller, for example, report the route to the controller by using a BGP monitoring protocol (BGP Monitoring Protocol, BMP). For the BMP, refer to a related description part of the request for comments (request for comments, RFC) 7854, and details are not described herein.

Similarly, the communication apparatus R1 receives, by using the route server R2, a route advertised by the communication apparatus R4. After receiving the route that is sent by the route server RS and advertised by the communication apparatus R4, the communication apparatus R1 may report the route to the controller. The route advertised by the communication apparatus R4 may include, for example, a routing prefix a.b.c.0/24, a next hop 187.16.219.x, and an autonomous system list (AS path) 4.

If the communication apparatus R1 considers the route server R2 as a communication apparatus having a data forwarding function, the communication apparatus R1 allocates the SID 1 to an EBGP session between the communication apparatus R1 and the route server R2, and reports the SID 1 to the controller. In this case, in the attribute of the SID 1, the AS number is a sequence number of the AS to which the route server R2 belongs. An AS path of the route advertised by the communication apparatus R3 and received by the communication apparatus R1 by using the route server R2 includes the AS to which the communication apparatus R3 belongs, and an AS path of the route advertised by the communication apparatus R4 and received by the communication apparatus R1 by using the route server R2 includes an AS to which the communication apparatus R4 belongs.

Therefore, on one hand, when calculating a packet forwarding path, even if a packet forwarding path reaching the prefix "66.102.254.0/24" is calculated, the controller cannot associate a route (that is, the route advertised by the communication apparatus R3 to the route server R2) to which the routing prefix belongs with the SID 1. This is because an AS number in additional information of the SID 1 is 2, and an AS number included in the AS path of the route advertised by the communication apparatus R3 to the route server R2 is 3. Therefore, the controller cannot obtain a SID list including the SID 1. On the other hand, even if the controller obtains the SID list including the SID 1, it can be learned from the foregoing description of a BGP EPE that the communication apparatus R1 stores the SID 1 and an IP address of a peer used by the route server to establish an EBGP session with the communication apparatus R1, instead of an actual next hop for packet forwarding. Therefore, even if the communication apparatus R1 receives the packet including the SID 1, the communication apparatus R1 cannot search the local SID forwarding table based on the SID to quickly forward the packet.

Similarly, when calculating a packet forwarding path, even if a packet reaching the prefix "a.b.c.0/24" is calculated, the controller cannot associate a route (that is, the route advertised by the communication apparatus R4 to the route server R2) to which the routing prefix belongs with the SID 1. This is because an AS number in additional information of the SID 1 is 2, and an AS number included in the AS path of the route advertised by the communication apparatus R4 to the route server R2 is 4. Therefore, the controller cannot obtain a SID list including the SID 1. On the other hand, even if the controller obtains the SID list including the SID 1, it can be learned from the foregoing description of a BGP EPE that the communication apparatus R1 stores the SID 1 and an IP address of a peer used by the route server to establish an EBGP session with the communication apparatus R1, instead of an actual next hop for packet forwarding. Therefore, even if the communication apparatus R1 receives the packet including the SID 1, the communication apparatus R1 cannot search the local SID forwarding table based on the SID to quickly forward the packet.

In other words, in the scenario in which the BGP EPE and the route server are jointly deployed, even if the communication apparatus R1 is deployed with the BGP EPE function, the communication apparatus R1 cannot truly use the BGP EPE function.

The communication apparatus R1 shown in FIG. 1a may be a POP, an IGW, a data center gateway, or a PE.

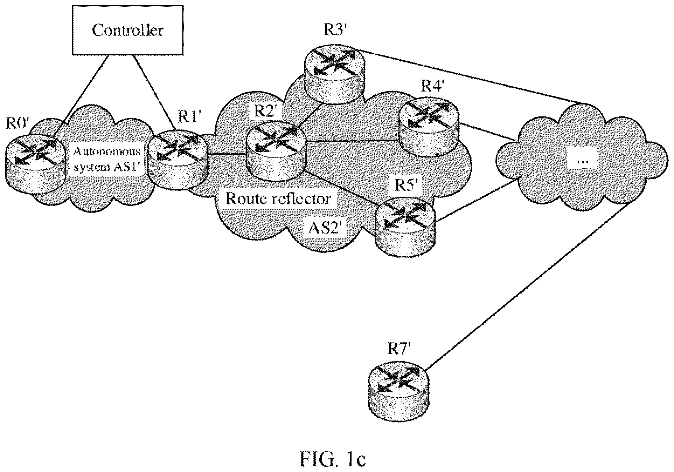

In addition, refer to FIG. 1c. FIG. 1c is a schematic diagram of another example application scenario according to an embodiment of this application.

In the scenario shown in FIG. 1c, an IBGP session is established between a communication apparatus R1' and a route reflector R2', and the route reflector R2' separately establishes an IBGP session with communication apparatuses R3', R4', and R5'. The communication apparatus R1' may obtain, by using the route reflector R2', BGP routes advertised by the communication apparatuses R3', R4', and R5', where the BGP route may include a prefix, a next hop, and an originator identifier (Originator ID), and the originator ID is for identifying a source that advertises the BGP route. When the communication apparatus R1' obtains, by using the route reflector R2', the BGP route advertised by the communication apparatus R3', the originator ID included in the BGP route is for identifying the communication apparatus R3'.

For specific descriptions of the originator ID, refer to a related description part in RFC 4456. Details are not described herein.

When the communication apparatus R1' is configured with a BGP EPE, the communication apparatus R1' may allocate a BGP peer SID (for example, a SID 4) to the IBGP session between the communication apparatus R1' and the route reflector R2', and report the SID 4 to a controller. It can be learned from the foregoing description that when the communication apparatus R1' reports the SID 4 to the controller, a value carried in a peer BGP identifier in an SRv6 BGP peer node SID TLV is for identifying the route reflector R2'. In addition, an attribute reported to the controller along with the BGP peer SID does not include information related to an actual next hop (for example, the communication apparatus R3') for packet forwarding.

Therefore, based on the foregoing description of FIG. 1a, it can be learned that in the scenario in FIG. 1c, on one hand, even if the controller calculates a packet forwarding path that can reach the routing prefix of the route advertised by the communication apparatus R3', the controller cannot associate the route advertised by the communication apparatus R3' with the SID 4. On the other hand, even if the controller calculates a SID list including the SID 4, the communication apparatus R1' cannot quickly forward the packet to the communication apparatus R3' based on a locally stored SID forwarding table. Similarly, the communication apparatus R1' cannot forward the packet to the communication apparatuses R4' and R5'. In other words, even if the communication apparatus R1' is deployed with the BGP EPE function, the BGP EPE function cannot be truly implemented.

Similar to the communication apparatus R1, the communication apparatus R1' may be a POP, an IGW, a data center gateway, or a PE.

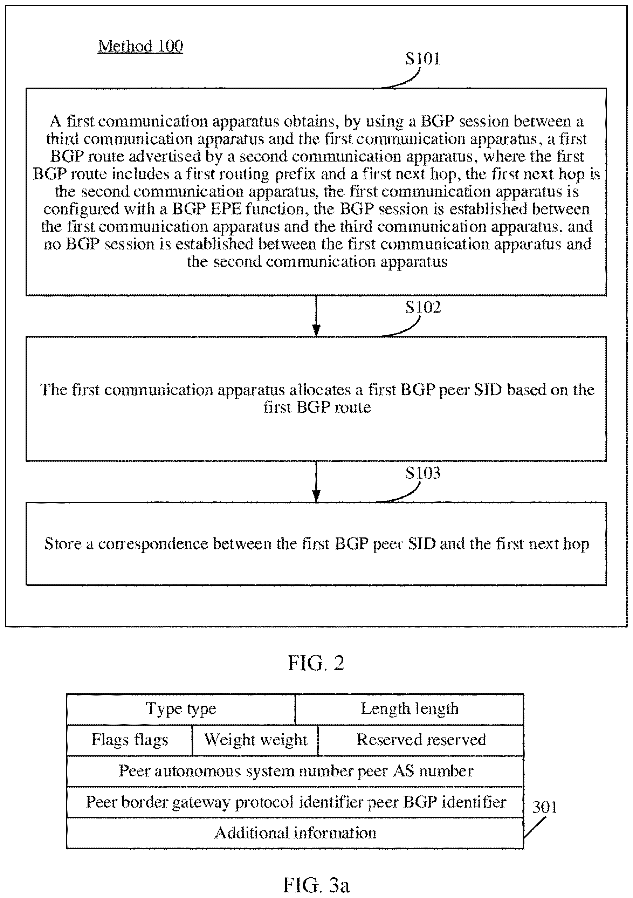

To resolve the foregoing problem, an embodiment of this application provides an information processing method. Refer to FIG. 2. FIG. 2 is a schematic flowchart of an information processing method according to an embodiment of this application. The information processing method 100 shown in FIG. 2 may be performed by a first communication apparatus, and the first communication apparatus may correspond to, for example, R1 in FIG. 1a or R1' in FIG. 1c.

In addition, in this embodiment of this application, a "route" (for example, a BGP route) may be carried in a route advertisement message, and the "route" is equivalent to "route information".

The method 100 may include, for example, the following S101 to S103.

Before the method 100 is described, it should be noted that a communication apparatus mentioned in this embodiment of this application may be a virtual network element, or may be a device that carries the virtual network element. In an example, the communication apparatus may be a network device such as a switch or a router, may be a part of components of a network device, for example, a board or a line card of the network device, may be a function module of the network device, or may be a chip configured to implement the methods in this application. This is not specifically limited in embodiments of this application. Communication apparatuses may be directly connected, for example, but not limited to, by using an Ethernet cable or an optical cable. In an example, when the communication apparatus is a chip, a transceiver unit configured to perform a receiving operation and/or a sending operation related to this application may be an interface circuit in the chip, and a processing unit configured to perform a processing operation may be a processing circuit in the chip.

For a first communication apparatus, a second communication apparatus, and a third communication apparatus in the method 100, it should be noted that:
In the scenario shown in FIG. 1a, the first communication apparatus may correspond to the communication apparatus R1, the second communication apparatus may correspond to the communication apparatus R3, and the third communication apparatus may correspond to the communication apparatus R2. In this case, the second communication apparatus may be an RS, and a BGP session mentioned in S101 may be an EBGP session.

In the scenario shown in FIG. 1c, the first communication apparatus may correspond to the communication apparatus R1', the second communication apparatus may correspond to the communication apparatus R3', the communication apparatus R4', or the communication apparatus R5', and the third communication apparatus may correspond to the route reflector R2'. In this case, a BGP session mentioned in S101 may be an IBGP session.

S101: The first communication apparatus obtains, through a BGP session between the third communication apparatus and the first communication apparatus, a first BGP route advertised by the second communication apparatus, where the first BGP route includes a first routing prefix and a first next hop, the first next hop is the second communication apparatus, the first communication apparatus is configured with a BGP EPE function, the BGP session is established between the first communication apparatus and the third communication apparatus, and no BGP session is established between the first communication apparatus and the second communication apparatus.

In the following description of the method 100, an example in which the first BGP route advertised by the second communication apparatus is a BGP route 1 and the BGP route 1 includes a prefix 1 and a next hop 1 is used for description. The second communication apparatus may advertise the BGP route 1 to the third communication apparatus through a BGP session between the second communication apparatus and the third communication apparatus. After receiving the BGP route 1 advertised by the second communication apparatus, the third communication apparatus may advertise the BGP route 1 to the first communication apparatus by using the BGP session between the third communication apparatus and the first communication apparatus.

The BGP route 1 includes the prefix 1 and the next hop 1, and the next hop 1 is the second communication apparatus. The BGP route 1 is a BGP route indicating that the prefix 1 is reached. It can be learned from the foregoing description of FIG. 1a that, in an example, the BGP route 1 may further include AS information (that is, the AS path mentioned above), the AS information includes a first AS identifier, and the first AS identifier is an AS identifier of an AS to which the second communication apparatus belongs. It can be learned from the foregoing description of FIG. 1c that, in an example, the BGP route 1 may include an originator ID, and the originator ID is for identifying the second communication apparatus.

S102: The first communication apparatus allocates a first BGP peer SID based on the first BGP route.

S103: Store a correspondence between the first BGP peer SID and the first next hop.

In an example, the first BGP peer SID may be a BGP peer node SID, a BGP peer adjacency SID, or a BGP peer set SID. This is not specifically limited in this embodiment of this application.

In an example, the first BGP peer SID may be an SRv6 SID, or may be an MPLS label. In the following example, an example in which the first BGP peer SID is an SRv6 SID is used for description.

In the following description of the method 100, an example in which the BGP peer SID allocated by the first communication apparatus based on the BGP route is a BGP peer SID 1 is used for description.

In this embodiment of this application, when allocating a BGP peer SID, the first communication apparatus no longer allocates the BGP peer SID based on a BGP session, but allocates the BGP peer SID based on a BGP route after receiving the BGP route. In specific implementation, the BGP peer SID may be allocated based on the BGP route in a plurality of implementations.

In a first implementation, a BGP peer SID may be allocated based on a next hop, and one next hop corresponds to one BGP peer SID. In this case, the third communication apparatus may be a route server, or may be a route reflector.

In an example, after the first communication apparatus allocates the BGP peer SID 1 based on the BGP route 1, if the first communication apparatus obtains, by using the third communication apparatus, a BGP route 2 advertised by a fourth communication apparatus, where a next hop of the BGP route 2 is a next hop 2, and the next hop 2 is the fourth communication apparatus, the first communication apparatus may allocate, based on the BGP route 2, a BGP peer SID 2 different from the BGP peer SID 1. The second communication apparatus and the fourth communication apparatus may belong to one AS, or may belong to different ASs. Correspondingly, the first communication apparatus may store an association relationship between the BGP peer SID 2 and the next hop 2. In an example, a routing prefix of the BGP route 2 may be the prefix 1.

In another example, after the first communication apparatus allocates the BGP peer SID 1 based on the BGP route 1, if the first communication apparatus obtains, by using the third communication apparatus, a BGP route 3 advertised by a fifth communication apparatus, where a next hop of the BGP route 3 is a next hop 3, and the next hop 3 is the fifth communication apparatus, the first communication apparatus may allocate, based on the BGP route 3, a BGP peer SID 3 different from the BGP peer SID 1. The second communication apparatus and the fourth communication apparatus may belong to one AS, or may belong to different ASs. Correspondingly, the first communication apparatus may store an association relationship between the BGP peer SID 3 and the next hop 3. In an example, a routing prefix of the BGP route 3 may be a prefix 2 different from the prefix 1.

In a second implementation, the first communication apparatus may allocate a BGP peer SID based on a routing prefix. One routing prefix corresponds to one BGP peer SID. In this case, the BGP peer SID is a BGP peer set SID. In this case, routes that reach a same routing prefix but correspond to different next hops are associated with a same BGP peer set SID.

In an example, when the BGP peer SID 1 is a BGP peer set SID, after the first communication apparatus allocates the BGP peer SID 1 based on the BGP route 1, the first communication apparatus obtains, by using the third communication apparatus, a BGP route 4 advertised by a sixth communication apparatus, where a next hop of the BGP route 4 is a next hop 4, the next hop 4 is the sixth communication apparatus, and a prefix of the BGP route 4 is the prefix 1. In this case, after receiving the BGP route 1, the first communication apparatus has allocated the BGP peer SID 1 based on the prefix 1, and the routing prefix of the BGP route 4 is also the prefix 1. Therefore, the first communication apparatus may no longer allocate a new BGP peer SID based on the BGP route 4, but store an association relationship between the BGP peer SID 1 and the next hop 4.

In a third implementation, when the third communication apparatus is a route server, a BGP peer SID may be allocated based on an AS identifier of an AS to which a next hop belongs, and one AS identifier corresponds to one BGP peer SID.

In an example, after the first communication apparatus allocates the BGP peer SID 1 based on the BGP route 1, if the first communication apparatus obtains, by using the third communication apparatus, a BGP route 5 advertised by a seventh communication apparatus, a next hop of the BGP route 5 is the seventh communication apparatus. If an AS to which the seventh communication apparatus belongs is different from the AS to which the second communication apparatus belongs, the first communication apparatus may allocate, based on the BGP route 5, a BGP peer SID 4 different from the BGP peer SID 1. If the AS to which the seventh communication apparatus belongs is the same as the AS to which the second communication apparatus belongs, the first communication apparatus no longer allocates a new BGP peer SID based on the BGP route 5.

In a fourth implementation, when the third communication apparatus is a route reflector, a BGP peer SID may be allocated based on an originator ID, and one originator ID corresponds to one BGP peer SID.

In an example, after the first communication apparatus allocates the BGP peer SID 1 based on the BGP route 1, if the first communication apparatus obtains, by using the third communication apparatus, a BGP route 6 advertised by the second communication apparatus, where an originator ID of the BGP route 6 indicates the second communication apparatus, the first communication apparatus may no longer allocate a BGP peer SID based on the BGP route 6. After the first communication apparatus allocates the BGP peer SID 1 based on the BGP route 1, if the first communication apparatus obtains, by using the third communication apparatus, a BGP route 7 advertised by an eighth communication apparatus, where an originator ID of the BGP route 7 indicates the eighth communication apparatus, the first communication apparatus may allocate, based on a BGP route 8, a BGP peer SID 4 different from the BGP peer SID 1.

After allocating the BGP peer SID 1 based on the BGP route 1, the first communication apparatus may store a correspondence between the BGP peer SID 1 and the next hop 1 (that is, the second communication apparatus). Storing the correspondence between the BGP peer SID 1 and the next hop 1 may be storing a correspondence between the BGP peer SID 1 and an IP address of the next hop 1.

In an example, in specific implementation of storing the correspondence between the BGP peer SID 1 and the next hop 1, the first communication apparatus may store the correspondence between the BGP peer SID 1 and the next hop 1 in a local (local) SID forwarding table, or may store the correspondence between the BGP peer SID 1 and the next hop 1 in BGP EPE information.

Because the first communication apparatus stores the correspondence between the BGP peer SID 1 and the next hop 1, when receiving a packet including the BGP peer SID 1, the first communication apparatus may quickly forward the packet to the next hop 1 based on the correspondence between the BGP peer SID 1 and the next hop 1, thereby improving packet forwarding efficiency, and enabling the first communication apparatus to truly use the BGP EPE function.

In an example, after obtaining the BGP route 1, in addition to performing S102 and S103, the first communication apparatus may further advertise the BGP route 1, the BGP peer SID 1, and additional information 1 for associating the BGP route 1 with the BGP peer SID 1 to a controller. In some embodiments, the first communication apparatus may send the BGP route 1 to the controller by using a route advertisement message. The route advertisement message may be the BMP message mentioned above, and details are not described herein.

In some embodiments, the first communication apparatus may send the additional information 1 and the BGP peer SID 1 to the controller by using a control packet. In an example, the control packet may include a first TLV, and the first TLV is for carrying the additional information 1.

In an example, the control packet may be a BGP LS protocol packet, for example, may be the NLRI mentioned above. For a field that carries the BGP peer SID 1 in the NLRI, refer to a related description part of "https://tools.ietf.org/id/draft-ietf-idr-bgpls-srv6-ext-09.txt". Details are not described herein.

For the first TLV, it should be noted that:
In an example, the first TLV may be the SRv6 BGP peer node SID TLV mentioned above. For example, the SRv6 BGP peer node SID TLV may be extended, and a new field may be obtained through extension to carry the additional information 1. Refer to FIG. 3a for understanding. FIG. 3a is a schematic diagram of a structure of another SRv6 BGP peer node SID TLV according to an embodiment of this application. With reference to FIG. 3a and FIG. 1b, it can be learned that an extension field 301 is added to the SRv6 BGP peer node SID TLV shown in FIG. 3a, and the field 301 is for carrying the additional information 1.

In another example, the first TLV may be another TLV different from the SRv6 BGP peer node SID TLV. In this case, a type field of the first TLV indicates that the first TLV includes the additional information 1. For example, the type field of the first TLV indicates that the first TLV carries a next hop. For another example, the type field of the first TLV indicates that the first TLV carries an AS. For still another example, the type field of the first TLV indicates that the first TLV carries a next hop and an AS.

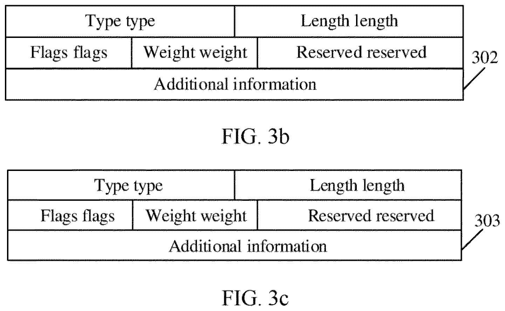

In this case:
When the second communication apparatus is a route server, the first TLV may be a newly extended IXP remote member descriptors TLV. It is not difficult to understand that, in this case, the control packet includes both the SRv6 BGP peer node SID TLV and the IXP remote member descriptors TLV. For the IXP remote member descriptors TLV, refer to FIG. 3b for understanding. FIG. 3b is a schematic diagram of a structure of an IXP remote member descriptors TLV according to an embodiment of this application. With reference to FIG. 3a and FIG. 3b, it can be learned that a field 302 in the IXP remote member descriptors TLV shown in FIG. 3b is for carrying the additional information 1. For another field in the IXP remote member descriptors TLV shown in FIG. 3b, a value of the field may be the same as that of a corresponding field in the SRv6 BGP peer node SID TLV Details are not described herein again.

When the second communication apparatus is a route reflector, the first TLV may be a newly extended route reflector descriptors TLV. It is not difficult to understand that, in this case, the control packet includes both the SRv6 BGP peer node SID TLV and the route reflector descriptors TLV. For the route reflector descriptors TLV, refer to FIG. 3c for understanding. FIG. 3c is a schematic diagram of a structure of a route reflector descriptors TLV according to an embodiment of this application. With reference to FIG. 3a and FIG. 3c, it can be learned that a field 303 in the route reflector descriptors TLV shown in FIG. 3c is for carrying the additional information 1. For another field in the route reflector descriptors TLV shown in FIG. 3c, a value of the field may be the same as that of a corresponding field in the SRv6 BGP peer node SID TLV Details are not described herein again.

After receiving the BGP route 1, the controller may calculate a packet forwarding path based on the BGP route 1 and another received BGP route, and obtain a SID list indicating the packet forwarding path. When calculating the packet forwarding path, the controller may determine, based on the prefix 1 of the BGP route 1, a packet forwarding path 1 reaching the prefix 1. Then, the controller may associate the BGP route 1 with the BGP peer SID 1 based on the additional information 1, to obtain a SID list 1 including the BGP peer SID 1. Further, the controller may forward, to a head node of the packet forwarding path 1, a SID list indicating the packet forwarding path 1.

For the additional information 1, it should be noted that:
In an example, the additional information 1 may be the next hop 1. For example, if the first communication apparatus allocates a BGP peer SID based on a next hop, the additional information 1 may be the next hop 1. In this way, the controller can determine a specific next hop corresponding to the BGP peer SID 1, so that when calculating the packet forwarding path, the controller can accurately associate the BGP peer SID 1 with a link between the first communication apparatus and the second communication apparatus.

In another example, when the third communication apparatus is a route server, the additional information 1 may include the first AS identifier, that is, include the identifier of the AS to which the second communication apparatus belongs. For example, if the first communication apparatus allocates a BGP peer SID based on an AS to which a next hop belongs, the additional information 1 may be the first AS identifier. In this case, when calculating the packet forwarding path, the controller may associate the BGP peer SID 1 with the AS to which the second communication apparatus belongs. In this case, in the AS to which the second communication apparatus belongs, in addition to the second communication apparatus, if another communication apparatus also advertises a BGP route to the first communication apparatus by using the third communication apparatus, the BGP peer SID 1 may correspond to the link between the first communication apparatus and the second communication apparatus and a link between the first communication apparatus and the another communication apparatus.

In another example, the additional information 1 may include both the first AS identifier and the next hop 1. In this case, even if the second communication apparatus belongs to two ASs at the same time, and IP addresses of the second communication apparatus in the two ASs are the same, when calculating the packet forwarding path, the controller may associate the BGP peer SID 1 with the second communication apparatus and the AS to which the second communication apparatus belongs when advertising the BGP route 1.

In still another example, when the third communication apparatus is a route reflector, the additional information 1 may include an originator ID indicating the second communication apparatus. For example, if the first communication apparatus allocates a BGP peer SID based on an originator ID, the additional information 1 may be the originator ID. In this case, the controller may determine the second communication apparatus corresponding to the BGP peer SID 1, so that when calculating the packet forwarding path, the controller can accurately associate the BGP peer SID 1 with the link between the first communication apparatus and the second communication apparatus.

As described above, the controller may forward, to the head node of the packet forwarding path 1, the SID list 1 indicating the packet forwarding path 1. After receiving the SID list 1, the head node may obtain the packet including the SID list 1. For example, the head node may obtain, based on service data and the SID list 1, the packet including the SID list 1. For example, if the packet is an SRv6 packet, the SID list 1 is carried in a segment routing header (segment routing header, SRH) of the packet, and the service data is used as a payload of the SRv6 packet. After obtaining the packet, the head node may forward the packet.

After receiving the packet sent by the head node, the first communication apparatus may parse the packet to obtain the BGP peer SID 1 in the packet, and then determine, based on the prestored association relationship between the BGP peer SID 1 and the next hop 1, to forward the packet to the next hop 1.

As described above, in an example, after receiving a BGP route 2, the first communication apparatus may allocate a BGP peer SID 2 based on the BGP route 2, and store an association relationship between the BGP peer SID 2 and a next hop 2. In this case, the first communication apparatus may further advertise the BGP route 2, the BGP peer SID 2, and additional information 2 to the controller, where the additional information 2 is for associating the BGP peer SID 2 with the BGP route 2. A principle of a specific implementation of "the first communication apparatus advertises the BGP route 2, the BGP peer SID 2, and additional information 2 to the controller" is similar to a manner of "the first communication apparatus advertises the BGP route 1, the BGP peer SID 1, and the additional information 1 to the controller". Therefore, for specific implementation thereof, refer to the related description part of "the first communication apparatus advertises the BGP route 1, the BGP peer SID 1, and the additional information 1 to the controller". Details are not described herein again.

Correspondingly, the controller may associate the BGP route 2 with the BGP peer SID 2 based on the additional information 2, so that correspondingly, the controller can calculate a SID list 2 including the BGP peer SID 2, and send the SID list 2 to a head node of a packet forwarding path 2 indicated by the SID list 2.

As described above, in an example, after receiving a BGP route 3, the first communication apparatus may allocate a BGP peer SID 3 based on the BGP route 3, and store an association relationship between the BGP peer SID 3 and a next hop 3. In this case, the first communication apparatus may further advertise the BGP route 3, the BGP peer SID 3, and additional information 3 to the controller, where the additional information 3 is for associating the BGP peer SID 3 with the BGP route 3. A principle of a specific implementation of "the first communication apparatus advertises the BGP route 3, the BGP peer SID 3, and additional information 3 to the controller" is similar to a manner of "the first communication apparatus advertises the BGP route 1, the BGP peer SID 1, and the additional information 1 to the controller". Therefore, for specific implementation thereof, refer to the related description part of "the first communication apparatus advertises the BGP route 1, the BGP peer SID 1, and the additional information 1 to the controller". Details are not described herein again.

Correspondingly, the controller may associate the BGP route 3 with the BGP peer SID 3 based on the additional information 3, so that correspondingly, the controller can calculate a SID list 3 including the BGP peer SID 3, and send the SID list 3 to a head node of a packet forwarding path 3 indicated by the SID list 3.

For the additional information 2 and the additional information 3, refer to the foregoing description part of the additional information 1. Details are not described herein again.

In an example, because there may be a plurality of types of connections between communication apparatuses, different connection types can provide different quality of service. Therefore, if the controller can calculate the packet forwarding path with reference to a type of a connection between communication apparatuses, the calculated packet forwarding path can better meet a requirement of a specific service on quality of service. In view of this, in an example, the first communication apparatus may further advertise connection type information to the controller, where the connection type information indicates a type of a connection between the first communication apparatus and the second communication apparatus.

In an example, the connection type information may be the type of the connection between the first communication apparatus and the second communication apparatus, or may be indication information indicating the type of the connection between the first communication apparatus and the second communication apparatus. The indication information indicating the type of the connection between the first communication apparatus and the second communication apparatus may be represented by using one or more bits. For example, the indication information is represented by using a bitmap (bit map).

In some embodiments, the first communication apparatus may add the connection type information to the first TLV and send the first TLV to the controller. In other words, in addition to the additional information 1, the first TLV further carries the connection type information.

In some other embodiments, the first communication apparatus may add the connection type information to a second TLV in the control packet and send the second TLV to the controller. For a structure of the second TLV, refer to the structure shown in FIG. 3b. When the connection type is sent to the controller by using the TLV field shown in FIG. 3b, the field 302 is for carrying the connection type.

For the type of the connection between the first communication apparatus and the second communication apparatus, it should be noted that, the type of the connection between the first communication apparatus and the second communication apparatus may be a private connection via a network access point (Private Connection via NAP), a private connection via a direct link (Private Connection via Direct Link), a local connection via an internet exchange point (Local Connection via IXP), a remote connection via an internet exchange point (Remote Connection via IXP), a private connection via an internet exchange point (Private Connection via IXP), or a public connection via an internet exchange point (Public Connection via IXP).

The private connection via the network access point means that the first communication apparatus and the second communication apparatus are via the network access point, and the connection is a private connection. The private connection is a directly connected physical connection. In other words, that the connection between the first communication apparatus and the second communication apparatus is a private connection means that a BGP session is directly established between the first communication apparatus and the second communication apparatus.

The private connection via the direct link means that the first communication apparatus and the second communication apparatus are directly connected, and the connection is a private connection.

The local connection via the internet exchange point means that the first communication apparatus and the second communication apparatus are via the internet exchange point, and a geographical location of the first communication apparatus and a geographical location of the second communication apparatus belong to a same area, for example, belong to a same city.

The remote connection via the internet exchange point means that the first communication apparatus and the second communication apparatus are via the internet exchange point, and a geographical location of the first communication apparatus and a geographical location of the second communication apparatus belong to different areas, for example, belong to different cities.

The private connection via the internet exchange point means that the first communication apparatus and the second communication apparatus are via the internet exchange point, and the connection is a private connection.

The public connection via the internet exchange point means that the first communication apparatus and the second communication apparatus are via the internet exchange point, and the connection is a public connection. The public connection means that the first communication apparatus may be connected to one or more peers other than the second communication apparatus, and correspondingly, the second communication apparatus may also be connected to one or more peers other than the first communication apparatus. That the connection between the first communication apparatus and the second communication apparatus is a public connection means that the first communication apparatus and the second communication apparatus separately establish a BGP session with a route server of the IXP, and the first communication apparatus and the second communication apparatus exchange BGP routing information with another communication apparatus of the IXP by using the route server.

A BGP EPE can allocate a BGP peer SID to a BGP session. In an example, a communication apparatus A may be deployed with a BGP EPE, and a BGP session may be established between the communication apparatus A and a communication apparatus B. The communication apparatus A may allocate a BGP peer SID to the BGP session between the communication apparatus A and the communication apparatus B.

After allocating the BGP peer SID, the communication apparatus A may report the BGP peer SID to a controller, so that the controller calculates a forwarding path including the BGP peer SID, that is, calculates a SID list indicating a packet forwarding path. However, the forwarding path currently calculated by the controller usually cannot match a requirement of a service on quality of service.

Therefore, a solution is urgently needed to resolve the foregoing problem.

In view of this, an embodiment of this application provides an information reporting method. According to the method, a packet forwarding path calculated by a controller can match a requirement of a service on quality of service.

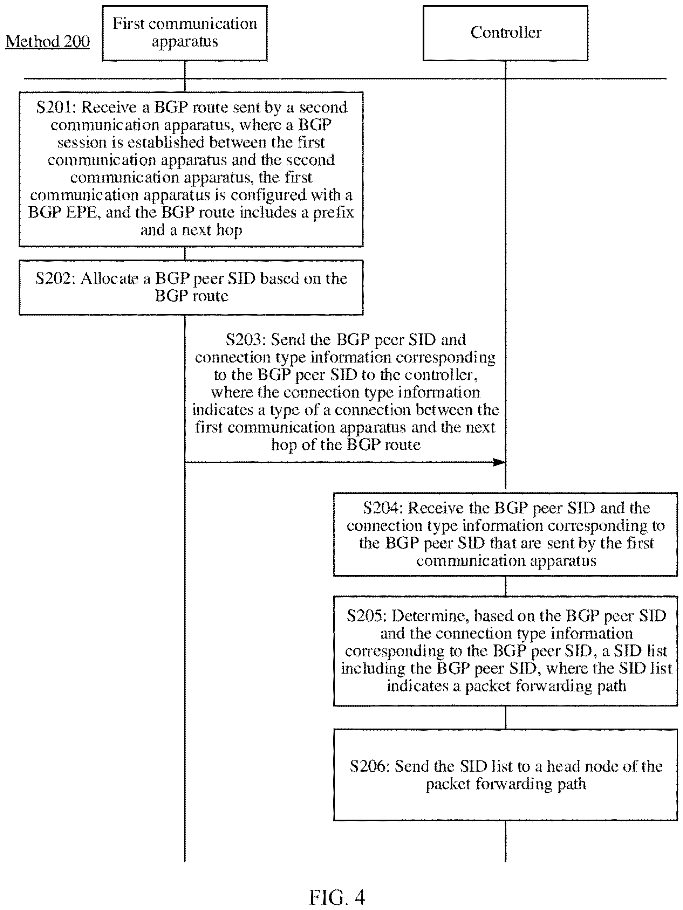

FIG. 4 is a signaling exchange diagram of an information reporting method according to an embodiment of this application.

For a first communication apparatus and a second communication apparatus in the method 200 shown in FIG. 4, it should be noted that in an example, the first communication apparatus may correspond to the communication apparatus R1 shown in FIG. 1a, and the second communication apparatus may correspond to the communication apparatus R2, the communication apparatus R5, or the communication apparatus R6 shown in FIG. 1a. In this case, an EBGP session is established between the first communication apparatus and the second communication apparatus. In another example, the first communication apparatus may correspond to the communication apparatus R1' shown in FIG. 1c, and the second communication apparatus may correspond to the communication apparatus R2' shown in FIG. 1c. In this case, an IBGP session is established between the first communication apparatus and the second communication apparatus. In this case, the second communication apparatus may be not limited to the route reflector shown in FIG. 1c.

The method 200 may include, for example, the following S201 to S206.

S201: The first communication apparatus receives a BGP route sent by the second communication apparatus, where a BGP session is established between the first communication apparatus and the second communication apparatus, the first communication apparatus is configured with a BGP EPE, and the BGP route includes a prefix and a next hop.

In an example, the second communication apparatus may be a communication apparatus having a packet forwarding function. In this case, the next hop included in the BGP route may be the second communication apparatus.

In an example, the second communication apparatus does not have a packet forwarding function, and the second communication apparatus is a BGP route server. In this case, the BGP route may be advertised by a third communication apparatus. To be specific, the first communication apparatus may obtain, by using the second communication apparatus, the BGP route advertised by the third communication apparatus. In this case, the first communication apparatus is configured with the BGP EPE, no BGP session is established between the first communication apparatus and the third communication apparatus, and a BGP session is established between the second communication apparatus and the third communication apparatus. In this case, the BGP route includes a prefix and a next hop, and the next hop is the third communication apparatus.

When the BGP route is the BGP route advertised by the third communication apparatus, the first communication apparatus in the method 200 may correspond to the first communication apparatus in the method 100, the second communication apparatus in the method 200 may correspond to the third communication apparatus in the method 100, and the third communication apparatus in the method 200 may correspond to the second communication apparatus in the method 100. Therefore, for the first communication apparatus in the method 200, refer to the description part of the first communication apparatus in the method 100. For a description part of the second communication apparatus in the method 200, refer to the description part of the third communication apparatus in the method 100. For the third communication apparatus in the method 200, refer to the description part of the second communication apparatus in the method 100. Details are not described herein again.

S202: The first communication apparatus allocates a BGP peer SID based on the BGP route.

S203: The first communication apparatus sends the BGP peer SID and connection type information corresponding to the BGP peer SID to a controller, where the connection type information indicates a type of a connection between the first communication apparatus and the next hop of the BGP route.

In an example, the BGP peer SID is an SRv6 SID. In another example, the BGP peer SID is an MPLS label.

In this embodiment of this application, if the second communication apparatus has a packet forwarding function, the next hop of the BGP route is the second communication apparatus, and the connection type information corresponding to the BGP peer SID indicates a type of a BGP connection established between the first communication apparatus and the second communication apparatus, or indicates a type of a connection between the first communication apparatus and the second communication apparatus.

In this embodiment of this application, if the second communication apparatus is a route server, the next hop of the BGP route is the third communication apparatus. Correspondingly, the connection type information corresponding to the BGP peer SID indicates a type of a connection between the first communication apparatus and the third communication apparatus.

Because there may be a plurality of types of connections between communication apparatuses, different connection types can provide different quality of service. In an example, link quality of different connection types varies greatly. For example, links of different connection types have different bandwidths. Some links may have a bandwidth of only 10 megabits per second (for example, a remote connection), and some links have a bandwidth of up to 1000 megabits per second (for example, a private connection via a direct link or a private connection via a network access point). In another example, different connection types represent different business relationships with different costs.

Therefore, if the controller can calculate the packet forwarding path with reference to a type of a connection between communication apparatuses, the calculated packet forwarding path can better meet a requirement of a specific service on quality of service. In view of this, in an example, the first communication apparatus may send the connection type information corresponding to the BGP peer SID to the controller.

The connection type indicated by the connection type information may include any one of the following:
a private peer via a network access point, a private peer via a direct link, a local peer via an internet exchange point, a remote peer via an internet exchange point, a private peer via an internet exchange point, or a public peer via an internet exchange point.

For explanations and descriptions of various connection types, refer to the related description part in the method 100. Details are not described herein again.

In an example, in specific implementation of sending the connection type information corresponding to the BGP peer SID to the controller, the first communication apparatus may send a first TLV to the controller, where the first TLV carries the connection type information corresponding to the BGP peer SID. In an example, the first TLV may be carried in a control packet. In other words, in specific implementation of sending the connection type information corresponding to the BGP peer SID to the controller, the first communication apparatus may send a control packet to the controller, where the control packet includes the first TLV for carrying the connection type information corresponding to the BGP peer SID.

For the control packet, it should be noted that, the control packet may be a BGP LS protocol packet. In an example, the BGP LS protocol packet may be an NLRI. In addition to the first TLV, the NLRI may further include the BGP peer SID.

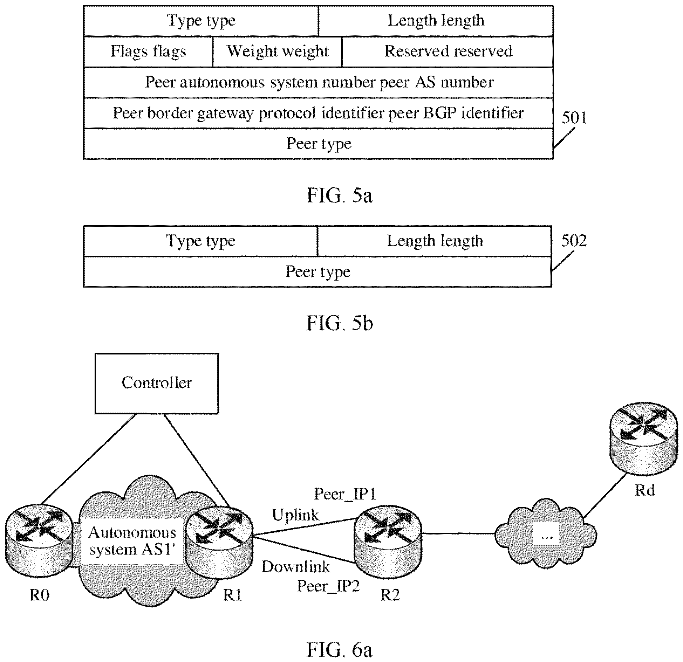

For the first TLV, it should be noted that:
In an example, the first TLV may be the SRv6 BGP peer node SID TLV mentioned above. For example, the SRv6 BGP peer node SID TLV may be extended, and a new field may be obtained through extension to carry the connection type information corresponding to the BGP peer SID. Refer to FIG. 5a for understanding. FIG. 5a is a schematic diagram of a structure of another SRv6 BGP peer node SID TLV according to an embodiment of this application. With reference to FIG. 5a and FIG. 1b, it can be learned that an extension field 501 is newly added to the SRv6 BGP peer node SID TLV shown in FIG. 5a. In an example, the field 501 may be for carrying the connection type information corresponding to the BGP peer SID. For another example, because a flags field of the SRv6 BGP peer node SID TLV is not used, the connection type corresponding to the BGP peer SID may be carried in the flags field of the SRv6 BGP peer node SID TLV.

In another example, the first TLV may be another TLV different from the SRv6 BGP peer node SID TLV, for example, may be a newly extended TLV. In this case, a type field of the first TLV indicates that the first TLV carries the connection type information. In this embodiment of this application, a connection of a specific type between two communication apparatuses may be created, to create a BGP peer corresponding to the type. Therefore, the "connection type" may also be referred to as a peer type. In view of this, the first TLV may be a newly extended peering type descriptors TLV. In this case, the control packet includes both the SRv6 BGP peer node SID TLV and the first TLV. For the peering type descriptors TLV, refer to FIG. 5b for understanding. FIG. 5b is a schematic diagram of a structure of a peering type descriptors TLV according to an embodiment of this application. A field 502 in the peering type descriptors TLV in FIG. 5b is for carrying the connection type information corresponding to the BGP peer SID.

In an example, the second communication apparatus is a route server, and the BGP route is a BGP route advertised by the third communication apparatus. In this case, the first communication apparatus may further send the BGP route and additional information to the controller, where the additional information is for associating the BGP peer SID with the BGP route.

In an example, the additional information may be the next hop of the BGP route. In another example, when the second communication apparatus is a route server, the BGP route further includes AS information, where the AS information includes a first AS identifier, the first AS identifier is for identifying an AS to which the third communication apparatus belongs, and the additional information includes the first AS identifier. In still another example, when the second communication apparatus is a route reflector, the additional information includes an originator ID indicating the third communication apparatus.

For a specific description of the additional information, refer to the description part of the additional information 1 in the method 100. Details are not described herein again.

In specific implementation of sending the additional information to the controller, the first communication apparatus may send a second TLV to the controller, where the second TLV is for carrying the additional information. In an example, the additional information may be carried in a BGP LS protocol packet. For the second TLV, it should be noted that:
In an example, the second TLV may be an SRv6 BGP peer node SID TLV. In this case, for a structure of the SRv6 BGP peer node SID TLV field, refer to FIG. 3a. The additional information may be carried in an extension field 301 of the SRv6 BGP peer node SID TLV.

In another example, the second TLV may be an IXP remote member descriptors TLV. For a structure of the IXP remote member descriptors TLV field, refer to FIG. 3b. The additional information may be carried in a field 302 of the IXP remote member descriptors TLV.

In still another example, the second TLV may be a route reflector descriptors TLV. For a structure of the route reflector descriptors TLV field, refer to FIG. 3c. The additional information may be carried in a field 303 of the route reflector descriptors TLV.

In an example, the additional information corresponding to the BGP peer SID and the connection type information corresponding to the BGP peer SID may be carried in one control packet (for example, an NLRI) and sent to the controller. In this case:
In some embodiments, both the additional information corresponding to the BGP peer SID and the connection type information corresponding to the BGP peer SID may be carried in an SRv6 BGP peer node SID TLV. For example, the SRv6 BGP peer node SID TLV includes two extension fields, one extension field is for carrying the additional information corresponding to the BGP peer SID, and the other extension field is for carrying the connection type information corresponding to the BGP peer SID. For another example, the SRv6 BGP peer node SID TLV includes one extension field, the extension field is for carrying the additional information corresponding to the BGP peer SID, and the connection type information corresponding to the BGP peer SID is carried in a flags field of the SRv6 BGP peer node SID TLV.

In some other embodiments, the additional information corresponding to the BGP peer SID is carried in the SRv6 BGP peer node SID TLV, and the connection type information corresponding to the BGP peer SID is carried in a peering type descriptors TLV.

In some other embodiments, the additional information corresponding to the BGP peer SID is carried in an IXP remote member descriptors TLV, and the connection type information corresponding to the BGP peer SID is carried in the SRv6 BGP peer node SID TLV.

In some other embodiments, the additional information corresponding to the BGP peer SID is carried in a route reflector descriptors TLV, and the connection type information corresponding to the BGP peer SID is carried in the SRv6 BGP peer node SID TLV.

In still some other embodiments, the additional information corresponding to the BGP peer SID is carried in an IXP remote member descriptors TLV, and the connection type information corresponding to the BGP peer SID is carried in a peering type descriptors TLV.

In still some other embodiments, the additional information corresponding to the BGP peer SID is carried in a route reflector descriptors TLV, and the connection type information corresponding to the BGP peer SID is carried in a peering type descriptors TLV.

S204: The controller receives the BGP peer SID and the connection type information corresponding to the BGP peer SID that are sent by the first communication apparatus.

In addition, the controller may further receive the BGP route sent by the first communication apparatus.

S205: The controller determines, based on the BGP peer SID and the connection type information corresponding to the BGP peer SID, a SID list including the BGP peer SID, where the SID list indicates the packet forwarding path.

S206: The controller sends the SID list to a head node of the packet forwarding path.

For ease of description, the BGP route mentioned in S201 is referred to as a "BGP route 1".

After receiving the BGP peer SID and the connection type information corresponding to the BGP peer SID that are sent by the first communication apparatus, the controller may calculate the packet forwarding path based on a plurality of received BGP routes (including the BGP route 1) and the connection type information of the BGP route 1, and obtain the SID list indicating the packet forwarding path.

If the first communication apparatus does not send the additional information to the controller, when calculating the packet forwarding path based on the BGP route 1, the controller may perform calculation based on the connection type information corresponding to the BGP peer SID.

If the first communication apparatus further sends the additional information to the controller, the controller may associate the BGP route 1 with the BGP peer SID based on the additional information. In addition, when calculating the packet forwarding path based on the BGP route 1, the controller may perform calculation based on the connection type information corresponding to the BGP peer SID. When calculating the packet forwarding path, if the packet forwarding path includes a packet forwarding path that is indicated by the BGP route 1 and that is from the first communication apparatus to the third communication apparatus, the controller may associate the BGP route 1 with the BGP peer SID based on the additional information, to obtain the SID list including the BGP peer SID 1.

After calculating the SID list indicating the packet forwarding path, the controller may forward the SID list to the head node of the packet forwarding path, so that the head node encapsulates and forwards the packet based on the SID list.

It can be learned from the foregoing description that, according to the method 200, the controller may calculate the packet forwarding path based on the connection type information corresponding to the BGP peer SID, that is, based on a type of a connection between communication apparatuses. Therefore, according to this solution, the packet forwarding path calculated by the controller can better meet a requirement of a specific service on quality of service.

In some scenarios, a plurality of BGP sessions may be established between two communication apparatuses. For example, refer to FIG. 6a for understanding. FIG. 6a is a schematic diagram of an example application scenario according to an embodiment of this application. As shown in FIG. 6a, two BGP sessions are established between a communication apparatus R1 and a communication apparatus R2, and respectively correspond to an uplink and a downlink shown in FIG. 6a. The uplink may also be referred to as a first link, and the downlink is referred to as a second link. "Up" and "Down" are only for distinguishing different links, and do not indicate a location relationship of the two links. The communication apparatus R2 may separately advertise routes to the communication apparatus R1 by using the two sessions (that is, the uplink and the downlink). In an example, a network through which the route advertised by the communication apparatus R2 by using the uplink passes and a network through which the route advertised by the communication apparatus R2 by using the downlink passes can provide different quality of service.

In an example, the communication apparatus R1 may be configured with a BGP EPE function. Therefore, the communication apparatus R1 may separately allocate BGP peer SIDs to the two BGP sessions, and separately report the BGP peer SIDs corresponding to the two BGP sessions to the controller by using NLRIs. For example, a BGP peer SID corresponding to a first BGP session corresponding to the uplink is reported to the controller by using a first NLRI, and a BGP peer SID corresponding to a second BGP session corresponding to the downlink is reported to the controller by using a second NLRI. In addition, after receiving the routes advertised by the communication apparatus R2 by using the two BGP sessions, the communication apparatus R1 may further report the routes to the controller.

It can be learned from the foregoing description of the NLRI that a peer BGP identifier in an SRv6 BGP peer node SID TLV included in the first NLRI corresponds to the communication apparatus R2, and a peer BGP identifier in an SRv6 BGP peer node SID TLV included in the second NLRI also corresponds to the communication apparatus R2. Therefore, when calculating a packet forwarding path based on a BGP route, the controller cannot accurately use a route advertised by a specific BGP session to calculate a packet forwarding path. For a route advertised by the communication apparatus R2 to the communication apparatus R1, the controller can only determine, based on a peer BGP identifier, that the route is advertised by the communication apparatus R2, but cannot determine whether the route is advertised by the communication apparatus R2 by using the first BGP session or by the communication apparatus R2 by using the second BGP session. Correspondingly, when calculating the packet forwarding path, the controller cannot accurately adjust traffic to the uplink or the downlink for forwarding.

However, as described above, the network through which the route advertised by the communication apparatus R2 by using the uplink passes and the network through which the route advertised by the communication apparatus R2 by using the downlink passes can provide different quality of service. Therefore, it is particularly important that the controller can accurately select a route advertised by the communication apparatus R2 by using a specific BGP session to calculate the packet forwarding path.

In view of this, an embodiment of this application provides an information processing method. The following describes the method with reference to the accompanying drawings.

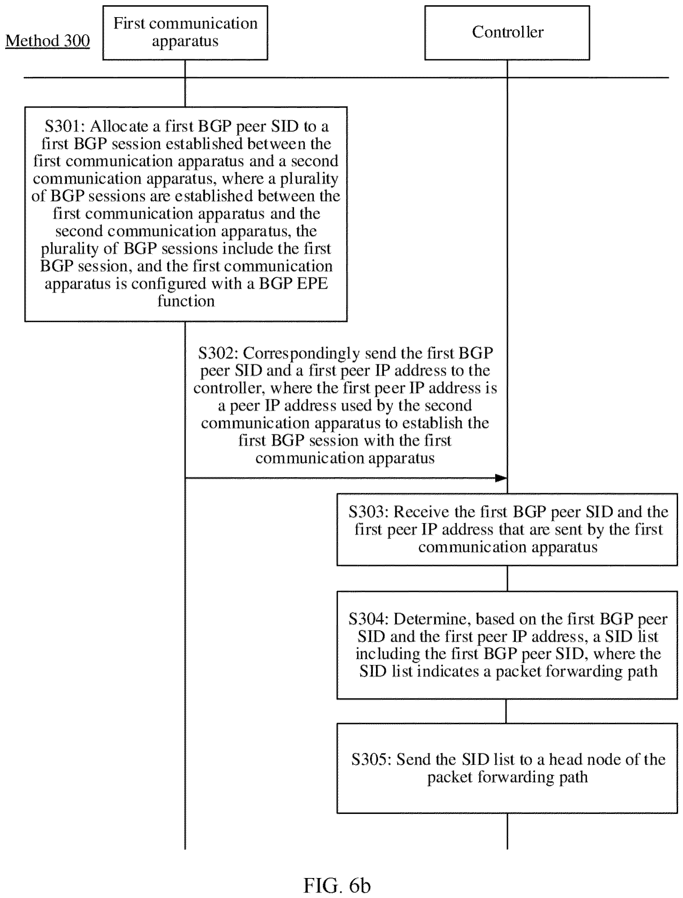

FIG. 6 is a signaling exchange diagram of an information processing method according to an embodiment of this application. The method 300 shown in FIG. 6 may include the following S301 to S304.

For a first communication apparatus and a second communication apparatus in the method 300 shown in FIG. 6, it should be noted that, in an example, the first communication apparatus may correspond to the communication apparatus R1 shown in FIG. 6a, and the second communication apparatus may correspond to the communication apparatus R2 shown in FIG. 6a. In this case, a BGP session established between the first communication apparatus and the second communication apparatus is an EBGP session. However, the BGP session established between the first communication apparatus and the second communication apparatus may alternatively be an IBGP session.

The method 300 may include, for example, the following S301 to S305.

S301: The first communication apparatus allocates a first BGP peer SID to a first BGP session established between the first communication apparatus and the second communication apparatus, where a plurality of BGP sessions are established between the first communication apparatus and the second communication apparatus, the plurality of BGP sessions include the first BGP session, and the first communication apparatus is configured with a BGP EPE function.

In this embodiment of this application, the plurality of BGP sessions are established between the first communication apparatus and the second communication apparatus. When the second communication apparatus establishes the plurality of BGP sessions with the first communication apparatus, peer IP addresses used by the second communication apparatus to establish the plurality of BGP sessions with the first communication apparatus are different from each other. In other words, assuming that the first BGP session and a second BGP session are two different sessions in the plurality of sessions, a peer IP address used by the second communication apparatus to establish the first BGP session with the first communication apparatus is different from a peer IP address used by the second communication apparatus to establish the second BGP session with the first communication apparatus. The second communication apparatus may create a first peer, and establish the first BGP session with the first communication apparatus by using the first peer. The first peer IP address may be an IP address of the first peer. Correspondingly, the second communication apparatus may create a second peer, and establish the second BGP session with the first communication apparatus by using the second peer. The second peer IP address may be an IP address of the second peer. As shown in FIG. 6a, the first peer IP address may correspond to peer IP1, and the second peer IP address may correspond to peer_IP2.

The second communication apparatus may advertise BGP routes to the first communication apparatus by using the plurality of sessions. When the second communication apparatus advertises a BGP route to the first communication apparatus by using the first BGP session, a next hop included in the BGP route is a peer IP address that is used by the second communication apparatus to establish the first BGP session with the first communication apparatus.

In an example, the first communication apparatus may allocate a first BGP peer SID to the first BGP session after the first BGP session is established.

The first BGP peer SID may be an SRv6 SID, or may be an MPLS label. The following uses an example in which the first BGP peer SID is an SRv6 SID for description.

S302: Send the first BGP peer SID and a first peer IP address to a controller, where the first peer IP address is a peer IP address used by the second communication apparatus to establish the first BGP session with the first communication apparatus.

In an example, in specific implementation of sending the first peer IP address to the controller, the first communication apparatus may send a first TLV to the controller, where the first TLV carries the first peer IP address. In an example, the first TLV may be carried in a control packet. In other words, in specific implementation of sending the first peer IP address to the controller, the first communication apparatus may send a control packet to the controller, where the control packet includes the first TLV for carrying the first peer IP address.

For the control packet, it should be noted that, the control packet may be a BGP LS protocol packet. In an example, the BGP LS protocol packet may be an NLRI. In addition to the first TLV, the NLRI may further include the first BGP peer SID.

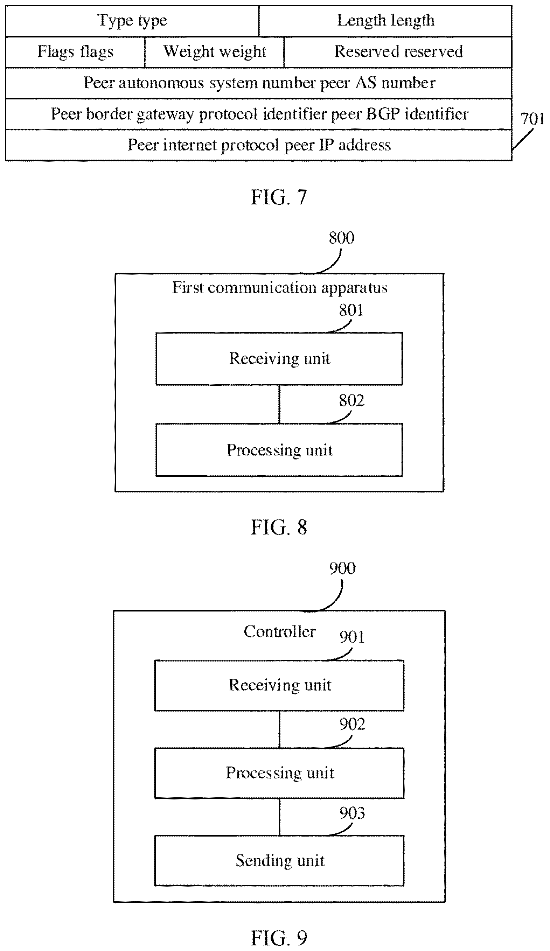

For the first TLV, it should be noted that:
In an example, the first TLV may be the SRv6 BGP peer node SID TLV mentioned above. For example, the SRv6 BGP peer node SID TLV may be extended, and a new field may be obtained through extension to carry the first peer IP address. Refer to FIG. 7 for understanding. FIG. 7 is a schematic diagram of a structure of another SRv6 BGP peer node SID TLV according to an embodiment of this application. With reference to FIG. 7 and FIG. 1b, it can be learned that an extension field 701 is added to the SRv6 BGP peer node SID TLV shown in FIG. 7. In an example, the field 701 may be for carrying the first peer IP address.

In another example, the first TLV may be another TLV different from the SRv6 BGP peer node SID TLV, for example, may be a newly extended TLV. In this case, the control packet includes both the SRv6 BGP peer node SID TLV and the first TLV.

S303: The controller receives the first BGP peer SID and the first peer IP address that are sent by the first communication apparatus.

S304: The controller determines, based on the first BGP peer SID and the first peer IP address, an SID list including the first BGP peer SID, where the SID list indicates a packet forwarding path.

S305: The controller sends the SID list to a head node of the packet forwarding path.

After receiving the first BGP peer SID and the first peer IP address that are sent by the first communication apparatus, the controller may associate the first BGP peer SID with a BGP route 1 based on the first peer IP address. The BGP route 1 mentioned herein is the BGP route advertised by the second communication apparatus to the first communication apparatus by using the first BGP session. Correspondingly, if the calculated packet forwarding path includes a path (to be specific, when the packet reaches the first communication apparatus, a next hop is the first peer IP address) associated with the first BGP session, the controller may obtain the SID list including the first BGP peer SID.

After calculating the SID list indicating the packet forwarding path, the controller may forward the SID list to the head node of the packet forwarding path, so that the head node encapsulates and forwards the packet based on the SID list. In an example:
After receiving the SID list, the head node may obtain the packet including the SID list. For example, the head node may obtain, based on service data and the SID list, the packet including the SID list. For example, if the packet is an SRv6 packet, the SID list is carried in an SRH of the packet, and the service data is used as a payload of the SRv6 packet. After obtaining the packet, the head node may forward the packet. After receiving the packet sent by the head node, the first communication apparatus may parse the packet to obtain the first BGP peer SID in the packet. Then, the first communication apparatus may send the packet to the second communication apparatus based on an outbound interface corresponding to the first BGP peer SID.

It can be learned from the foregoing description that, according to the method 300, when there are a plurality of BGP sessions between the first communication apparatus and the second communication apparatus, when reporting, to the controller, the first BGP peer SID allocated to the first BGP session, the first communication apparatus further reports the first peer IP address to the controller. In this way, when calculating the packet forwarding path, the controller may associate, by using the first peer IP address, the first BGP peer SID with the BGP route advertised by the second communication apparatus by using the first BGP session, so that the calculated packet forwarding path can be specifically associated with the first BGP session.

Because there may be a plurality of types of connections between communication apparatuses, different connection types can provide different quality of service. Therefore, if the controller can calculate the packet forwarding path with reference to a type of a connection between communication apparatuses, the calculated packet forwarding path can better meet a requirement of a specific service on quality of service. In view of this, in an example, the first communication apparatus may send connection type information corresponding to the first BGP peer SID to the controller.

The connection type information corresponding to the first BGP peer SID may indicate a connection type of a BGP session between the first communication apparatus and the second communication apparatus.

The connection type indicated by the connection type information may include any one of the following:
a private connection via a network access point, a private connection via a direct link, a local connection via an internet exchange point, a remote connection via an internet exchange point, a private connection via an internet exchange point, or a public connection via an internet exchange point.

For explanations and descriptions of various connection types, refer to the related description part in the method 100. Details are not described herein again.

In an example, in specific implementation of sending the connection type information corresponding to the first BGP peer SID to the controller, the first communication apparatus may send a second TLV to the controller, where the second TLV carries the connection type information corresponding to the first BGP peer SID. In an example, the second TLV may be carried in a control packet. In other words, in specific implementation of sending the connection type information corresponding to the first BGP peer SID to the controller, the first communication apparatus may send a control packet to the controller, where the control packet includes the first TLV for carrying the connection type information corresponding to the first BGP peer SID.

For the control packet, it should be noted that, the control packet may be a BGP LS protocol packet. In an example, the BGP LS protocol packet may be an NLRI. In addition to the second TLV, the NLRI may further include the first BGP peer SID.

For the second TLV, it should be noted that:
In an example, the second TLV may be an SRv6 BGP peer node SID TLV. In some embodiments, for a structure of the SRv6 BGP peer node SID TLV field, refer to FIG. 5a. The connection type information corresponding to the first BGP peer SID may be carried in an extension field 501 of the SRv6 BGP peer node SID TLV. In some other embodiments, the connection type information corresponding to the first BGP peer SID may be carried in a flags field of the SRv6 BGP peer node SID TLV.

In another example, the second TLV may be a peering type descriptors TLV. For a structure of the peering type descriptors TLV field, refer to FIG. 5b. The connection type information corresponding to the first BGP peer SID may be carried in a field 502 of the peering type descriptors TLV.

In an example, the first peer IP address and the connection type information corresponding to the first BGP peer SID may be carried in one control packet (for example, an NLRI) and sent to the controller. In this case:
In some embodiments, both the first peer IP address and the connection type information corresponding to the first BGP peer SID may be carried in an SRv6 BGP peer node SID TLV. For example, the SRv6 BGP peer node SID TLV includes two extension fields, one extension field is for carrying the first peer IP address, and the other extension field is for carrying the connection type information corresponding to the first BGP peer SID. For another example, the SRv6 BGP peer node SID TLV includes one extension field, the extension field is for carrying the first peer IP address, and the connection type information corresponding to the first BGP peer SID is carried in a flags field of the SRv6 BGP peer node SID TLV.

In some other embodiments, the first peer IP address is carried in the SRv6 BGP peer node SID TLV, and the connection type information corresponding to the first BGP peer SID is carried in a peering type descriptors TLV.

In some other embodiments, the first peer IP address is carried in a peering type descriptors TLV, and the connection type information corresponding to the first BGP peer SID is carried in the SRv6 BGP peer node SID TLV.

In still some other embodiments, the first peer IP address is carried in another newly extended TLV that is different from the SRv6 BGP peer node SID TLV, and the connection type information corresponding to the first BGP peer SID is carried in a peering type descriptors TLV.

It should be noted that the first BGP session is one of the plurality of BGP sessions established between the first communication apparatus and the second communication apparatus.

In an example, a manner in which the first communication apparatus processes a BGP peer SID allocated to another session is the same as a manner in which the first communication apparatus processes the first BGP peer SID. For example, for the second BGP session, the first communication apparatus may allocate a second BGP peer SID to the second BGP session, and correspondingly send the second BGP peer SID and a second peer IP address to the controller, where the second peer IP address is a peer IP address used by the second communication apparatus to establish the second BGP session with the first communication apparatus. Details are not described herein again.

In another example, the first communication apparatus may perform the foregoing method 300 for a part of the plurality of sessions. For example, for a session that can implement traffic optimization in the plurality of sessions, the foregoing method 300 is performed, so that the controller can accurately select a route advertised by the second communication apparatus by using the session, to calculate the packet forwarding path, thereby accurately adjusting a traffic forwarding path. For another session that cannot implement traffic optimization, the foregoing method 300 is not performed. For ease of description, "a set formed by one or more sessions for which the foregoing method 300 is not performed" is referred to as a "first session set". For sessions in the first session set, the controller may randomly select a route from routes advertised by the second communication apparatus to the first communication apparatus by using the sessions in the first session set, to calculate the packet forwarding path.

The following is an example:
Three BGP sessions are established between the first communication apparatus and the second communication apparatus. The method 300 is performed for a BGP session 1 in the three BGP sessions, and the method 300 is not performed for a BGP session 2 and a BGP session 3 in the three BGP sessions. However, a network through which a route advertised by the second communication apparatus by using the BGP session 1 passes can provide good quality of service. In other words, a packet forwarding path is calculated based on the route advertised by the second communication apparatus based on the BGP session 1, so that traffic optimization can be implemented. However, a free service does not have a strict requirement on quality of service. Therefore, when calculating a packet forwarding path for the free service, the controller may randomly select a route from routes advertised by the second communication apparatus by using the BGP session 2 and the BGP session 3, to calculate the packet forwarding path. Correspondingly, a paid service has a high requirement on quality of service. Therefore, when calculating a packet forwarding path for the paid service, the controller may calculate the packet forwarding path based on the route advertised by the second communication apparatus by using the BGP session 1.

It should be noted that, when no conflict occurs, related content in the method 100, the method 200, and the method 300 may be referenced in combination with each other.

An embodiment of this application further provides a first communication apparatus configured to perform the foregoing method 100. The first communication apparatus may include a transceiver unit and a processing unit. The transceiver unit is configured to perform a receiving-related operation and/or a sending-related operation performed by the first communication apparatus in the method 100. The processing unit is configured to perform an operation other than the receiving-related operation and/or sending-related operation performed by the first communication apparatus in the foregoing method 100. In specific implementation, the transceiver unit may include a receiving unit and/or a sending unit. The receiving unit is configured to perform the receiving-related operation, and the sending unit is configured to perform the sending-related operation.

In an example, FIG. 8 is a schematic diagram of a structure of a first communication apparatus according to an embodiment of this application. The first communication apparatus 800 shown in FIG. 8 may be configured to perform the foregoing method 100. The apparatus 800 may include:
a receiving unit 801 and a processing unit 802.

The receiving unit 801 is configured to obtain, by using a border gateway protocol BGP session established between a third communication apparatus and the first communication apparatus, a first BGP route advertised by a second communication apparatus, where the first BGP route includes a first routing prefix and a first next hop, the first next hop is the second communication apparatus, the first communication apparatus is configured with a border gateway protocol egress peer engineering BGP EPE function, the third communication apparatus is a first border gateway protocol peer BGP peer of the first communication apparatus, and no BGP session is established between the first communication apparatus and the second communication apparatus.

The processing unit 802 is configured to: allocate a first border gateway protocol peer segment identifier BGP peer SID based on the first BGP route; and store an association relationship between the first BGP peer SID and the first next hop.

In a possible implementation, the third communication apparatus is a route server, and the BGP session includes an external border gateway protocol EBGP session.

In a possible implementation, the third communication apparatus is a route reflector, and the BGP session includes an internal border gateway protocol IBGP session.

In a possible implementation, the sending unit is further configured to advertise the first BGP route, the first BGP peer SID, and first additional information to a controller, where the first additional information is for associating the first BGP route with the first BGP peer SID.

In a possible implementation, the first additional information includes the first next hop.

In a possible implementation, if the third communication apparatus is the route server, the first BGP route advertised by the second communication apparatus further includes autonomous system AS information, the AS information includes a first AS identifier, the first AS identifier is for identifying an AS to which the second communication apparatus belongs, and the first additional information includes the first AS identifier.

In a possible implementation, if the third communication apparatus is the route reflector, the first additional information includes an originator identifier (Originator ID).

In a possible implementation, the sending unit is configured to send a border gateway protocol link state BGP LS packet to the controller, where the BGP LS packet carries the first additional information.

In a possible implementation, the BGP LS packet includes a first type-length-value TLV, and the first TLV carries the first additional information.

In a possible implementation, the first TLV is a segment routing internet protocol version 6 border gateway protocol BGP peer node segment identifier SRv6 BGP peer node SID TLV.

In a possible implementation, a type field of the first TLV indicates that the first TLV carries the first additional information.

In a possible implementation, if the third communication apparatus is the route server, the first TLV is an internet exchange point remote member descriptors IXP remote member descriptors TLV.

In a possible implementation, if the third communication apparatus is the route server, the first TLV is a route reflector descriptors Route Reflector Descriptors TLV.

In a possible implementation, the receiving unit 801 is further configured to receive a packet, where the packet includes the first BGP peer SID. The processing unit 802 is further configured to determine, based on the association relationship between the first BGP peer SID and the first next hop, to forward the packet to the first next hop.

In a possible implementation, the sending unit included in the apparatus is further configured to advertise connection type information to the controller, where the connection type information indicates a type of a connection between the first communication apparatus and the second communication apparatus. In a possible implementation, the type of the connection includes any one of the following: a private connection via a network access point, a private connection via a direct link, a local connection via an internet exchange point, a remote connection via an internet exchange point, a private connection via an internet exchange point, or a public connection via an internet exchange point.

In a possible implementation, the connection type information is carried in a second TLV field that is advertised to the controller, where the second TLV is an SRv6 BGP peer node SID TLV, or a type field of the second TLV indicates that the second TLV is for carrying the connection type information.

In a possible implementation, the first BGP peer SID is an SRv6 SID.

In a possible implementation, the first communication apparatus includes any one of the following: a POP, an internet gateway IGW, a data center gateway, and a service provider edge PE device.

In a possible implementation, the receiving unit is further configured to obtain, by using the BGP session established between the third communication apparatus and the first communication apparatus, a second BGP route advertised by a fourth communication apparatus, where the second BGP route includes the first routing prefix and a second next hop, the second next hop is the fourth communication apparatus, and no BGP session is established between the first communication apparatus and the fourth communication apparatus. The processing unit is further configured to allocate a second border gateway protocol peer segment identifier BGP peer SID based on the second BGP route; and the processing unit is further configured to store an association relationship between the second BGP peer SID and the second next hop.

The second BGP route mentioned herein may correspond to the BGP route 2 in the method 100. The second routing prefix mentioned herein may correspond to the prefix 2 in the method 100. The second next hop mentioned herein may correspond to the next hop 2 in the method 100. The second BGP peer SID mentioned herein may correspond to the BGP peer SID 2 in the method 100.

In a possible implementation, the sending unit is further configured to advertise the second BGP route, the second BGP peer SID, and second additional information to the controller, where the second additional information is for associating the second BGP route with the second BGP peer SID.

The second additional information mentioned herein may correspond to the additional information 2 in the method 100.

In a possible implementation, the receiving unit is further configured to obtain, by using the BGP session established between the third communication apparatus and the first communication apparatus, a third BGP route advertised by a fifth communication apparatus, where the third BGP route includes the second routing prefix and a third next hop, the third next hop is the fifth communication apparatus, and no BGP session is established between the first communication apparatus and the fifth communication apparatus. The processing unit is further configured to allocate a third BGP peer SID based on the third BGP route; and the processing unit is further configured to store an association relationship between the third BGP peer SID and the third next hop.

The third BGP route mentioned herein may correspond to the BGP route 3 in the method 100. The third routing prefix mentioned herein may correspond to the prefix 3 in the method 100. The third next hop mentioned herein may correspond to the next hop 3 in the method 100. The third BGP peer SID mentioned herein may correspond to the BGP peer SID 3 in the method 100.

In a possible implementation, the sending unit is further configured to advertise the third BGP route, the third BGP peer SID, and third additional information to the controller, where the third additional information is for associating the third BGP route with the third BGP peer SID.

The third additional information mentioned herein may correspond to the additional information 3 in the method 100.

In a possible implementation, the first BGP peer SID is a BGP peer node SID.

In a possible implementation, the first BGP peer SID is a BGP peer adjacency SID.

In a possible implementation, the first BGP peer SID is a BGP peer set SID.

In a possible implementation, the receiving unit is further configured to obtain, by using the BGP session established between the third communication apparatus and the first communication apparatus, a fourth BGP route advertised by a sixth communication apparatus, where the fourth BGP route includes the first routing prefix and a fourth next hop, the fourth next hop is the sixth communication apparatus, and no BGP session is established between the first communication apparatus and the sixth communication apparatus. The processing unit is further configured to store an association relationship between the first BGP peer SID and the fourth next hop.

The fourth BGP route mentioned herein may correspond to the BGP route 4 in the method 100, and the fourth next hop mentioned herein may correspond to the next hop 4 in the method 100.

An embodiment of this application further provides a controller configured to perform the foregoing method 100. The controller may include a transceiver unit and a processing unit. The transceiver unit is configured to perform a receiving-related operation and/or a sending-related operation performed by the controller in the method 100. The processing unit is configured to perform an operation other than the receiving-related operation and/or sending-related operation performed by the controller in the foregoing method 100. In specific implementation, the transceiver unit may include a receiving unit and/or a sending unit. The receiving unit is configured to perform the receiving-related operation, and the sending unit is configured to perform the sending-related operation.

In an example, FIG. 9 is a schematic diagram of a structure of a controller 900 according to an embodiment of this application. The controller 900 is configured to perform steps performed by the controller mentioned in the foregoing description part of the method 100.

In an example, the controller 900 includes a receiving unit 901, a processing unit 902, and a sending unit 903.

The receiving unit 901 is configured to receive a first BGP peer SID, first additional information, and a first BGP route that are sent by a first communication apparatus, where the first BGP route includes a first routing prefix and a first next hop, the first additional information is for associating the first BGP route with the first BGP peer SID, no BGP session is established between the first communication apparatus and a second communication apparatus, and the first communication apparatus obtains, through a BGP session between the first communication apparatus and a third communication apparatus, the first BGP route advertised by the second communication apparatus.

The processing unit 902 is configured to determine, based on the first BGP route, the first additional information, and the first BGP peer SID, a first SID list including the first BGP peer SID, where the first SID list indicates a first packet forwarding path reaching the first routing prefix.

The sending unit 903 is configured to send the first SID list to a head node of the first packet forwarding path.

In a possible implementation, the processing unit 902 is configured to: determine, based on the first routing prefix of the first BGP route, the first packet forwarding path reaching the first routing prefix; and determine the first SID list based on the first additional information and the first packet forwarding path.

In a possible implementation, the third communication apparatus is a route server or a route reflector.

In a possible implementation, the additional information includes a next hop of the first BGP route.

In a possible implementation, if the third communication apparatus is the route server, the first BGP route advertised by the second communication apparatus further includes autonomous system AS information, the AS information includes a first AS identifier, the first AS identifier is for identifying an AS to which the second communication apparatus belongs, and the first additional information includes the first AS identifier.

In a possible implementation, if the third communication apparatus is the route reflector, the first additional information includes an originator identifier (Originator ID).

In a possible implementation, the receiving unit 901 is configured to receive a BGP LS protocol packet sent by the first communication apparatus, where the BGP LS protocol packet includes the first additional information.

In a possible implementation, the BGP LS packet includes a first type-length-value TLV, and the first TLV carries the first additional information.

In a possible implementation, the first TLV is a segment routing internet protocol version 6 border gateway protocol peer node segment identifier SRv6 BGP peer node SID TLV.

In a possible implementation, a type field of the first TLV indicates that the first TLV carries the first additional information.

In a possible implementation, if the third communication apparatus is the route server, the first TLV is an internet exchange point remote member descriptors IXP remote member descriptors TLV.

In a possible implementation, if the third communication apparatus is the route server, the first TLV is a route reflector descriptors Route Reflector Descriptors TLV.

In a possible implementation, the receiving unit 901 is further configured to receive connection type information advertised by the first communication apparatus, where the connection type information indicates a type of a connection between the first communication apparatus and the second communication apparatus.

In a possible implementation, the type of the connection includes any one of the following: a private connection via a network access point, a private connection via a direct link, a local connection via an internet exchange point, a remote connection via an internet exchange point, a private connection via an internet exchange point, or a public connection via an internet exchange point.

In a possible implementation, the connection type information is carried in a second TLV field that is advertised by the first communication apparatus to the controller, where the second TLV is an SRv6 BGP peer node SID TLV, or a type field of the second TLV indicates that the second TLV is for carrying the connection type information.

In a possible implementation, the BGP peer SID is an SRv6 SID.

In a possible implementation, the first communication apparatus includes any one of the following: a POP, an internet gateway IGW, a data center gateway, and a service provider edge PE device.

In a possible implementation, the receiving unit is further configured to receive a second BGP peer SID, second additional information, and a second BGP route that are sent by the first communication apparatus, where the second additional information is for associating the second BGP route with the second BGP peer SID, no BGP session is established between the first communication apparatus and a fourth communication apparatus. The first communication apparatus obtains, by using the BGP session established between the first communication apparatus and the third communication apparatus, the second BGP route advertised by the fourth communication apparatus. The second BGP route includes the first routing prefix and a second next hop, and the second next hop is the fourth communication apparatus. The processing unit is further configured to determine, based on the second BGP route, the second additional information, and the second BGP peer SID, a second SID list including the second BGP peer SID, where the second SID list indicates a second packet forwarding path reaching the first routing prefix. The sending unit is further configured to send the second SID list to a head node of the second packet forwarding path.

In a possible implementation, the receiving unit is further configured to receive a third BGP peer SID, third additional information, and a third BGP route that are sent by the first communication apparatus, where the third additional information is for associating the third BGP route with the third BGP peer SID, the third BGP route is a BGP route that is advertised by a fifth communication apparatus and that is obtained by the first communication apparatus by using the BGP session established between the first communication apparatus and the third communication apparatus, no BGP session is established between the first communication apparatus and the fifth communication apparatus, the third BGP route includes a second routing prefix and a third next hop, and the third next hop is the fifth communication apparatus. The processing unit is further configured to determine, based on the third BGP route, the third additional information, and the third BGP peer SID, a third SID list including the third BGP peer SID, where the third SID list indicates a third packet forwarding path reaching the second routing prefix. The sending unit is further configured to send the third SID list to a head node of the third packet forwarding path.

In a possible implementation, the first BGP peer SID is a BGP peer node SID.

In a possible implementation, the first BGP peer SID is a BGP peer adjacency SID.

In a possible implementation, the first BGP peer SID is a BGP peer set SID.

For specific implementation of the first communication apparatus 800 and the controller 900, refer to the foregoing related description part of the method 100. Details are not described herein again.

An embodiment of this application further provides a first communication apparatus configured to perform the foregoing method 200. The first communication apparatus may include a transceiver unit and a processing unit. The transceiver unit is configured to perform a receiving-related operation and/or a sending-related operation performed by the first communication apparatus in the method 200. The processing unit is configured to perform an operation other than the receiving-related operation and/or sending-related operation performed by the first communication apparatus in the foregoing method 200. In specific implementation, the transceiver unit may include a receiving unit and/or a sending unit. The receiving unit is configured to perform the receiving-related operation, and the sending unit is configured to perform the sending-related operation.

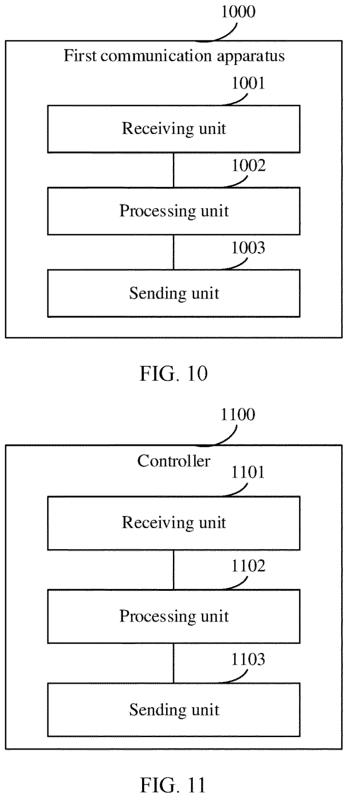

In an example, FIG. 10 is a schematic diagram of a structure of a first communication apparatus according to an embodiment of this application. The first communication apparatus 1000 shown in FIG. 10 is configured with a border gateway protocol egress peer engineering BGP EPE. The apparatus 1000 is configured to perform the method performed by the first communication apparatus in the foregoing method 200.

In an example, the first communication apparatus 1000 includes a receiving unit 1001, a processing unit 1002, and a sending unit 1003.

The receiving unit 1001 is configured to receive a BGP route sent by a second communication apparatus, where a border gateway protocol BGP session is established between the first communication apparatus and the second communication apparatus, and the BGP route includes a routing prefix and a next hop.

The processing unit 1002 is configured to allocate a border gateway protocol BGP peer SID based on the BGP route.

The sending unit 1003 is configured to send the BGP peer SID and connection type information corresponding to the BGP peer SID to a controller, where the connection type information indicates a type of a connection between the first communication apparatus and the next hop of the BGP route.

In a possible implementation, the type of the connection includes any one of the following: a private connection via a network access point, a private connection via a direct link, a local connection via an internet exchange point, a remote connection via an internet exchange point, a private connection via an internet exchange point, or a public connection via an internet exchange point.

In a possible implementation, the sending unit 1003 is configured to send a BGP LS protocol packet to the controller, where the BGP LS protocol packet includes the connection type information.

In a possible implementation, the BGP LS protocol packet may include a first TLV, and the first TLV includes the connection type information corresponding to the BGP peer SID.

In a possible implementation, the first TLV is a segment routing internet protocol version 6 border gateway protocol peer node segment identifier SRv6 BGP peer node SID TLV.

In a possible implementation, the connection type information is carried in a flags (flag) field of the first TLV.

In a possible implementation, the connection type information is carried in an extension field of the first TLV.

In a possible implementation, a type field of the first TLV indicates that the first TLV carries the connection type information.

In a possible implementation, the first TLV is a peering type descriptors (Peering Type Descriptors) TLV. In a possible implementation, the second communication apparatus is a BGP route server or a BGP route reflector. The receiving unit 1001 is configured to: receive, by using the BGP session, the BGP route that is sent by the second communication apparatus and advertised by a third communication apparatus, where the BGP route includes a prefix and a next hop, the next hop is the third communication apparatus, the first communication apparatus is configured with a border gateway protocol egress peer engineering BGP EPE, and no BGP session is established between the first communication apparatus and the third communication apparatus.

In a possible implementation, the next hop is the second communication apparatus.

In a possible implementation, the sending unit 1003 is further configured to send the BGP route and additional information to the controller, where the additional information is for associating the BGP peer SID with the BGP route.

In a possible implementation, the additional information includes the next hop.

In a possible implementation, if the second communication apparatus is the route server, the BGP route further includes autonomous system AS information, the AS information includes a first AS identifier, the first AS identifier is for identifying an AS to which the third communication apparatus belongs, and the additional information includes the first AS identifier.

In a possible implementation, if the second communication apparatus is the route reflector, the additional information includes an originator identifier (Originator ID).

In a possible implementation, the sending unit 1003 is configured to send a second TLV to the controller, where the second TLV carries the additional information.

In a possible implementation, the second TLV is carried in a BGP LS protocol packet.

In a possible implementation, the second TLV is an SRv6 BGP peer node SID TLV

In a possible implementation, the second TLV may be a newly extended TLV, and a type field of the second TLV indicates that the second TLV carries the additional information.

In a possible implementation, if the second communication apparatus is a route server, the second TLV is an IXP remote member descriptors TLV.

In a possible implementation, if the second communication apparatus is a route reflector, the second TLV is a route reflector descriptors TLV.

In a possible implementation, the BGP peer SID is an SRv6 SID.

An embodiment of this application further provides a controller configured to perform the foregoing method 200. The controller may include a transceiver unit and a processing unit. The transceiver unit is configured to perform a receiving-related operation and/or a sending-related operation performed by the controller in the method 200. The processing unit is configured to perform an operation other than the receiving-related operation and/or sending-related operation performed by the controller in the foregoing method 200. In specific implementation, the transceiver unit may include a receiving unit and/or a sending unit. The receiving unit is configured to perform the receiving-related operation, and the sending unit is configured to perform the sending-related operation.

In an example, FIG. 11 is a schematic diagram of a structure of a controller according to an embodiment of this application. The controller 1100 shown in FIG. 11 includes a receiving unit 1101, a processing unit 1102, and a sending unit 1103.

The receiving unit 1101 is configured to receive a BGP route, a BGP peer SID, and connection type information corresponding to the BGP peer SID that are sent by a first communication apparatus, where the BGP route includes a routing prefix and a next hop, the connection type information indicates a type of a connection between the first communication apparatus and the next hop, and the first communication apparatus is configured with a border gateway protocol egress peer engineering BGP EPE function.

The processing unit 1102 is configured to determine, based on the BGP peer SID and the connection type information corresponding to the BGP peer SID, a SID list including the BGP peer SID, where the SID list indicates a packet forwarding path reaching the routing prefix.

The sending unit 1103 is configured to send the SID list to a head node of the packet forwarding path.

In a possible implementation, the type of the connection includes any one of the following: a private connection via a network access point, a private connection via a direct link, a local connection via an internet exchange point, a remote connection via an internet exchange point, a private connection via an internet exchange point, or a public connection via an internet exchange point.

In a possible implementation, the receiving unit 1101 is configured to receive a BGP LS protocol packet sent by the first communication apparatus, where the BGP LS protocol packet includes the connection type information.

In a possible implementation, the BGP LS protocol packet includes a first TLV, and the first TLV includes the connection type information corresponding to the BGP peer SID.

In a possible implementation, the first TLV is a segment routing internet protocol version 6 border gateway protocol peer node segment identifier SRv6 BGP peer node SID TLV.

In a possible implementation, the connection type information is carried in a flags (flag) field of the first TLV.

In a possible implementation, the connection type information is carried in an extension field of the first TLV.

In a possible implementation, a type field of the first TLV indicates that the first TLV carries the connection type information.

In a possible implementation, the first TLV is a peering type descriptors (Peering Type Descriptors) TLV.

In a possible implementation, the receiving unit 1101 is further configured to receive the BGP route and additional information that are sent by the first communication apparatus, where the additional information is for associating the BGP peer SID with the BGP route. The BGP route is a BGP route that is received by the first communication apparatus by using the second communication apparatus and that is advertised by a third communication apparatus, the BGP route includes the prefix and the next hop, the next hop is the third communication apparatus, and no BGP session is established between the first communication apparatus and the third communication apparatus.

In a possible implementation, the additional information includes the next hop.

In a possible implementation, if the second communication apparatus is the route server, the BGP route further includes autonomous system AS information, the AS information includes a first AS identifier, the first AS identifier is for identifying an AS to which the third communication apparatus belongs, and the additional information includes the first AS identifier.

In a possible implementation, if the second communication apparatus is the route reflector, the additional information includes an originator identifier (Originator ID).

In a possible implementation, the receiving unit 1101 is configured to receive a second TLV sent by the first communication apparatus, where the second TLV carries the additional information.

In a possible implementation, the second TLV is carried in a BGP LS protocol packet.

In a possible implementation, the second TLV is an SRv6 BGP peer node SID TLV.

In a possible implementation, a type field of the second TLV indicates that the second TLV carries the additional information.

In a possible implementation, if the second communication apparatus is a route server, the second TLV is an IXP remote member descriptors TLV.

In a possible implementation, if the second communication apparatus is a route reflector, the second TLV is a route reflector descriptors TLV.

In a possible implementation, the BGP peer SID is an SRv6 SID.

For specific implementation of the first communication apparatus 1000 and the controller 1100, refer to the foregoing related description part of the method 200. Details are not described herein again.

An embodiment of this application further provides a first communication apparatus configured to perform the foregoing method 300. The first communication apparatus may include a transceiver unit and a processing unit. The transceiver unit is configured to perform a receiving-related operation and/or a sending-related operation performed by the first communication apparatus in the method 300. The processing unit is configured to perform an operation other than the receiving-related operation and/or sending-related operation performed by the first communication apparatus in the foregoing method 300. In specific implementation, the transceiver unit may include a receiving unit and/or a sending unit. The receiving unit is configured to perform the receiving-related operation, and the sending unit is configured to perform the sending-related operation.

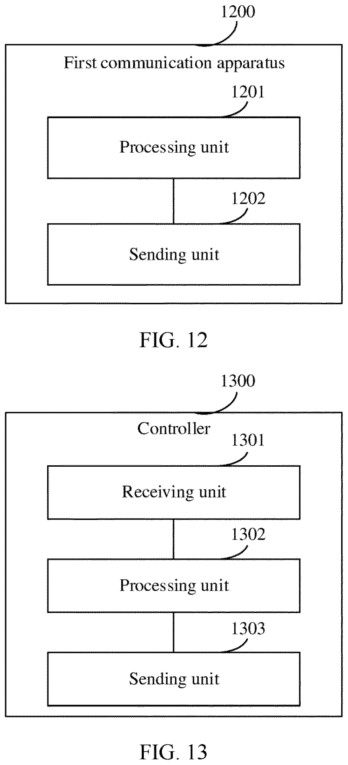

In an example, FIG. 12 is a schematic diagram of a structure of a first communication apparatus according to an embodiment of this application. The first communication apparatus 1200 shown in FIG. 12 is configured with a border gateway protocol egress peer engineering BGP EPE. The apparatus 1200 is configured to perform the method performed by the first communication apparatus in the foregoing method 300.

In an example, the apparatus 1200 may include a processing unit 1201 and a sending unit 1202.

The processing unit 1201 is configured to allocate a first border gateway protocol BGP peer (peer) segment identifier SID to a first BGP session established between the first communication apparatus and a second communication apparatus, where a plurality of BGP sessions are established between the first communication apparatus and the second communication apparatus, and the plurality of BGP sessions include the first BGP session.

The sending unit 1202 is configured to correspondingly send the first BGP peer SID and a first peer internet protocol peer IP address to a controller, where the first peer IP address is a peer IP address used by the second communication apparatus to establish the first BGP session with the first communication apparatus.

In a possible implementation, the sending unit 1202 is configured to send a control packet to the controller, where the control packet includes a first TLV, and the first TLV includes the first peer IP address.

In a possible implementation, the first TLV is a segment routing internet protocol version 6 border gateway protocol peer node segment identifier SRv6 BGP peer node SID TLV.

In a possible implementation, the first peer IP address is carried in an extension field of the SRv6 BGP peer node SID TLV.

In a possible implementation, the control packet is a BGP LS protocol packet.

In a possible implementation, the apparatus further includes: a receiving unit, configured to receive a packet, where the packet includes the first BGP peer SID. The sending unit 1202 is further configured to forward the packet based on an outbound interface corresponding to the first BGP peer SID.

In a possible implementation, the sending unit 1202 is further configured to send connection type information corresponding to the first BGP peer SID to the controller, where the connection type information corresponding to the first BGP peer SID indicates a type corresponding to the first BGP session.

In a possible implementation, the sending unit 1202 is configured to send a second TLV to the controller, where the second TLV is for carrying the connection type information.

In a possible implementation, the second TLV is carried in a border gateway protocol link state BGP LS protocol packet.

In a possible implementation, the second TLV is an SRv6 BGP peer node SID TLV.

In a possible implementation, the connection type information is carried in a flags (flag) field of the second TLV.

In a possible implementation, the connection type information is carried in an extension field of the second TLV.

In a possible implementation, a type field of the second TLV indicates that the second TLV carries the connection type information.

In a possible implementation, the second TLV is a peering type descriptors TLV.

In a possible implementation, the processing unit 1201 is further configured to allocate a second BGP peer SID to a second BGP session, where the plurality of BGP sessions include the second BGP session. The sending unit 1202 is further configured to correspondingly send the second BGP peer SID and a second peer IP address to the controller, where the second peer IP address is a peer IP address used by the second communication apparatus to establish the second BGP session with the first communication apparatus.

In a possible implementation, the first BGP peer SID is an SRv6 SID.

An embodiment of this application further provides a controller configured to perform the foregoing method 300. The controller may include a transceiver unit and a processing unit. The transceiver unit is configured to perform a receiving-related operation and/or a sending-related operation performed by the controller in the method 300. The processing unit is configured to perform an operation other than the receiving-related operation and/or sending-related operation performed by the controller in the foregoing method 300. In specific implementation, the transceiver unit may include a receiving unit and/or a sending unit. The receiving unit is configured to perform the receiving-related operation, and the sending unit is configured to perform the sending-related operation.

In an example, FIG. 13 is a schematic diagram of a structure of a controller according to an embodiment of this application. The controller 1300 shown in FIG. 13 may be configured to perform the method performed by the controller in the foregoing method 300.

In an example, the controller 1300 includes a receiving unit 1301, a processing unit 1302, and a sending unit 1303.

The receiving unit 1301 is configured to receive a first BGP peer SID and a first peer IP address that are sent by a first communication apparatus, where the first BGP peer SID is a BGP peer SID allocated by the first communication apparatus to a first BGP session established between the first communication apparatus and a second communication apparatus, a plurality of BGP sessions are established between the first communication apparatus and the second communication apparatus, and the plurality of BGP sessions include the first BGP session.

The processing unit 1302 is configured to determine, based on the first BGP peer SID and the first peer IP address, a SID list including the first BGP peer SID, where the SID list indicates a packet forwarding path.

The sending unit 1303 is configured to send the SID list to a head node of the packet forwarding path.

In a possible implementation, the receiving unit 1301 is configured to receive a control packet sent by the first communication apparatus, where the control packet includes a first TLV, and the first TLV includes the first peer IP address.

In a possible implementation, the first TLV is a segment routing internet protocol version 6 border gateway protocol peer node segment identifier SRv6 BGP peer node SID TLV.

In a possible implementation, the first peer IP address is carried in an extension field of the SRv6 BGP peer node SID TLV.

In a possible implementation, the control packet is a BGP LS protocol packet.

In a possible implementation, the receiving unit 1301 is further configured to receive connection type information that corresponds to the first BGP peer SID and that is sent by the first communication apparatus, where the connection type information corresponding to the first BGP peer SID indicates a type corresponding to the first BGP session.

In a possible implementation, the receiving unit 1301 is configured to receive a second TLV sent by the first communication apparatus, where the second TLV is for carrying the connection type information.

In a possible implementation, the second TLV is carried in a border gateway protocol link state BGP LS protocol packet.

In a possible implementation, the second TLV is an SRv6 BGP peer node SID TLV.

In a possible implementation, the connection type information is carried in a flags (flag) field of the second TLV.

In a possible implementation, the connection type information is carried in an extension field of the second TLV.

In a possible implementation, a type field of the second TLV indicates that the second TLV carries the connection type information.

In a possible implementation, the second TLV is a peering type descriptors TLV.

In a possible implementation, the receiving unit 1301 is further configured to receive a second BGP peer SID and a second peer IP address that are sent by the first communication apparatus, where the second peer IP address is a peer IP address used by the second communication apparatus to establish a second BGP session with the first communication apparatus, and the second BGP peer SID is a BGP peer SID allocated by the first communication apparatus to the second BGP session.

In a possible implementation, the first BGP peer SID is an SRv6 SID.

For specific implementation of the apparatus 1200 and the apparatus 1300, refer to the foregoing related description part of the method 300. Details are not described herein again.

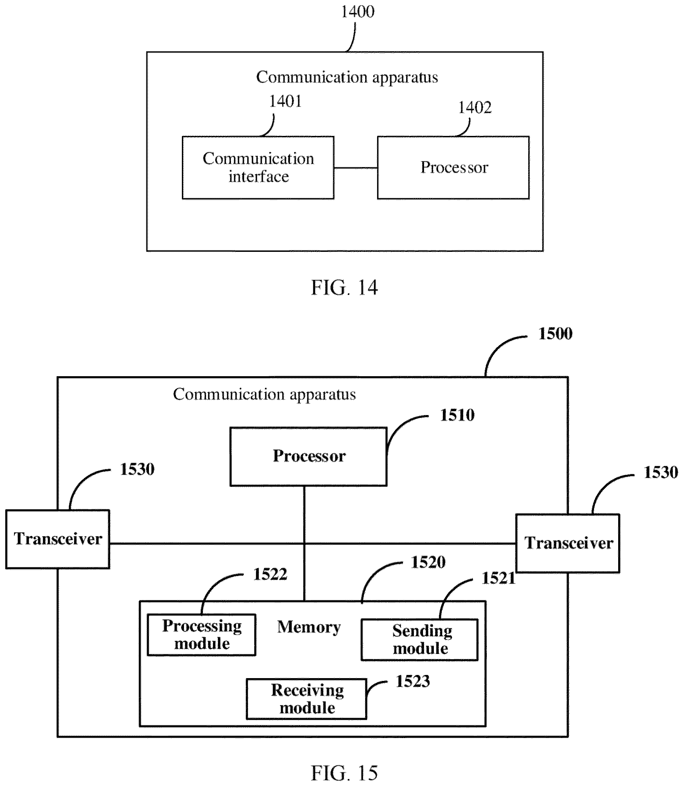

In addition, an embodiment of this application further provides a communication apparatus 1400. FIG. 14 is a schematic structural diagram of a communication apparatus according to an embodiment of this application. The communication apparatus 1400 includes a communication interface 1401 and a processor 1402 connected to the communication interface 1401. The communication apparatus 1400 may be configured to perform the method 100, the method 200, or the method 300 in the foregoing embodiment.

In an example, the communication apparatus 1400 may perform the method 100 in the foregoing embodiment. When the communication apparatus 1400 is configured to perform the method 100 in the foregoing embodiment, the communication apparatus 1400 is equivalent to the first communication apparatus in the method 100. The communication interface 1401 is configured to perform a receiving operation and a sending operation performed by the first communication apparatus in the method 100. The processor 1402 is configured to perform an operation other than the sending operation and the receiving operation performed by the first communication apparatus in the method 100. For example, the communication interface 1401 is configured to obtain, by using a border gateway protocol BGP session established between a third communication apparatus and the first communication apparatus, a first BGP route advertised by a second communication apparatus, where the first BGP route includes a first routing prefix and a first next hop, the first next hop is the second communication apparatus, the first communication apparatus is configured with a border gateway protocol egress peer engineering BGP EPE function, the third communication apparatus is a first border gateway protocol peer BGP peer of the first communication apparatus, and no BGP session is established between the first communication apparatus and the second communication apparatus. The processor 1402 is configured to: allocate a first BGP peer SID based on the first BGP route; and store a correspondence between the first BGP peer SID and the first next hop.

In an example, the communication apparatus 1400 may perform the method 100 in the foregoing embodiment. When the communication apparatus 1400 is configured to perform the method 100 in the foregoing embodiment, the communication apparatus 1400 is equivalent to the controller mentioned in the foregoing description of the method 100. The communication interface 1401 is configured to perform a receiving operation and a sending operation performed by the controller in the method 100. The processor 1402 is configured to perform an operation other than the sending operation and the receiving operation performed by the controller in the method 100. For example, the communication interface 1401 is configured to receive a first border gateway protocol BGP peer SID, first additional information, and a first BGP route advertised by a second communication apparatus that are sent by a first communication apparatus, where the first BGP route is advertised by the second communication apparatus and that is obtained by the first communication apparatus through a BGP session established between the first communication apparatus and a third communication apparatus, border gateway protocol BGP peer SID, and additional information, and the first additional information is for associating the first BGP route with the first BGP peer SID, where no BGP session is established between the first communication apparatus and the second communication apparatus, the first BGP route includes a first routing prefix and a first next hop, the first next hop is the second communication apparatus, the first communication apparatus is configured with a border gateway protocol egress peer engineering BGP EPE function, and no BGP session is established between the first communication apparatus and the second communication apparatus. The processor 1402 is configured to determine, based on the first BGP route, the first additional information, and the first BGP peer SID, a first SID list including the first BGP peer SID, where the first SID list indicates a first packet forwarding path reaching the first routing prefix. The communication interface 1401 is further configured to send the first SID list to a head node of the first packet forwarding path.

In an example, the communication apparatus 1400 may perform the method 200 in the foregoing embodiment. When the communication apparatus 1400 is configured to perform the method 200 in the foregoing embodiment, the communication apparatus 1400 is equivalent to the first communication apparatus in the method 200. The communication interface 1401 is configured to perform a receiving operation and a sending operation performed by the first communication apparatus in the method 200. The processor 1402 is configured to perform an operation other than the sending operation and the receiving operation performed by the first communication apparatus in the method 200. For example, the communication interface 1401 is configured to receive a BGP route sent by a second communication apparatus, where the BGP route includes a routing prefix and a next hop, and a BGP session is established between the first communication apparatus and the second communication apparatus. The processor 1402 is configured to allocate a BGP peer SID based on the BGP route. The communication interface 1401 is further configured to send the BGP peer SID and connection type information corresponding to the BGP peer SID to a controller, where the connection type information indicates a type of a connection between the first communication apparatus and the next hop of the BGP route.

In an example, the communication apparatus 1400 may perform the method 200 in the foregoing embodiment. When the communication apparatus 1400 is configured to perform the method 200 in the foregoing embodiment, the communication apparatus 1400 is equivalent to the controller in the method 200. The communication interface 1401 is configured to perform a receiving operation and a sending operation performed by the controller in the method 200. The processor 1402 is configured to perform an operation other than the sending operation and the receiving operation performed by the controller in the method 200. For example, the communication interface 1401 is configured to receive a BGP route, a BGP peer SID, and connection type information corresponding to the BGP peer SID that are sent by a first communication apparatus, where the BGP route includes a routing prefix and a next hop, the connection type information indicates a type of a connection between the first communication apparatus and the next hop of the BGP route, and the first communication apparatus is configured with a border gateway protocol egress peer engineering BGP EPE function. The processor 1402 is configured to determine, based on the BGP peer SID and the connection type information corresponding to the BGP peer SID, a SID list including the BGP peer SID, where the SID list indicates a packet forwarding path reaching the routing prefix. The communication interface 1401 is further configured to send the SID list to a head node of the packet forwarding path.

In an example, the communication apparatus 1400 may perform the method 300 in the foregoing embodiment. When the communication apparatus 1400 is configured to perform the method 300 in the foregoing embodiment, the communication apparatus 1400 is equivalent to the first communication apparatus in the method 300. The communication interface 1401 is configured to perform a receiving operation and a sending operation performed by the first communication apparatus in the method 300. The processor 1402 is configured to perform an operation other than the sending operation and the receiving operation performed by the first communication apparatus in the method 300. For example, the processor 1402 is configured to allocate a first BGP peer SID to a first BGP session established between the first communication apparatus and a second communication apparatus, where a plurality of BGP sessions are established between the first communication apparatus and the second communication apparatus, and the plurality of BGP sessions include the first BGP session. The communication interface 1401 is configured to send the first BGP peer SID and a first peer IP address to a controller, where the first peer IP address is a peer IP address used by the second communication apparatus to establish the first BGP session with the first communication apparatus.

In an example, the communication apparatus 1400 may perform the method 300 in the foregoing embodiment. When the communication apparatus 1400 is configured to perform the method 300 in the foregoing embodiment, the communication apparatus 1400 is equivalent to the controller in the method 300. The communication interface 1401 is configured to perform a receiving operation and a sending operation performed by the controller in the method 300. The processor 1402 is configured to perform an operation other than the sending operation and the receiving operation performed by the controller in the method 300. For example, the communication interface 1401 is configured to receive the first BGP peer SID and the first peer IP address that are sent by the first communication apparatus. The processor 1402 is configured to determine, based on the first BGP peer SID and the first peer IP address, a SID list including the first BGP peer SID, where the SID list indicates a packet forwarding path. The communication interface 1401 is further configured to send the SID list to a head node of the packet forwarding path.

In addition, an embodiment of this application further provides a communication apparatus 1500. FIG. 15 is a schematic structural diagram of a communication apparatus according to an embodiment of this application. The communication apparatus 1500 may be configured to perform the method 100, the method 200, or the method 300 in the foregoing embodiment.

As shown in FIG. 15, the communication apparatus 1500 may include a processor 1510, a memory 1520 coupled to the processor 1510, and a transceiver 1530. The transceiver 1530 may be, for example, a communication interface or an optical module. The processor 1510 may be a central processing unit (English: central processing unit, CPU for short), a network processor (English: network processor, NP for short), or a combination of a CPU and an NP. Alternatively, the processor may be an application-specific integrated circuit (English: application-specific integrated circuit, ASIC for short), a programmable logic device (English: programmable logic device, PLD for short), or a combination thereof. The PLD may be a complex programmable logic device (English: complex programmable logic device, CPLD for short), a field-programmable gate array (English: field-programmable gate array, FPGA for short), generic array logic (English: generic array logic, GAL for short), or any combination thereof. The processor 1510 may be one processor, or may include a plurality of processors. The memory 1520 may include a volatile memory (English: volatile memory), for example, a random access memory (English: random access memory, RAM for short). The memory may further include a non-volatile memory (English: non-volatile memory), for example, a read-only memory (English: read-only memory, ROM for short), a flash memory (English: flash memory), a hard disk drive (English: hard disk drive, HDD for short), or a solid-state drive (English: solid-state drive, SSD for short). The memory 1520 may further include a combination of the foregoing memories. The memory 1520 may be one memory, or may include a plurality of memories. In an implementation, the memory 1520 stores computer-readable instructions. The computer-readable instructions include a plurality of software modules, for example, a sending module 1521, a processing module 1522, and a receiving module 1523. After executing each software module, the processor 1510 may perform a corresponding operation as indicated by each software module. In this embodiment, an operation performed by a software module is actually the operation performed by the processor 1510 based on the indication of the software module.

In an example, the communication apparatus 1500 may perform the method 100 in the foregoing embodiment. When the communication apparatus 1500 is configured to perform the method 100 in the foregoing embodiment, the communication apparatus 1500 is equivalent to the first communication apparatus in the method 100. The transceiver 1530 is configured to perform a receiving operation and a sending operation performed by the first communication apparatus in the method 100. The processor 1510 is configured to perform an operation other than the sending operation and the receiving operation performed by the first communication apparatus in the method 100. For example, the transceiver 1530 is configured to obtain, by using the third communication apparatus through a border gateway protocol BGP session established between a third communication apparatus and the first communication apparatus, a first BGP route advertised by a second communication apparatus, where the first BGP route includes a first routing prefix and a first next hop, the first next hop is the second communication apparatus, the first communication apparatus is configured with a border gateway protocol egress peer engineering BGP EPE function, the third communication apparatus is a first border gateway protocol peer BGP peer of the first communication apparatus, and no BGP session is established between the first communication apparatus and the second communication apparatus. The processor 1510 is configured to: allocate a first BGP peer SID based on the first BGP route; and store a correspondence between the first BGP peer SID and the first next hop.

In an example, the communication apparatus 1500 may perform the method 100 in the foregoing embodiment. When the communication apparatus 1500 is configured to perform the method 100 in the foregoing embodiment, the communication apparatus 1500 is equivalent to the controller mentioned in the foregoing description of the method 100. The transceiver 1530 is configured to perform a receiving operation and a sending operation performed by the controller in the method 100. The processor 1510 is configured to perform an operation other than the sending operation and the receiving operation performed by the controller in the method 100. For example, the transceiver 1530 is configured to receive a first border gateway protocol BGP peer SID, first additional information, and a first BGP route advertised by a second communication apparatus that are sent by a first communication apparatus, where the first BGP route is advertised by the second communication apparatus and that is obtained by the first communication apparatus through a BGP session established between the first communication apparatus and a third communication apparatus, border gateway protocol BGP peer SID, and additional information, and the first additional information is for associating the first BGP route with the first BGP peer SID, where no BGP session is established between the first communication apparatus and the second communication apparatus, the first BGP route includes a first routing prefix and a first next hop, the first next hop is the second communication apparatus, the first communication apparatus is configured with a border gateway protocol egress peer engineering BGP EPE function, and no BGP session is established between the first communication apparatus and the second communication apparatus. The processor 1510 is configured to determine, based on the first BGP route, the first additional information, and the first BGP peer SID, a first SID list including the first BGP peer SID, where the first SID list indicates a first packet forwarding path reaching the first routing prefix. The transceiver 1530 is further configured to send the first SID list to a head node of the first packet forwarding path.

In an example, the communication apparatus 1500 may perform the method 200 in the foregoing embodiment. When the communication apparatus 1500 is configured to perform the method 200 in the foregoing embodiment, the communication apparatus 1500 is equivalent to the first communication apparatus in the method 200. The transceiver 1530 is configured to perform a receiving operation and a sending operation performed by the first communication apparatus in the method 200. The processor 1510 is configured to perform an operation other than the sending operation and the receiving operation performed by the first communication apparatus in the method 200. For example, the transceiver 1530 is configured to receive a BGP route sent by a second communication apparatus, where the BGP route includes a routing prefix and a next hop, and a BGP session is established between the first communication apparatus and the second communication apparatus. The processor 1510 is configured to allocate a BGP peer SID based on the BGP route. The transceiver 1530 is further configured to send the BGP peer SID and connection type information corresponding to the BGP peer SID to a controller, where the connection type information indicates a type of a connection between the first communication apparatus and the next hop of the BGP route.

In an example, the communication apparatus 1500 may perform the method 200 in the foregoing embodiment. When the communication apparatus 1500 is configured to perform the method 200 in the foregoing embodiment, the communication apparatus 1500 is equivalent to the controller in the method 200. The transceiver 1530 is configured to perform a receiving operation and a sending operation performed by the controller in the method 200. The processor 1510 is configured to perform an operation other than the sending operation and the receiving operation performed by the controller in the method 200. For example, the transceiver 1530 is configured to receive a BGP route, a BGP peer SID, and connection type information corresponding to the BGP peer SID that are sent by a first communication apparatus, where the BGP route includes a routing prefix and a next hop, the connection type information indicates a type of a connection between the first communication apparatus and the next hop of the BGP route, and the first communication apparatus is configured with a border gateway protocol egress peer engineering BGP EPE function. The processor 1510 is configured to determine, based on the BGP peer SID and the connection type information corresponding to the BGP peer SID, a SID list including the BGP peer SID, where the SID list indicates a packet forwarding path reaching the routing prefix. The transceiver 1530 is further configured to send the SID list to a head node of the packet forwarding path.

In an example, the communication apparatus 1500 may perform the method 300 in the foregoing embodiment. When the communication apparatus 1500 is configured to perform the method 300 in the foregoing embodiment, the communication apparatus 1500 is equivalent to the first communication apparatus in the method 300. The transceiver 1530 is configured to perform a receiving operation and a sending operation performed by the first communication apparatus in the method 300. The processor 1510 is configured to perform an operation other than the receiving operation and the sending operation performed by the first communication apparatus in the method 300. For example, the processor 1510 is configured to allocate a first BGP peer SID to a first BGP session established between the first communication apparatus and a second communication apparatus, where a plurality of BGP sessions are established between the first communication apparatus and the second communication apparatus, and the plurality of BGP sessions include the first BGP session. The transceiver 1530 is configured to send the first BGP peer SID and a first peer IP address to a controller, where the first peer IP address is a peer IP address used by the second communication apparatus to establish the first BGP session with the first communication apparatus.

In an example, the communication apparatus 1500 may perform the method 300 in the foregoing embodiment. When the communication apparatus 1500 is configured to perform the method 300 in the foregoing embodiment, the communication apparatus 1500 is equivalent to the controller in the method 300. The transceiver 1530 is configured to perform a receiving operation and a sending operation performed by the controller in the method 300. The processor 1510 is configured to perform an operation other than the sending operation and the receiving operation performed by the controller in the method 300. For example, the transceiver 1530 is configured to receive the first BGP peer SID and the first peer IP address that are sent by the first communication apparatus. The processor 1510 is configured to determine, based on the first BGP peer SID and the first peer IP address, a SID list including the first BGP peer SID, where the SID list indicates a packet forwarding path. The transceiver 1530 is further configured to send the SID list to a head node of the packet forwarding path.

This application further provides a computer-readable storage medium. The computer-readable storage medium stores instructions. When the instructions are run on a computer, the computer is enabled to perform any one or more operations in the method (for example, the method 100, the method 200, or the method 300) described in the foregoing embodiment.

This application further provides a computer program product, including a computer program. When the computer program is run on a computer, the computer is enabled to perform any one or more operations in the method (for example, the method 100, the method 200, or the method 300) described in the foregoing embodiment.

This application further provides a communication system, including the first communication apparatus and the controller mentioned in the method 100 in the foregoing embodiment.

This application further provides a communication system, including the first communication apparatus and the controller mentioned in the method 200 in the foregoing embodiment.

This application further provides a communication system, including the first communication apparatus and the controller mentioned in the method 200 in the foregoing embodiment.

This application further provides a communication system, including at least one memory and at least one processor. The at least one memory stores instructions, and the at least one processor executes the instructions, so that the communication system performs any one or more operations in the method (for example, the method 100, the method 200, or the method 300) in any one of the foregoing embodiments of this application.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiments are merely examples. For example, division into the units is merely logical service division. In actual implementation, there may be another division manner. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, service units in embodiments of this application may be integrated into one processing unit, or each unit may exist alone physically, or two or more units may be integrated into one unit. The integrated unit may be implemented in a form of hardware, or may be implemented in a form of a software service unit.

When the integrated unit is implemented in a form of a software service unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

Persons skilled in the art should be aware that in the foregoing one or more examples, services described in the present invention may be implemented by hardware, software, firmware, or any combination thereof. When implemented by software, these services may be stored in a computer-readable medium or transmitted as one or more instructions or code on the computer-readable medium. The computer-readable medium includes a computer storage medium and a communications medium, where the communications medium includes any medium that enables a computer program to be transmitted from one place to another. The storage medium may be any available medium accessible to a general-purpose or a dedicated computer.

The objectives, technical solutions, and beneficial effects of the present invention are further described in detail in the foregoing specific implementations. It should be understood that the foregoing is merely specific implementations of the present invention.

The foregoing embodiments are merely used to describe the technical solutions of this application, but not to limit the technical solutions. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. An information processing method, applied to a first communication apparatus, wherein the method comprises:
obtaining, by using a border gateway protocol BGP session established between a third communication apparatus and the first communication apparatus, a first BGP route advertised by a second communication apparatus, wherein the first BGP route comprises a first routing prefix and a first next hop, the first next hop is the second communication apparatus, the first communication apparatus is configured with a border gateway protocol egress peer engineering BGP EPE function, and no BGP session is established between the first communication apparatus and the second communication apparatus;
allocating a first border gateway protocol peer segment identifier BGP peer SID based on the first BGP route; and
storing an association relationship between the first BGP peer SID and the first next hop.

2. The method according to claim 1, wherein the third communication apparatus is a route server, and the BGP session established between the third communication apparatus and the first communication apparatus is an external border gateway protocol EBGP session.

3. The method according to claim 1, wherein the third communication apparatus is a route reflector, and the BGP session established between the third communication apparatus and the first communication apparatus is an internal border gateway protocol IBGP session.

4. The method according to any one of claims 1 to 3, wherein the method further comprises:
advertising the first BGP route, the first BGP peer SID, and first additional information to a controller, wherein the first additional information is for associating the first BGP route with the first BGP peer SID.

5. The method according to claim 4, wherein the first additional information comprises the first next hop.

6. The method according to claim 4 or 5, wherein the third communication apparatus is the route server, the first BGP route further comprises a first autonomous system AS identifier, the first AS identifier is for identifying an AS to which the second communication apparatus belongs, and the first additional information comprises the first AS identifier.

7. The method according to claim 4 or 5, wherein the third communication apparatus is the route reflector, the first BGP route further comprises an originator identifier (Originator ID), and the first additional information comprises the originator ID.

8. The method according to claim 4, wherein the advertising first additional information to a controller comprises:
sending a border gateway protocol link state BGP LS packet to the controller, wherein the BGP LS packet comprises the first additional information.

9. The method according to claim 8, wherein the BGP LS packet comprises a first type-length-value TLV, and the first TLV comprises the first additional information.

10. The method according to claim 9, wherein the first TLV is a segment routing internet protocol version 6 border gateway protocol peer node segment identifier SRv6 BGP peer node SID TLV.

11. The method according to claim 9, wherein a type field of the first TLV indicates that the first TLV comprises the first additional information.

12. The method according to any one of claims 1 to 11, wherein the method further comprises:
receiving a packet, wherein the packet comprises the first BGP peer SID; and
forwarding the packet to the first next hop based on the association relationship between the first BGP peer SID and the first next hop.

13. The method according to any one of claims 1 to 12, wherein the method further comprises:
advertising connection type information to the controller, wherein the connection type information indicates a type of a connection between the first communication apparatus and the second communication apparatus.

14. The method according to claim 13, wherein the type of the connection comprises any one of the following:
a private connection via a network access point, a private connection via a direct link, a local connection via an internet exchange point, a remote connection via an internet exchange point, a private connection via an internet exchange point, or a public connection via an internet exchange point.

15. The method according to claim 13 or 14, wherein
the connection type information is carried in a second TLV field advertised to the controller, wherein
the second TLV is an SRv6 BGP peer node SID TLV, or a type field of the second TLV indicates that the second TLV is for carrying the connection type information.

16. The method according to any one of claims 1 to 15, wherein the first BGP peer SID is an SRv6 SID.

17. The method according to any one of claims 1 to 16, wherein the first communication apparatus comprises any one of the following:
a point of presence POP, an internet gateway IGW, a data center gateway, and a service provider edge PE device.

18. The method according to any one of claims 1 to 17, wherein the method further comprises:
obtaining, by using the BGP session established between the third communication apparatus and the first communication apparatus, a second BGP route advertised by a fourth communication apparatus, wherein the second BGP route comprises the first routing prefix and a second next hop, the second next hop is the fourth communication apparatus, and no BGP session is established between the first communication apparatus and the fourth communication apparatus;
allocating a second BGP peer SID based on the second BGP route; and
storing an association relationship between the second BGP peer SID and the second next hop.

19. The method according to claim 18, wherein the method further comprises:
advertising the second BGP route, the second BGP peer SID, and second additional information to the controller, wherein the second additional information is for associating the second BGP route with the second BGP peer SID.

20. The method according to any one of claims 1 to 19, wherein the method further comprises:
obtaining, by using the BGP session established between the third communication apparatus and the first communication apparatus, a third BGP route advertised by a fifth communication apparatus, wherein the third BGP route comprises a second routing prefix and a third next hop, the third next hop is the fifth communication apparatus, and no BGP session is established between the first communication apparatus and the fifth communication apparatus;
allocating a third BGP peer SID based on the third BGP route; and
storing an association relationship between the third BGP peer SID and the third next hop.

21. The method according to claim 20, wherein the method further comprises:
advertising the third BGP route, the third BGP peer SID, and third additional information to the controller, wherein the third additional information is for associating the third BGP route with the third BGP peer SID.

22. The method according to any one of claims 1 to 21, wherein the first BGP peer SID is a BGP peer node SID.

23. The method according to any one of claims 1 to 9, wherein the first BGP peer SID is a BGP peer adjacency SID.

24. The method according to any one of claims 1 to 21, wherein the first BGP peer SID is a BGP peer set SID.

25. The method according to claim 24, wherein the method further comprises:
obtaining, by using the BGP session established between the third communication apparatus and the first communication apparatus, a fourth BGP route advertised by a sixth communication apparatus, wherein the fourth BGP route comprises the first routing prefix and a fourth next hop, the fourth next hop is the sixth communication apparatus, and no BGP session is established between the first communication apparatus and the sixth communication apparatus; and
storing an association relationship between the first BGP peer SID and the fourth next hop.

26. An information processing method, applied to a controller, wherein the method comprises:
receiving a first border gateway protocol BGP peer SID, first additional information, and a first BGP route that are sent by a first communication apparatus, wherein the first BGP route is advertised by a second communication apparatus and that is obtained by the first communication apparatus through a BGP session established between the first communication apparatus and a third communication apparatus, the first additional information is for associating the first BGP route with the first BGP peer SID, no BGP session is established between the first communication apparatus and the second communication apparatus, the first BGP route comprises a first routing prefix and a first next hop, the first next hop is the second communication apparatus, the first communication apparatus is configured with a border gateway protocol egress peer engineering BGP EPE function, and no BGP session is established between the first communication apparatus and the second communication apparatus;
determining, based on the first BGP route, the first additional information, and the first BGP peer SID, a first SID list comprising the first BGP peer SID, wherein the first SID list indicates a first packet forwarding path reaching the first routing prefix; and
sending the first SID list to a head node of the first packet forwarding path.

27. The method according to claim 26, wherein the determining, based on the first BGP route, the first additional information, and the first BGP peer SID, a first SID list comprising the first BGP peer SID comprises:
determining, based on the first routing prefix, the first packet forwarding path reaching the first routing prefix; and
determining the first SID list based on the first additional information and the first packet forwarding path.

28. The method according to claim 26 or 27, wherein the third communication apparatus is a route server or a route reflector.

29. The method according to any one of claims 26 to 28, wherein the first additional information comprises the first next hop.

30. The method according to any one of claims 26 to 29, wherein the third communication apparatus is the route server, the first BGP route further comprises a first autonomous system AS identifier, the first AS identifier is for identifying an AS to which the second communication apparatus belongs, and the first additional information comprises the first AS identifier.

31. The method according to any one of claims 26 to 28, wherein the third communication apparatus is the route reflector, the first BGP route comprises an originator identifier (Originator ID), and the first additional information comprises the originator ID.

32. The method according to any one of claims 26 to 31, wherein the receiving first additional information advertised by a first communication apparatus comprises:
receiving a border gateway protocol link state BGP LS packet sent by the first communication apparatus, wherein the BGP LS packet comprises the first additional information.

33. The method according to claim 32, wherein the BGP LS packet comprises a first type-length-value TLV, and the first TLV comprises the first additional information.

34. The method according to claim 32 or 33, wherein the first TLV is a segment routing internet protocol version 6 border gateway protocol peer node segment identifier SRv6 BGP peer node SID TLV.

35. The method according to claim 32 or 33, wherein a type field of the first TLV indicates that the first TLV comprises the first additional information.

36. The method according to any one of claims 26 to 35, wherein the method further comprises:
receiving connection type information advertised by the first communication apparatus, wherein the connection type information indicates a type of a connection between the first communication apparatus and the second communication apparatus.

37. The method according to claim 36, wherein the type of the connection comprises any one of the following:
a private connection via a network access point, a private connection via a direct link, a local connection via an internet exchange point, a remote connection via an internet exchange point, a private connection via an internet exchange point, or a public connection via an internet exchange point.

38. The method according to claim 36 or 37, wherein the connection type information is carried in a second TLV advertised by the first communication apparatus to the controller, wherein the second TLV is an SRv6 BGP peer node SID TLV, or a type field of the second TLV indicates that the second TLV comprises the connection type information.

39. The method according to any one of claims 26 to 38, wherein the BGP peer SID is an SRv6 SID.

40. The method according to any one of claims 26 to 39, wherein the first communication apparatus is used for any one of the following:
a point of presence POP, an internet gateway IGW, a data center gateway, and a service provider edge PE device.

41. The method according to any one of claims 26 to 40, wherein the method further comprises:
receiving a second BGP peer SID, second additional information, and a second BGP route that are sent by the first communication apparatus, wherein the second additional information is for associating the second BGP route with the second BGP peer SID, the second BGP route is a BGP route that is advertised by a fourth communication apparatus and that is obtained by the first communication apparatus by using the BGP session established between the first communication apparatus and the third communication apparatus, no BGP session is established between the first communication apparatus and the fourth communication apparatus, the second BGP route comprises the first routing prefix and a second next hop, and the second next hop is the fourth communication apparatus;
determining, based on the second BGP route, the second additional information, and the second BGP peer SID, a second SID list comprising the second BGP peer SID, wherein the second SID list indicates a second packet forwarding path reaching the first routing prefix; and
sending the second SID list to a head node of the second packet forwarding path.

42. The method according to any one of claims 26 to 41, wherein the method further comprises:
receiving a third BGP peer SID, third additional information, and a third BGP route that are sent by the first communication apparatus, wherein the third additional information is for associating the third BGP route with the third BGP peer SID, the third BGP route is a BGP route that is advertised by a fifth communication apparatus and that is obtained by the first communication apparatus by using the BGP session established between the first communication apparatus and the third communication apparatus, no BGP session is established between the first communication apparatus and the fifth communication apparatus, the third BGP route comprises a second routing prefix and a third next hop, and the third next hop is the fifth communication apparatus;
determining, based on the third BGP route, the third additional information, and the third BGP peer SID, a third SID list comprising the third BGP peer SID, wherein the third SID list indicates a third packet forwarding path reaching the second routing prefix; and
sending the third SID list to a head node of the third packet forwarding path.

43. The method according to any one of claims 26 to 42, wherein the first BGP peer SID is a border gateway protocol peer node segment identifier BGP peer node SID.

44. The method according to any one of claims 26 to 42, wherein the first BGP peer SID is a border gateway protocol peer adjacency segment identifier BGP peer adjacency SID.

45. The method according to any one of claims 26 to 41, wherein the first BGP peer SID is a border gateway protocol peer set segment identifier BGP peer set SID.

46. An information reporting method, applied to a first communication apparatus, wherein the first communication apparatus is configured with a border gateway protocol egress peer engineering BGP EPE function, and the method comprises:
receiving a border gateway protocol BGP route sent by a second communication apparatus, wherein the BGP route comprises a routing prefix and a next hop, and a BGP session is established between the first communication apparatus and the second communication apparatus;
allocating a border gateway protocol peer segment identifier BGP peer SID based on the BGP route; and
sending the BGP peer SID and connection type information corresponding to the BGP peer SID to a controller, wherein the connection type information indicates a type of a connection between the first communication apparatus and the next hop.

47. The method according to claim 46, wherein the type of the connection comprises any one of the following:
a private connection via a network access point, a private connection via a direct link, a local connection via an internet exchange point, a remote connection via an internet exchange point, a private connection via an internet exchange point, or a public connection via an internet exchange point.

48. The method according to claim 46 or 47, wherein
the next hop is the second communication apparatus; or
the second communication apparatus is a route server or a route reflector, the next hop is a third communication apparatus, and the receiving a BGP route sent by a second communication apparatus comprises:
receiving, by using the BGP session, the BGP route that is sent by the second communication apparatus and that is advertised by the third communication apparatus, wherein no BGP session is established between the first communication apparatus and the third communication apparatus.

49. The method according to claim 48, wherein the method further comprises:
sending the BGP route and additional information to the controller, wherein the additional information is for associating the BGP peer SID with the BGP route.

50. An information processing method, applied to a controller, wherein the method comprises:
receiving a border gateway protocol BGP route, a border gateway protocol peer segment identifier BGP peer SID, and connection type information corresponding to the BGP peer SID that are sent by a first communication apparatus, wherein the BGP route comprises a routing prefix and a next hop, the connection type information indicates a type of a connection between the first communication apparatus and the next hop, and the first communication apparatus is configured with a border gateway protocol egress peer engineering BGP EPE function;
determining, based on the BGP peer SID and the connection type information, a SID list comprising the BGP peer SID, wherein the SID list indicates a packet forwarding path reaching the routing prefix; and
sending the SID list to a head node of the packet forwarding path.

51. An information reporting method, applied to a first communication apparatus, wherein the first communication apparatus is configured with a border gateway protocol egress peer engineering BGP EPE function, and the method comprises:
allocating a first border gateway protocol BGP peer segment identifier peer SID to a first BGP session established between the first communication apparatus and a second communication apparatus, wherein a plurality of BGP sessions are established between the first communication apparatus and the second communication apparatus, and the plurality of BGP sessions comprise the first BGP session; and
correspondingly sending the first BGP peer SID and a first peer internet protocol peer IP address to a controller, wherein the first peer IP address is a peer IP address used by the second communication apparatus to establish the first BGP session with the first communication apparatus.

52. The method according to claim 51, wherein the method further comprises:
sending connection type information corresponding to the first BGP peer SID to the controller, wherein the connection type information indicates a connection type of the first BGP session.

53. The method according to claim 52 or 53, wherein the method further comprises:
allocating a second BGP peer SID to a second BGP session, wherein the plurality of BGP sessions comprise the second BGP session; and
correspondingly sending the second BGP peer SID and a second peer IP address to the controller, wherein the second peer IP address is a peer IP address used by the second communication apparatus to establish the second BGP session with the first communication apparatus.

54. An information processing method, applied to a controller, wherein the method comprises:
receiving a first border gateway protocol peer segment identifier BGP peer SID and a first peer internet protocol peer IP address that are sent by a first communication apparatus, wherein the first BGP peer SID is a BGP peer SID allocated by the first communication apparatus to a first BGP session established between the first communication apparatus and a second communication apparatus, a plurality of BGP sessions are established between the first communication apparatus and the second communication apparatus, and the plurality of BGP sessions comprise the first BGP session;
determining, based on the first BGP peer SID and the first peer IP address, a SID list comprising the first BGP peer SID, wherein the SID list indicates a packet forwarding path; and
sending the SID list to a head node of the packet forwarding path.

55. A first communication apparatus, wherein the apparatus comprises:
a transceiver unit and a processing unit, wherein
the transceiver unit is configured to perform a receiving operation and/or a sending operation performed by the first communication apparatus according to any one of claims 1 to 25; and
the processing unit is configured to perform an operation other than the receiving operation and/or the sending operation performed by the first communication apparatus according to any one of claims 1 to 25.

56. A controller, wherein the apparatus comprises:
a transceiver unit and a processing unit, wherein
the transceiver unit is configured to perform a receiving operation and/or a sending operation performed by the controller according to any one of claims 26 to 45; and
the processing unit is configured to perform an operation other than the receiving operation and/or the sending operation performed by the controller according to any one of claims 26 to 45.

57. A first communication apparatus, wherein the apparatus comprises:
a transceiver unit and a processing unit, wherein
the transceiver unit is configured to perform a receiving operation and/or a sending operation performed by the first communication apparatus according to any one of claims 46 to 19; and
the processing unit is configured to perform an operation other than the receiving operation and/or the sending operation performed by the first communication apparatus according to any one of claims 46 to 49.

58. A controller, wherein the apparatus comprises:
a transceiver unit and a processing unit, wherein
the transceiver unit is configured to perform a receiving operation and/or a sending operation performed by the controller according to claim 50;
the processing unit is configured to perform an operation other than the receiving operation and/or the sending operation performed by the controller according to claim 50.

59. A first communication apparatus, wherein the apparatus comprises:
a transceiver unit and a processing unit, wherein
the transceiver unit is configured to perform a receiving operation and/or a sending operation performed by the first communication apparatus according to any one of claims 51 to 53; and
the processing unit is configured to perform an operation other than the receiving operation and/or the sending operation performed by the first communication apparatus according to any one of claims 51 to 53.

60. A controller, wherein the apparatus comprises:
a transceiver unit and a processing unit, wherein
the transceiver unit is configured to perform a receiving operation and/or a sending operation performed by the controller according to claim 54;
the processing unit is configured to perform an operation other than the receiving operation and/or the sending operation performed by the controller according to claim 54.

61. A communication apparatus, comprising a processor and a memory, wherein
the memory is configured to store instructions; and
the processor is configured to execute the instructions, so that the communication apparatus performs the method according to any one of claims 1 to 25, the communication apparatus performs the method according to any one of claims 46 to 49, or the communication apparatus performs the method according to any one of claims 51 to 53.

62. A controller, comprising a processor and a memory, wherein
the memory is configured to store instructions; and
the processor is configured to execute the instructions, so that the controller performs the method according to any one of claims 26 to 45, or the controller performs the method according to claim 50 or 54.

63. A computer-readable storage medium, comprising instructions, wherein when the instructions are run on a processor, the method according to any one of claims 1 to 54 is implemented.

64. A computer program product, comprising a computer program, wherein when the computer program is run on a processor, the method according to any one of claims 1 to 54 is implemented.

65. A communication system, wherein the communication system comprises:
a communication apparatus that performs the method according to any one of claims 1 to 25 and a controller that performs the method according to any one of claims 26 to 45;
a communication apparatus that performs the method according to any one of claims 46 to 49 and a controller that performs the method according to claim 50; or
a communication apparatus that performs the method according to any one of claims 51 to 53 and a controller that performs the method according to claim 54.
